# EUROPÄISCHE PATENTSCHRIFT

(11) **EP 1 658 353 B1**
(45) Veröffentlichungstag und Bekanntmachung des Hinweises auf die Patenterteilung: **14.10.2009**
(21) Anmeldenummer: 04763699.8
(22) Anmeldetag: 02.08.2004
(51) Int. Cl.: C09K 19/44, G02F 1/13

(54) **FLÜSSIGKRISTALLINES MEDIUM**
LIQUID CRYSTALLINE MEDIUM
MILIEU A CRISTAL LIQUIDE

(30) Priorität: 04.08.2003 DE 10335605
(43) Veröffentlichungstag der Anmeldung: 24.05.2006
(73) Patentinhaber: Merck Patent GmbH, 64293 Darmstadt (DE)
(72) Erfinder: HECKMEIER, Michael, 69502 Hemsbach (DE); SCHOEN, Sabine, 45701 Herten (DE); KIRSCH, Peer, 64342 Seeheim-Jugenheim (DE)
(86) Internationale Anmeldenummer: PCT/EP2004/008628
(87) Internationale Veröffentlichungsnummer: WO 2005/017067

(56) Entgegenhaltungen:
- EP-A- 1 029 842
- EP-A- 1 046 693
- EP-A- 1 046 694
- EP-A- 1 302 523
- EP-A- 1 335 014
- EP-A- 1 420 057
- EP-A- 1 454 975
- DE-A- 10 158 081

## Beschreibung

Die vorliegende Erfindung betrifft ein flüssigkristallines Medium, sowie dessen Verwendung für elektrooptische Zwecke und dieses Medium enthaltende Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische oder cholesterische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringerem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKOGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Neben Flüssigkristallanzeigen, die eine Hintergrundbeleuchtung verwenden, also transmissiv und gegebenenfalls transflektiv betrieben werden, sind besonders auch reflektive Flüssigkristallanzeigen interessant. Diese reflektiven Flüssigkristallanzeigen benutzen das Umgebungslicht zur Informationsdarstellung. Somit verbrauchen sie wesentlich weniger Energie als hintergrundbeleuchtete Flüssigkristallanzeigen mit entsprechender Größe und Auflösung. Da der TN-Effekt durch einen sehr guten Kontrast gekennzeichnet ist, sind derartige reflektive Anzeigen auch bei hellen Umgebungsverhältnissen noch gut abzulesen. Dies ist bereits von einfachen reflektiven TN-Anzeigen, wie sie in z. B. Armbanduhren und Taschenrechnern verwendet werden, bekannt. Jedoch ist das Prinzip auch auf hochwertige, höher auflösende Aktiv-Matrix angesteuerte Anzeigen wie z. B. TFT-Displays anwendbar. Hier ist wie bereits bei den allgemeinen üblichen transmissiven TFT-TN-Anzeigen die Verwendung von Flüssigkristallen mit niedriger Doppelbrechung (Δn) nötig, um eine geringe optische Verzögerung (d · Δn) zu erreichen. Diese geringe optische Verzögerung führt zu einer meist akzeptablen geringen Blickwinkelabhängigkeit des Kontrastes (vgl. DE 30 22 818). Bei reflektiven Anzeigen ist die Verwendung von Flüssigkristallen mit kleiner Doppelbrechung noch wichtiger als bei transmissiven Anzeigen, da bei reflektiven Anzeigen die effektive Schichtdicke, die das Licht durchquert, ungefähr doppelt so groß ist wie bei transmissiven Anzeigen mit derselben Schichtdicke.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- lagerstabil, auch bei extrem tiefen Temperaturen
- Schaltbarkeit bei extrem tiefen Temperaturen (out-door-use, Automobil, Avionik)
- erhöhte Beständigkeit gegenüber UV-Strahlung (längere Lebensdauer)
- kleine optische Doppelbrechung (Δn) für reflektive Anzeigen

Mit den aus dem Stand der Technik zur Verfügung stehenden Medien ist es nicht möglich, diese Vorteile unter gleichzeitigem Erhalt der übrigen Parameter zu realisieren. Die aus der EP 1 046 693 A1, EP-A-1 029 842 und EP 1 046 694 A1 bekannten Mischungen zeichnen sich durch ihre hohen Viskositäten aus.

Bei höher verdrillten Zellen (STN) sind Medien erwünscht, die eine höhere Multiplexierbarkeit und/oder kleinere Schwellenspannung und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Der Erfindung liegt die Aufgabe zugrunde, Medien insbesondere für derartige MFK-, TN- oder STN-Anzeigen bereitzustellen, die die oben angegebenen Nachteile nicht oder nur in geringerem Maße, und vorzugsweise gleichzeitig sehr niedrige Schwellenspannungen, niedrige Viskositäten und hohe Werte für die Voltage Holding Ratio (VHR) aufweisen.

Es wurde nun gefunden, dass diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit positiver dielektrischer Anisotropie, **dadurch gekennzeichnet, dass** es eine oder mehrere Verbindungen der Formel I, 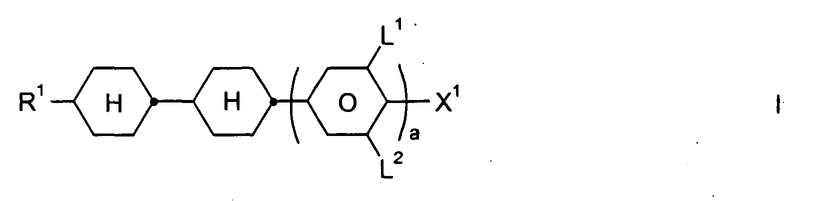 eine oder mehrere Verbindungen der Formel IA, 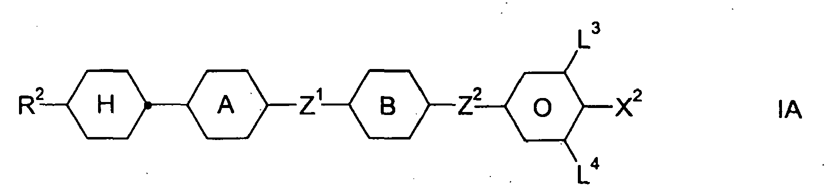 und
zusätzlich eine oder mehrere Verbindungen ausgewählt aus der Gruppe bestehend aus den allgemeinen Formeln II bis VI 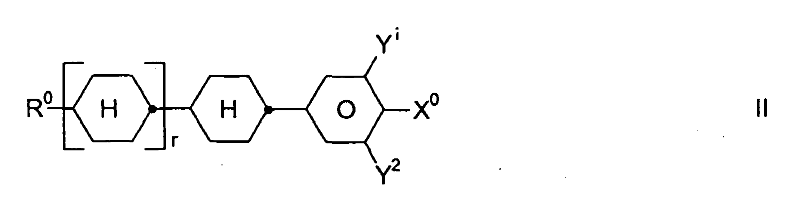 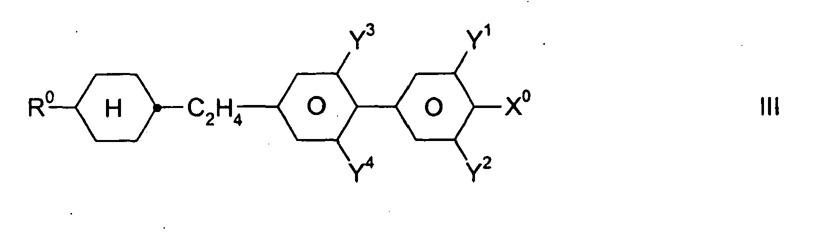 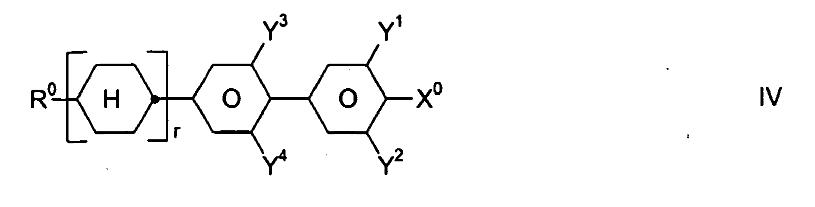 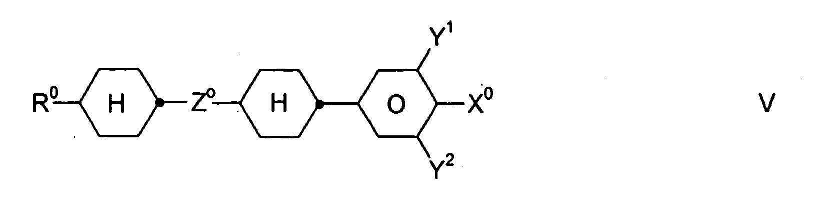 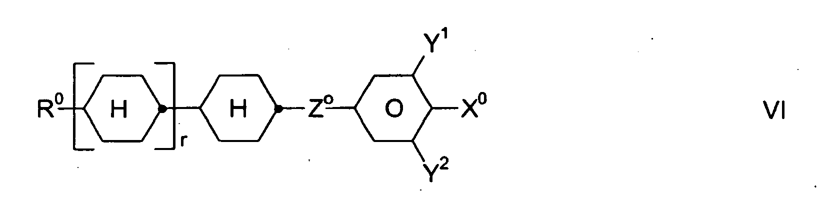 enthält,
wobei die Verbindung der Formel II nicht mit der Formel I identisch ist, wobei der Anteil an Verbindungen der Formel I mindestens 22 Gew.% beträgt und
wobei der Anteil an Verbindungen der Formeln II bis VI im Gesamtgemisch 30 bis 80 Gew. % beträgt,
worin die einzelnen Reste folgende Bedeutungen besitzen:
- R¹: einen Alkenylrest mit 2 bis 8 C-Atomen,
- R²: H, einen halogenierten, durch CN oder CF₃ substituierten oder unsubstituierten Alkylrest mit 1 bis 15 C-Atomen, wobei in diesen Resten auch eine oder mehrere CH₂-Gruppen jeweils unabhängig voneinander durch -C≡C-, -CO-, -CH=CH-, -O-, 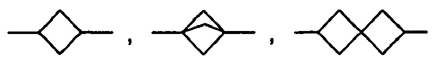 so ersetzt sein können, dass O-Atome nicht direkt miteinander verknüpft sind,

- X¹: Alkylrest, Alkenylrest, Alkoxyrest oder Alkenyloxyrest mit jeweils bis zu 6 C-Atomen, im Fall a = 1 auch F, CI, CN, SF₅, SCN, NCS, OCN,
- X²: F, CI, CN, SF₅, SCN, NCS, OCN, halogenierter Alkylrest, halogenierter Alkenylrest, halogenierter Alkoxyrest oder halogenierter Alkenyloxyrest mit jeweils bis zu 6 C-Atomen,
- Z¹ und Z²: jeweils unabhängig voneinander -CF₂O-, -OCF₂- oder eine Einfachbindung, wobei Z¹ ≠ Z² ist, 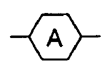 und 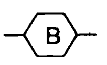 jeweils unabhängig voneinander 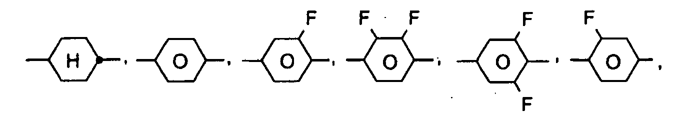 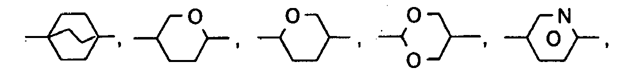 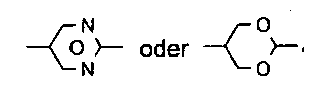
a 0 oder 1,
L¹⁻⁴ jeweils unabhängig voneinander H oder F,
R⁰ H, n-Alkyl, Alkoxy, Oxaalkyl, Fluoralkyl, Alkenyloxy oder Alkenyl mit jeweils bis zu 9 C-Atomen,
X⁰ F, CI, halogeniertes Alkyl, Alkenyl, Alkenyloxy oder Alkoxy mit bis zu 6 C-Atomen,
Z⁰ -C₂F₄-, -CF=CF-, -CH=CF-, -CF=CH-, -CH=CH-, -O(CH₂)₃-, -(CH₂)₃O-, -C₂H₄-, -(CH₂)₄-, -CF₂O-, -OCF₂-, -OCH₂- oder - CH₂O-,
Y¹⁻⁴ jeweils unabhängig voneinander H oder F, und
r 0 oder 1.

Die Verbindungen der Formeln I und IA besitzen einen breiten Anwendungsbereich. In Abhängigkeit von der Auswahl der Substituenten können diese Verbindungen als Basismaterialien dienen, aus denen flüssigkristalline Medien zum überwiegenden Teil zusammengesetzt sind; es können aber auch Verbindungen der Formeln I und IA flüssigkristallinen Basismaterialien aus anderen Verbindungsklassen zugesetzt werden, um beispielsweise die dielektrische und/oder optische Anisotropie eines solchen Dielektrikums zu beeinflussen und/oder um dessen Schwellenspannung und/oder dessen Viskosität zu optimieren. Das erfindungsgemäße Mischungskonzept führt zu Mischungen, die sich gegenüber dem Stand der Technik durch ihre sehr gute Reliability und ihr Vₜₕ/_{γ1}-Verhältnis, insbesondere bei 2,5 V- und 3,3 V-Mischungen, auszeichnen. Die erfindungsgemäßen Mischungen sind insbesondere geeignet für Note-PC, PDA und andere mobile Anwendungen.

Die Verbindungen der Formeln I und IA sind in reinem Zustand farblos und bilden flüssigkristalline Mesophasen in einem für die elektrooptische Verwendung günstig gelegenen Temperaturbereich. Chemisch, thermisch und gegen Licht sind sie stabil.

R¹ in Formel I bedeutet vorzugsweise Vinyl, 1E-Alkenyl oder 3-Alkenyl.

Falls R² in Formel IA einen Alkylrest und/oder einen Alkoxyrest bedeutet, so kann dieser geradkettig oder verzweigt sein. Vorzugsweise ist er geradkettig, hat 1, 2, 3, 4, 5, 6 oder 7 C-Atome und bedeutet demnach bevorzugt Methyl, Ethyl, Propyl, Butyl, Pentyl, Hexyl, Heptyl, Methoxy, Ethoxy, Propoxy, Butoxy, Pentoxy, Hexoxy oder Heptoxy, ferner Octyl, Nonyl, Decyl, Undecyl, Dodecyl, Tridecyl, Tetradecyl, Pentadecyl, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxybutyl (= 2-Methoxyethyl), 2-, 3-oder 4-Oxypentyl, 2-, 3-, 4- oder 5-Oxyhexyl, 2-, 3-, 4-, 5- oder 6-Oxyheptyl, 2-, 3-, 4-, 5-, 6-, oder 7-Oxyoctyl, 2-, 3-, 4-, 5-, 6-, 7- oder 8-Oxanonyl, 2-, 3-, 4-, 5-, 6-, 7-, 8- oder 9-Oxadexyl.

Falls R² einen Alkylrest bedeutet, in dem eine CH₂-Gruppe durch -CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl.

Falls R² einen Alkylrest bedeutet, in dem eine CH₂-Gruppe durch -O- und eine durch -CO- ersetzt ist, so sind diese bevorzugt benachbart. Somit beinhalten diese eine Acyloxygruppe -CO-O- oder eine Oxycarbonylgruppe -O-CO-. Vorzugsweise sind diese geradkettig und haben 2 bis 6 C-Atome. Sie bedeuten demnach besonders Acetyloxy, Propionyloxy, Butyryloxy, Pentanoyloxy, Hexanoyloxy, Acetyloxymethyl, Propionyloxymethyl, Butyryloxymethyl, Pentanoyloxymethyl, 2-Acetyloxyethyl, 2-Propionyloxyethyl, 2-Butyryloxyethyl, 2-Acetyloxypropyl, 3-Propionyl-oxypropyl, 4-Acetyl-oxybutyl, Methoxycarbonyl, Ethoxycarbonyl, Propoxy-carbonyl, Butoxycarbonyl, Pentoxycarbonyl, Methoxycarbonylmethyl, Ethoxycarbonylmethyl, Propoxycarbonylmethyl, Butoxycarbonylmethyl, 2-(Methoxycarbonyl)ethyl, 2-(Ethoxycarbonyl)ethyl, 2-(Propoxycarbonyl)-ethyl, 3-(Methoxycarbonyl)-propyl, 3-(Ethoxycarbonyl)-propyl oder 4-(Methoxycarbonyl)-butyl.

Falls R² einen Alkylrest bedeutet, in dem eine CH₂-Gruppe durch unsubstituiertes oder substituiertes -CH=CH- und eine benachbarte CH₂-Gruppe durch CO oder CO-O oder O-CO ersetzt ist, so kann dieser geradkettig oder verzweigt sein. Vorzugsweise ist er geradkettig und hat 4 bis 12 C-Atome. Er bedeutet demnach besonders Acryloyloxymethyl, 2-Acryloyl-oxyethyl, 3-Acryloyloxypropyl, 4-Acryoyloxybutyl, 5-Acryloyloxypentyl, 6-Acryloyloxyhexyl, 7-Acryloyloxyheptyl, 8-Acryloyloxyoctyl, 9-Acryloyl-oxynonyl, 10-Acryloyloxydecyl, Methacryloyloxymethyl, 2-Methacryloyl-oxyethyl, 3-Methacryloyloxypropyl, 4-Methacryloyloxybutyl, 5-Methacryl-oyloxypentyl, 6-Methacryloyloxyhexyl, 7-Methacryloyloxyheptyl, 8-Methacryloyloxyoctyl, 9-Methacryloyloxynonyl.

Falls R² einen einfach durch CN oder CF₃ substituierten Alkyl- oder Alkenylrest bedeutet, so ist dieser Rest vorzugsweise geradkettig. Die Substitution durch CN oder CF₃ ist in beliebiger Position.

Falls R² einen mindestens einfach durch Halogen substituierten Alkyl- oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

Verbindungen mit verzweigten Flügelgruppen R² können gelegentlich wegen einer besseren Löslichkeit in den üblichen flüssigkristallinen Basismaterialien von Bedeutung sein, insbesondere aber als chirale Dotierstoffe, wenn sie optisch aktiv sind. Smektische Verbindungen dieser Art eignen sich als Komponenten für ferroelektrische Materialien.

Verzweigte Gruppen dieser Art enthalten in der Regel nicht mehr als eine Kettenverzweigung. Bevorzugt verzweigte Reste R² sind Isopropyl, 2-Butyl (= 1-Methylpropyl), Isobutyl (= 2-Methylpropyl), 2-Methylbutyl, Isopentyl (= 3-Methylbutyl), 2-Methylpentyl, 3-Methylpentyl, 2-Ethylhexyl, 2-Propylpentyl, Isopropoxy, 2-Methylpropoxy, 2-Methylbutoxy, 3-Methylbutoxy, 2-Methylpentoxy, 3-Methylpentoxy, 2-Ethylhexoxy, 1-Methylhexoxy, 1-Methylheptoxy.

Falls R² einen Alkylrest darstellt, in dem zwei oder mehr CH₂-Gruppen durch -O- und/oder -CO-O- ersetzt sind, so kann dieser geradkettig oder verzweigt sind. Vorzugsweise ist er verzweigt und hat 3 bis 12 C-Atome. Er bedeutet demnach besonders Bis-carboxy-methyl, 2,2-Bis-carboxy-ethyl, 3,3-Bis-carboxy-propyl, 4,4-Bis-carboxy-butyl, 5,5-Bis-carboxy-pentyl, 6,6-Bis-carboxy-hexyl, 7,7-Bis-carboxy-heptyl, 8,8-Bis-carboxy-octyl, 9,9-Bis-carboxy-nonyl, 10,10-Bis-carboxy-decyl, Bis-(methoxy-carbonyl)-methyl, 2,2-Bis-(methoxycarbonyl)-ethyl, 3,3-Bis-(methoxy-carbonyl)-propyl, 4,4-Bis-(methoxycarbonyl)-butyl, 5,5-Bis-(methoxy-carbonyl)-pentyl, 6,6-Bis-(methocycarbonyl)-hexyl, 7,7-Bis-(methoxy-carbonyl)-heptyl, 8,8-Bis-(methoxycarbonyl)-octyl, Bis-(ethoxycarbonyl)-methyl, 2,2-Bis-(ethoxycarbonyl)-ethyl, 3,3-Bis-(ethoxycarbonyl)-propyl, 4,4-Bis-(ethoxycarbonyl)-butyl, 5,5-Bis-(ethoxycarbonyl)-hexyl.

Die Verbindungen der Formeln I und IA werden nach an sich bekannten Methoden dargestellt, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind.

Dabei kann man auch von an sich bekannten, hier nicht näher erwähnten Varianten Gebrauch machen. Die Verbindungen der Formel IA sind z. B. aus der EP 1 046 693 A1 und EP 1 046 694 A1 bekannt. Die Verbindungen der Formel I sind beispielsweise beschrieben in EP 0 122 389 B1.

Gegenstand der Erfindung sind auch elektrooptische Anzeigen (insbesondere STN- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand), die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und dielektrischer Anisotropie übertreffen bei weitem bisherige Materialien aus dem Stand der Technik.

Gegenüber den aus der EP 1 046 694 A1 offenbarten Mischungen besitzen die erfindungsgemäßen Mischungen einen höheren Klärpunkt, niedrige γ₁-Werte, niedrigere Werte für Fließviskosität und sehr hohe Werte für die VHR bei 100 °C. Die erfindungsgemäßen Mischungen sind bevorzugt als TN-TFT-Mischungen für Note-PC-Anwendungen mit 3,3 und 2,5 V-Treibem geeignet.

Die erfindungsgemäßen Flüssigkristallmischungen ermöglichen es bei Beibehaltung der nematischen Phase bis -30 °C, besonders bevorzugt bis -40 °C, Klärpunkt oberhalb 70 °C, vorzugsweise oberhalb 75 °C, besonders bevorzugt ≥ 80 °C, gleichzeitig dielektrische Anisotropiewerte Δε ≥ 6, vorzugsweise ≥ 8 und einen hohen Wert für den spezifischen Widerstand zu erreichen, wodurch hervorragende STN- und MFK-Anzeigen erzielt werden können. Insbesondere sind die Mischungen durch kleine Operationsspannungen gekennzeichnet. Die TN-Schwellen liegen unterhalb 1,5 V, vorzugsweise unterhalb 1,4 V, besonders bevorzugt < 1,3 V.

Es versteht sich, dass durch geeignete Wahl der Komponenten der erfindungsgemäßen Mischungen auch höhere Klärpunkte (z.B. oberhalb 110 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Die Fließviskosität ν₂₀ bei 20 °C ist vorzugsweise < 20 mm²·s⁻¹, besonders bevorzugt < 19 mm²·s⁻¹. Die Rotationsviskosität γ₁ der erfindungsgemäßen Mischungen bei 20 °C ist vorzugsweise < 140 mPa·s, besonders bevorzugt < 120 mPa·s. Der nematische Phasenbereich ist vorzugsweise mindestens 100°, insbesondere mindestens 110°. Vorzugsweise erstreckt sich dieser Bereich mindestens von -40° bis +80°.

Bei Flüssigkristallanzeigen ist eine kleine Schaltzeit erwünscht. Dies gilt besonders für Anzeigen die Videowiedergabe-fähig sind. Für derartige Anzeigen werden Schaltzeiten (Summe: tₒₙ + t_{off}) von maximal 16 ms benötigt. Die Obergrenze der Schaltzeit wird durch die Bildwiederholfrequenz bestimmt.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I and IA eine deutlich kleinere Abnahme des HR mit steigender Temperatur aufweisen als analoge Mischungen enthaltend anstelle den Verbindungen der Formel IA Cyanophenylcyclohexane der Formel 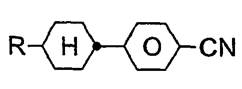 oder Ester der Formel

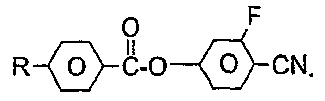

Die erfindungsgemäßen Mischungen enthalten vorzugsweise wenig (≤ 20 %, insbesondere ≤ 10 %) oder keine Nitrile. Die Holding Ratio der erfindungsgemäßen Mischungen beträgt bei 20 °C mindestens 98 %, vorzugsweise > 99 %. Auch die UV-Stabilität der erfindungsgemäßen Mischungen ist erheblich besser, d.h. sie zeigen eine deutlich kleinere Abnahme des HR unter UV-Belastung.

Formel I umfasst vorzugsweise Verbindungen der Formeln I-1 bis I-5:

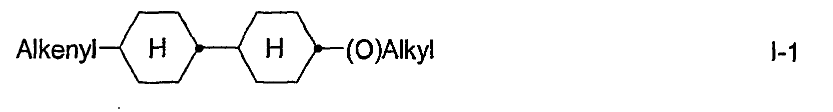

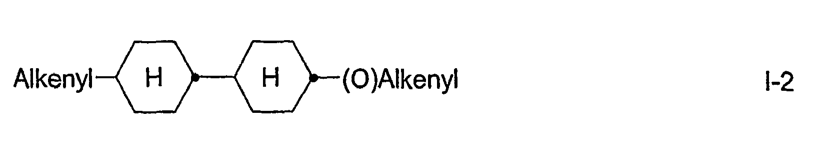

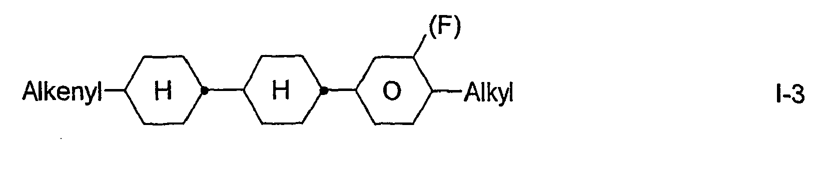

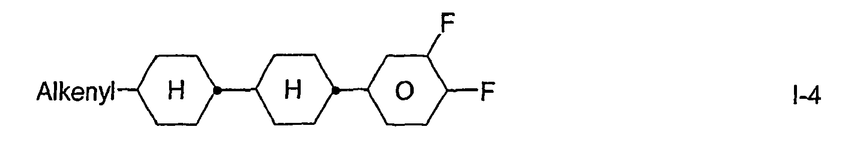

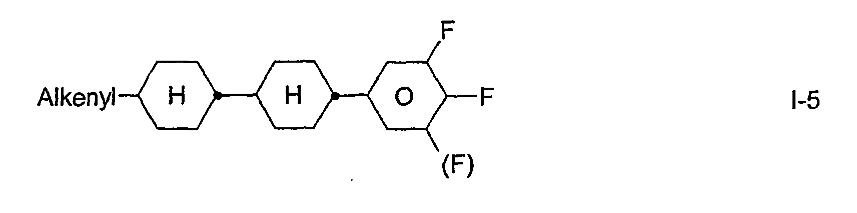

Besonders bevorzugte Verbindungen der Formel I sind Verbindungen der Formeln 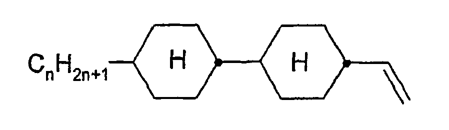 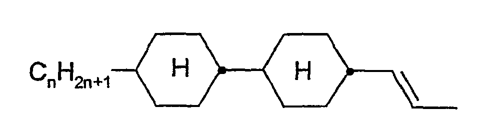 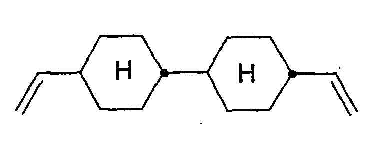 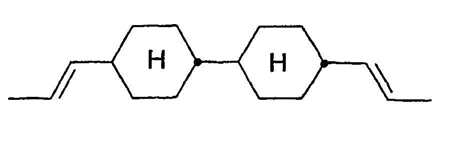 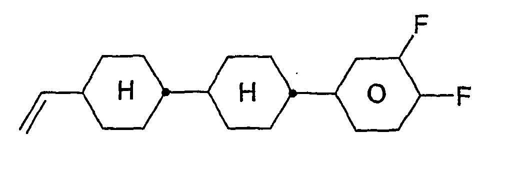 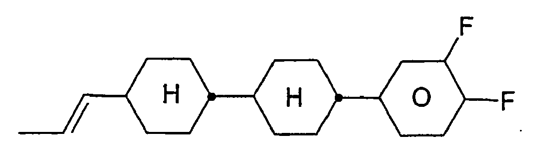 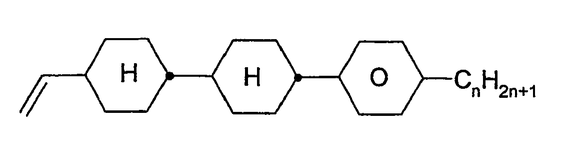 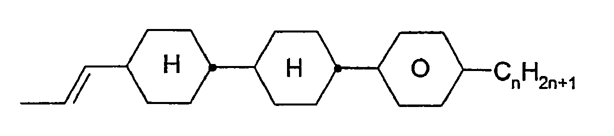 worin
n 1, 2, 3, 4, 5, 6, 7, 8, 9, 10, 11 oder 12, vorzugsweise 1, 2, 3 oder 5 bedeutet.

Alkyl bedeutet geradkettiges Alkyl mit 1-15 C-Atomen, vorzugsweise CH₃, C₂H₅, n-C₃H₇, n-C₄H₉, n-C₅H₁₁, n-C₆H₁₃.

Alkenyl bedeutet vorzugsweise CH₂=CH, CH₃CH=CH, CH₂=CH₂CH₂, CH₃-CH=CHCH₂CH₂.

Die Ringe A und B bedeuten vorzugsweise 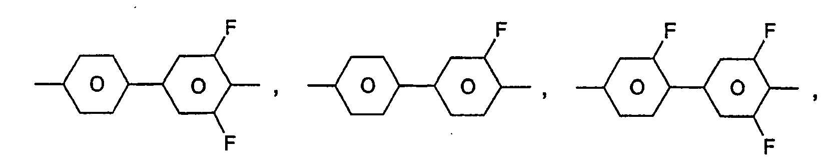 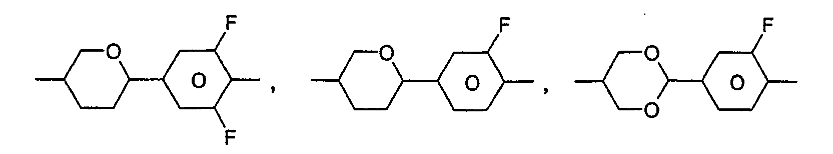 oder

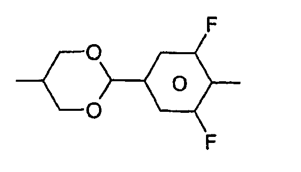

Bevorzugt sind erfindungsgemäße Medien, die wenigstens eine Verbindung der Formel I-1 und/oder I-2 enthalten.

Besonders bevorzugte Verbindungen der Formel IA sind Verbindungen der Formeln IA-1 bis IA-30: 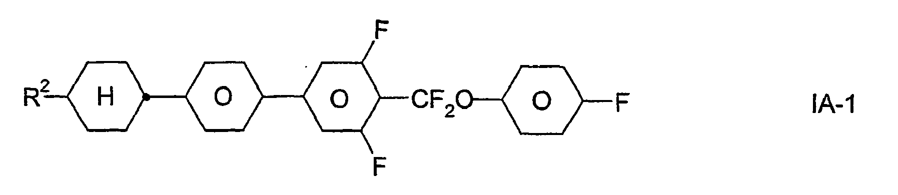 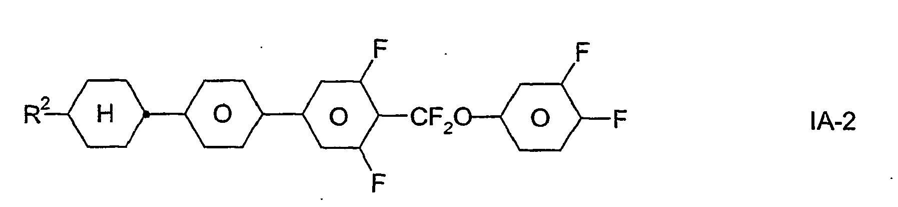 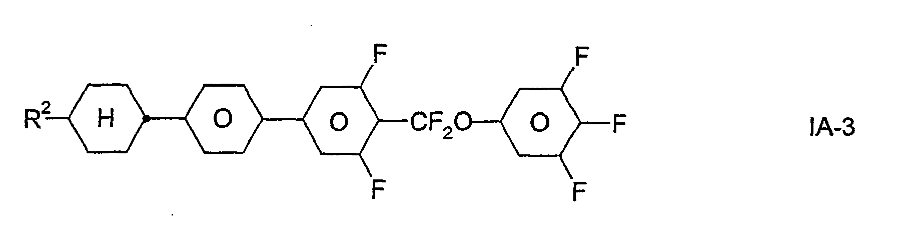 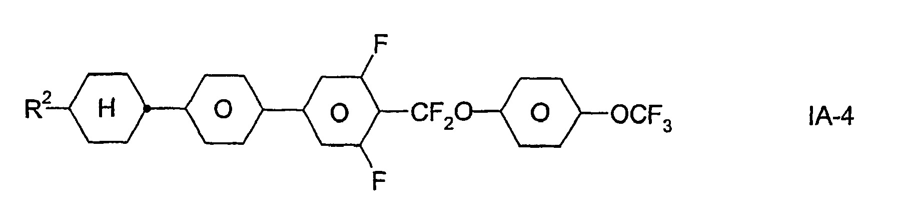 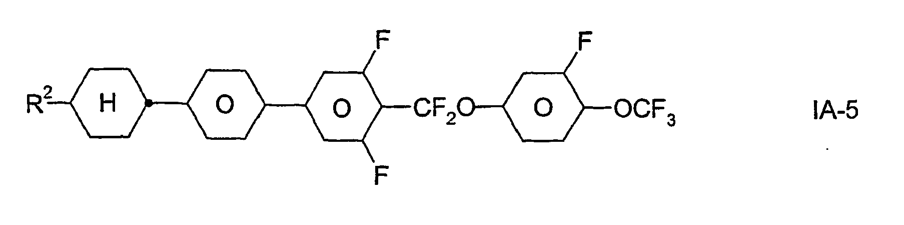 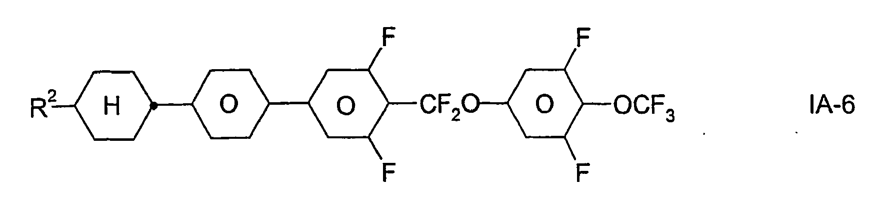 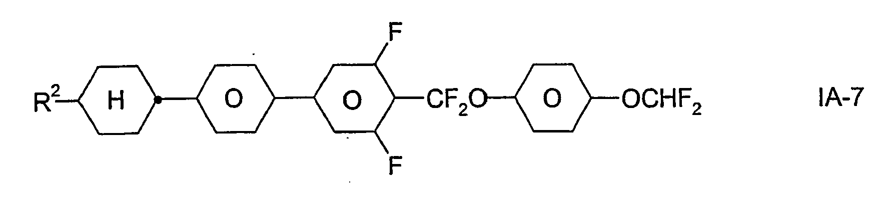 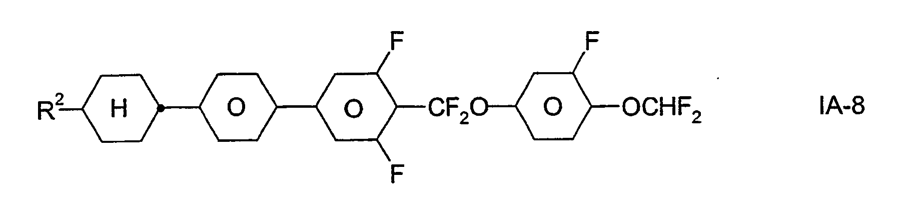 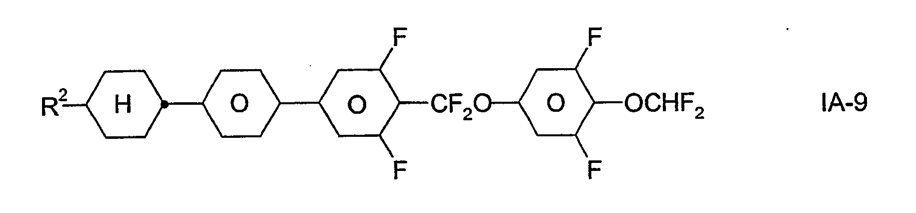 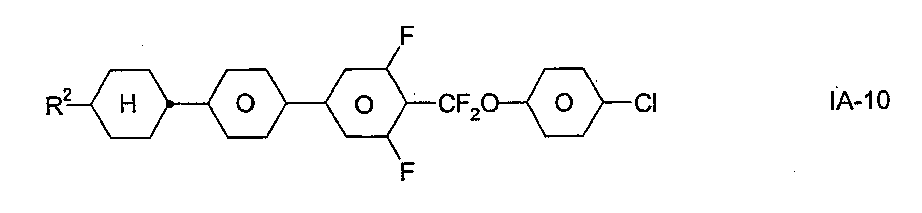 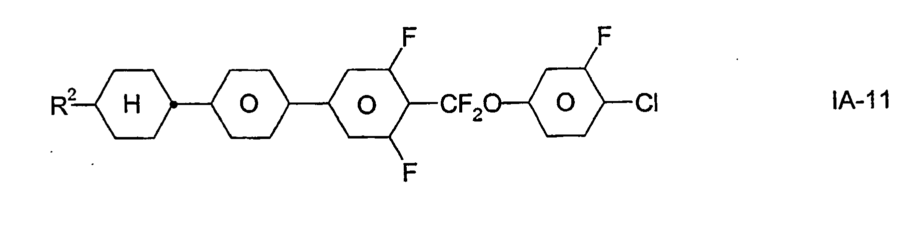 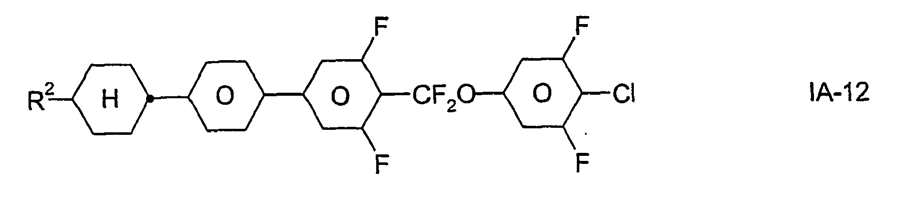 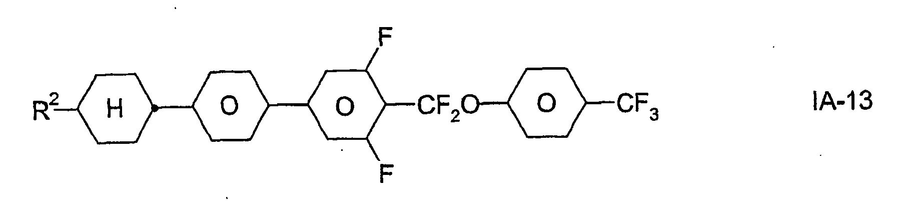 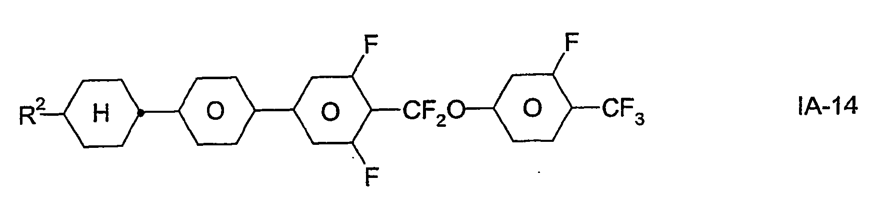 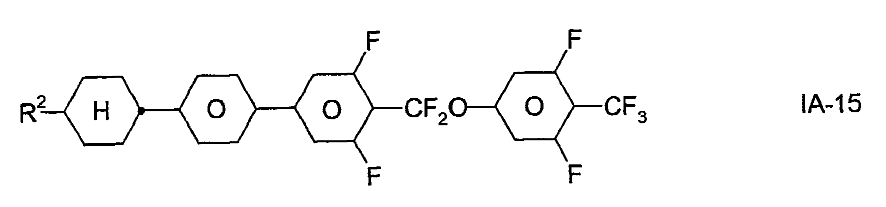 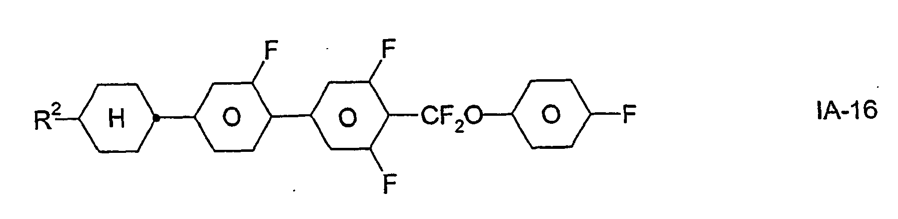 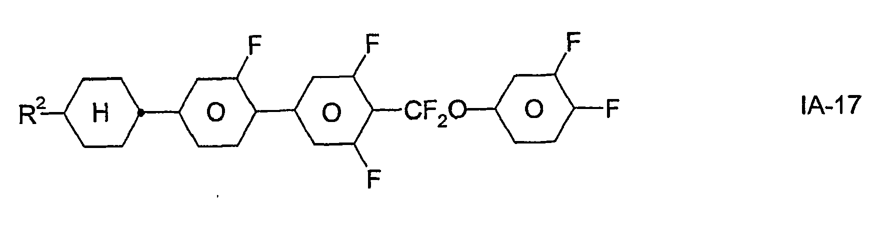 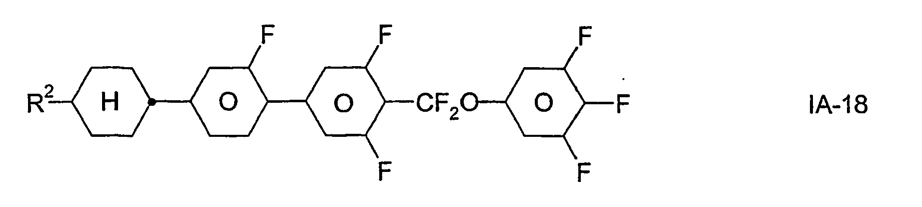 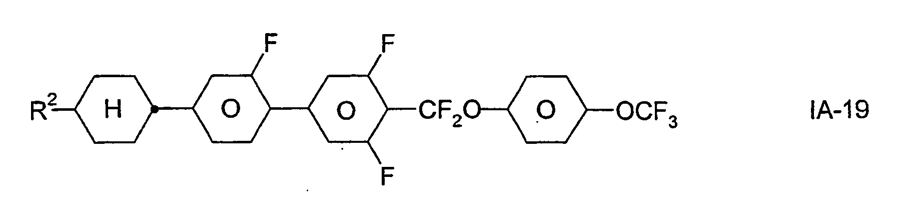 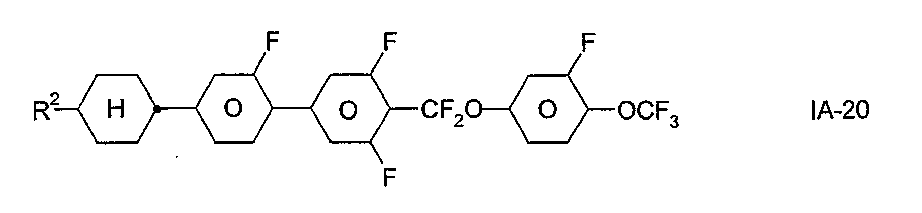 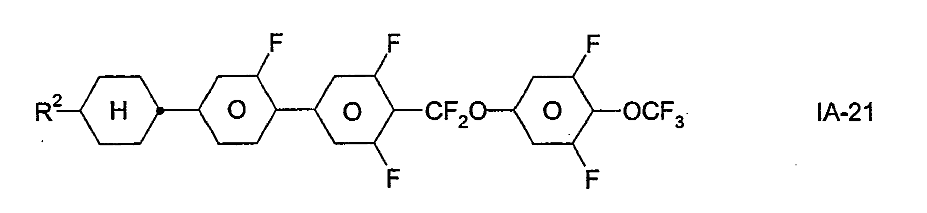 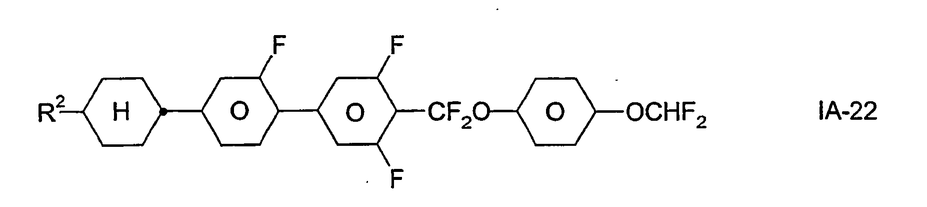 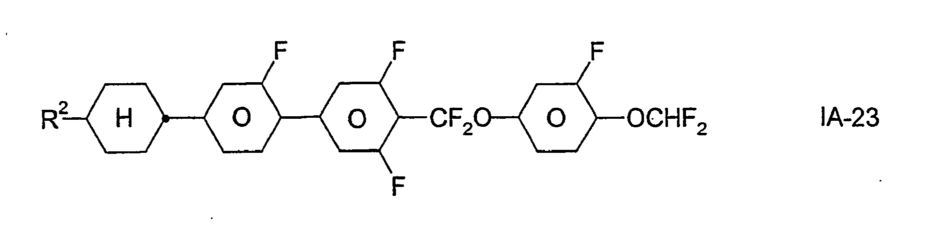 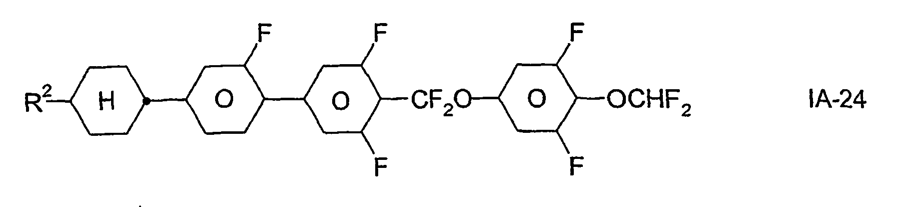 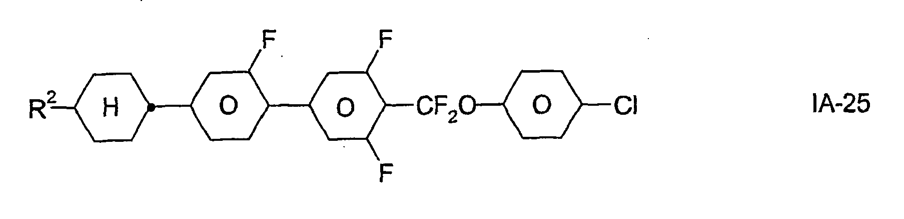 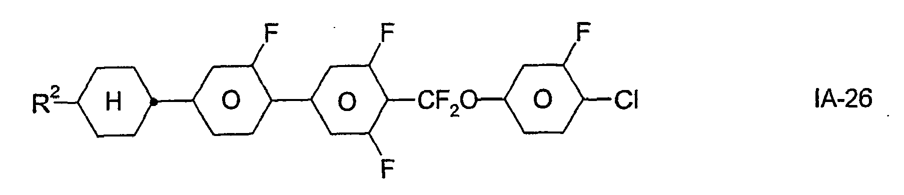 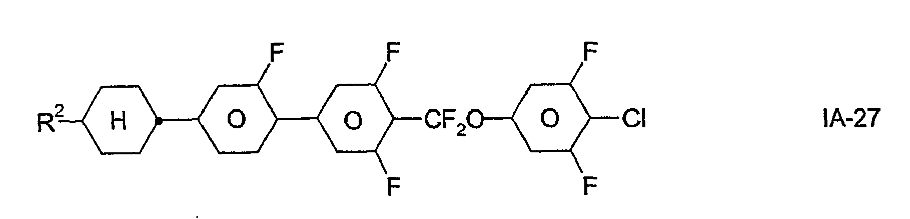 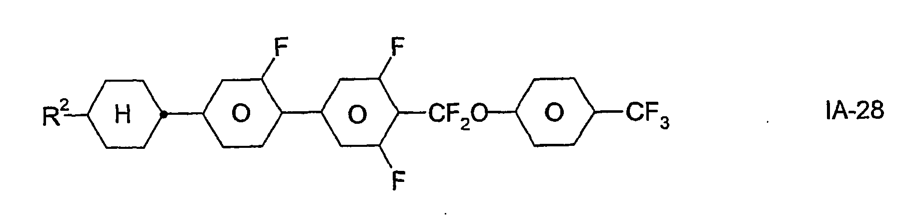 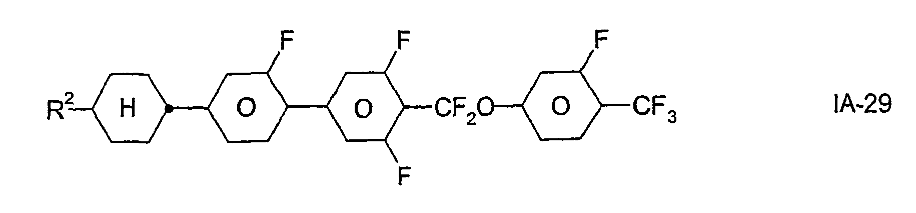 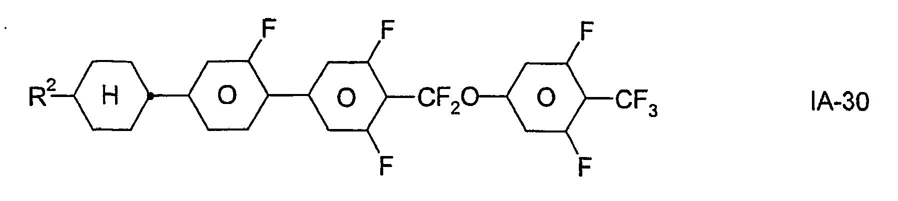 worin R² die oben angegebenen Bedeutungen hat.

Von diesen bevorzugten Verbindungen sind besonders bevorzugt solche der Formeln IA-2, IA-3, IA-5, IA-6 und IA-14, IA-15 und IA-18, insbesondere die der Formeln IA-3 und IA-15.

Weiterhin bevorzugt sind Verbindungen der Formel IA, die mindestens einen heterocyclischen Ring enthalten, insbesondere Verbindungen der Formeln 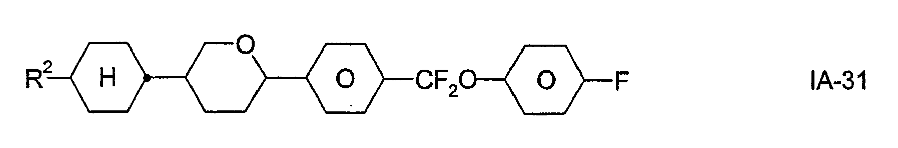 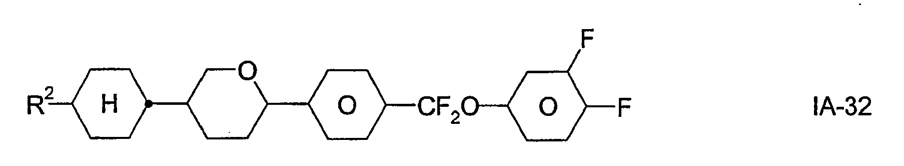 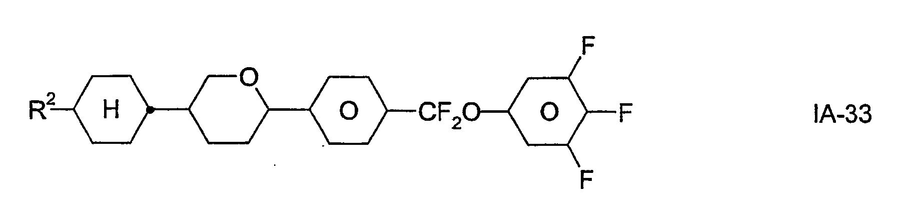 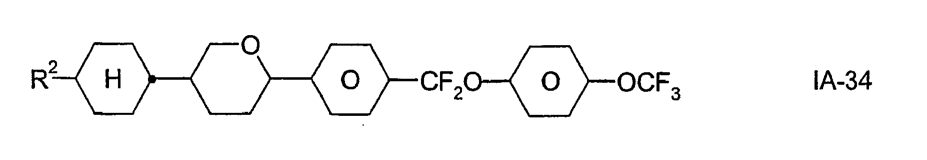 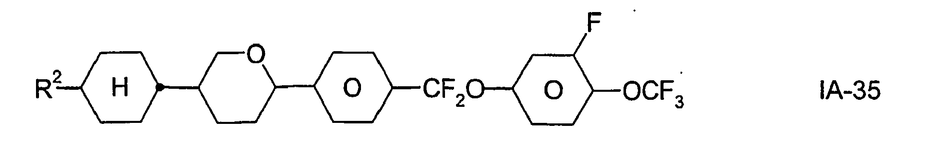 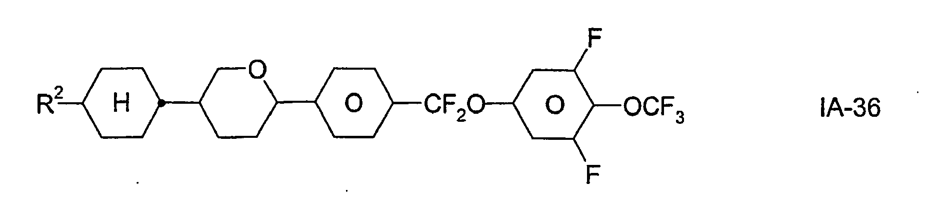 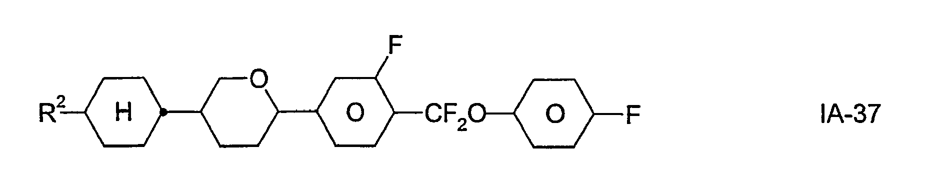 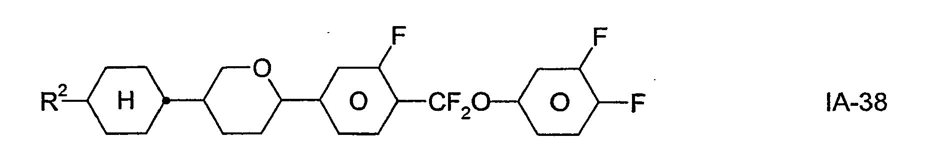 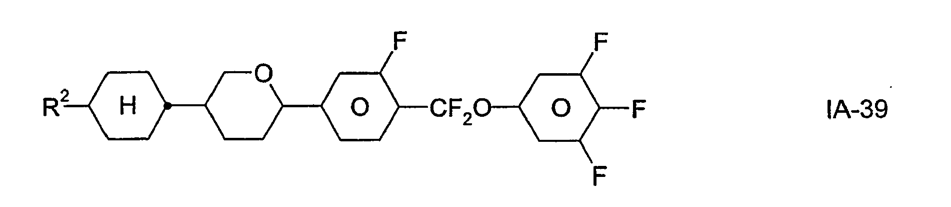 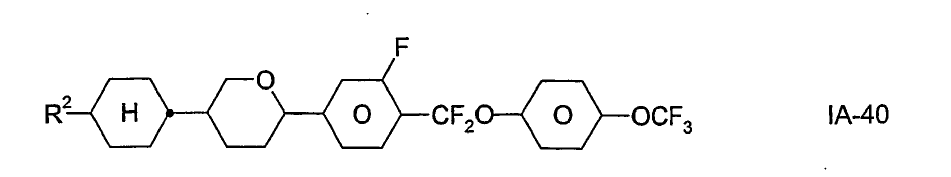 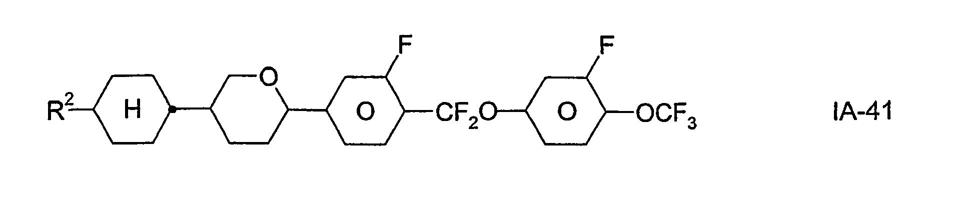 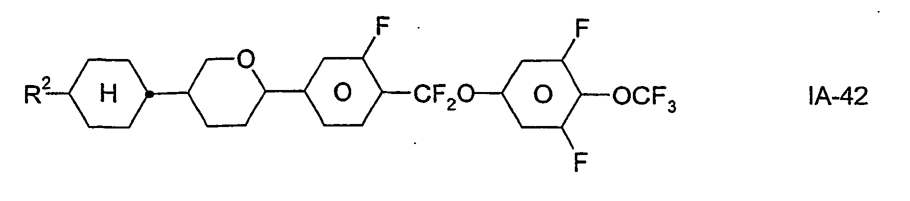 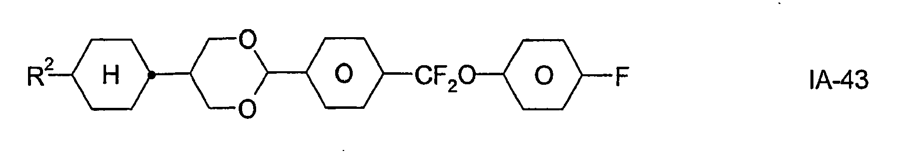 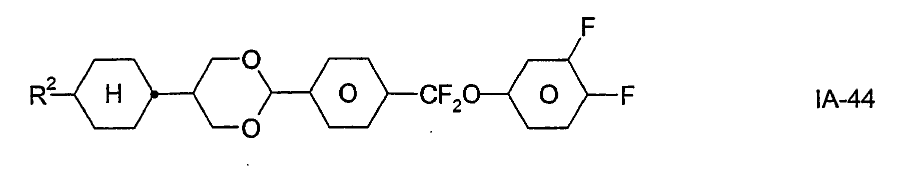 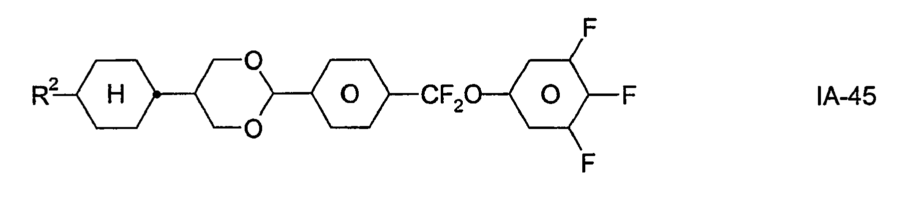 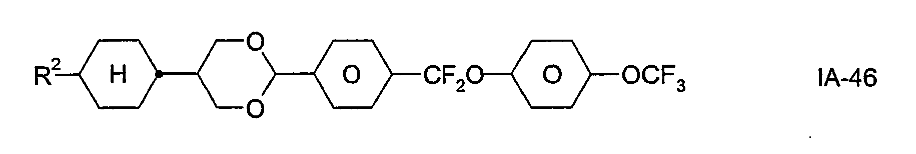 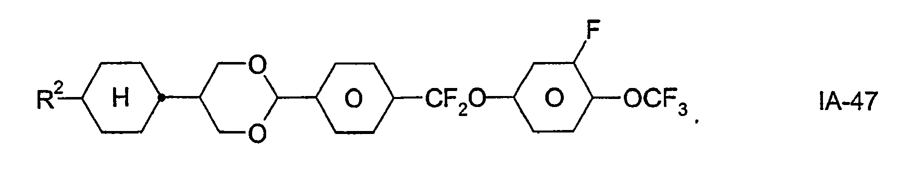 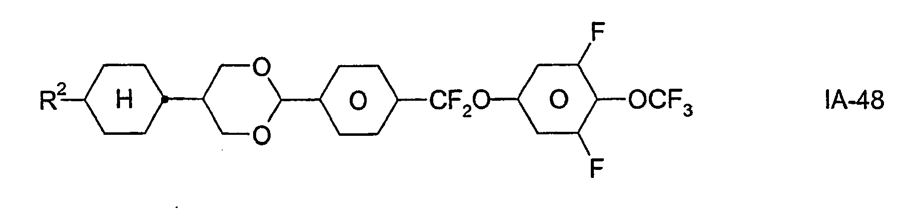 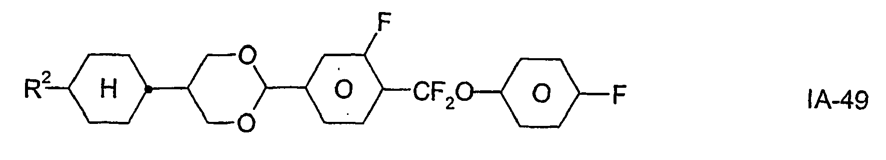 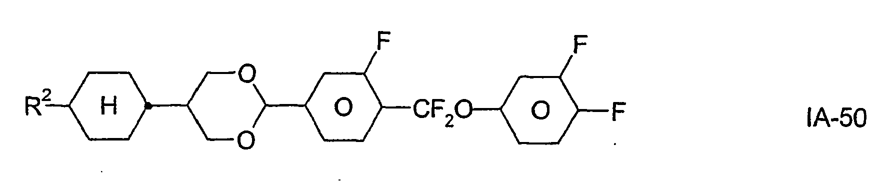 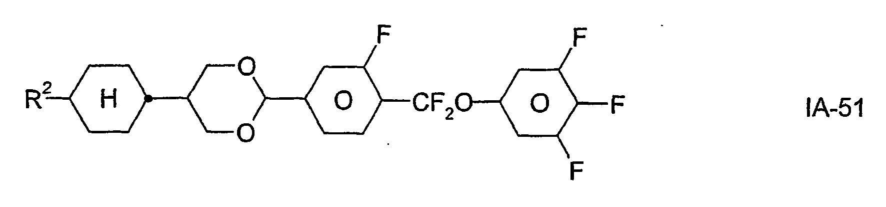 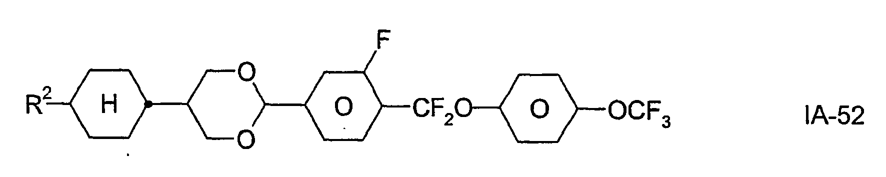 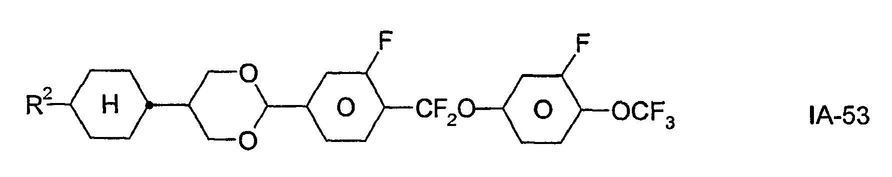 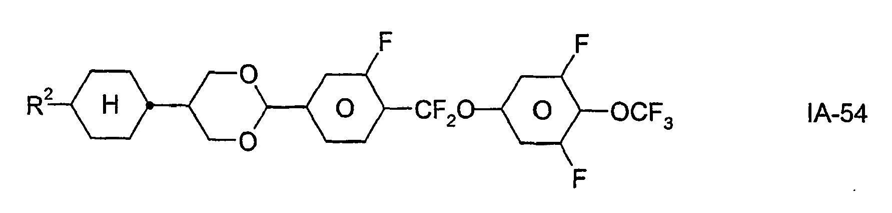 R² bedeutet vorzugsweise in den Verbindungen der Formeln IA und IA-1 bis IA-54 H, geradkettiges Alkyl mit 1 bis 7 C-Atomen, insbesondere CH₃, C₂H₅, n-C₃H₇, n-C₄H₉, n-C₅H₁₁, n-C₆H₁₃, n-C₇H₁₅, ferner 1 E- oder 3-Alkenyl, insbesondere CH₂=CH, CH₃CH=CH, CH₂=CHCH₂CH₂, CH₃CH=CH-CH₂CH₂.

Bevorzugte Ausführungsformen sind im folgenden angegeben:
- Das Medium enthält ein, zwei oder mehr Verbindungen ausgewählt aus der Gruppe der Formeln IA-1 bis IA-54;
- Das Medium enthält vorzugsweise jeweils eine oder mehrere, vorzugsweise zwei oder drei, Verbindungen (Homologen) der Formeln I-1 und IA-15;
- Das Medium enthält vorzugsweise jeweils eine oder mehrere, vorzugweise zwei oder drei, Verbindungen (Homologen) der Formeln I-1 und IA-3.

Die Verbindung der Formel IV ist vorzugsweise 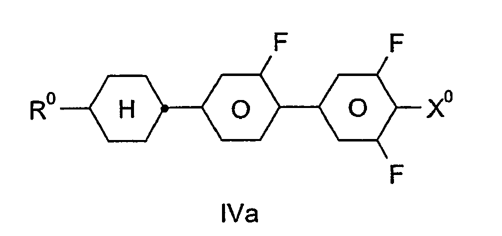 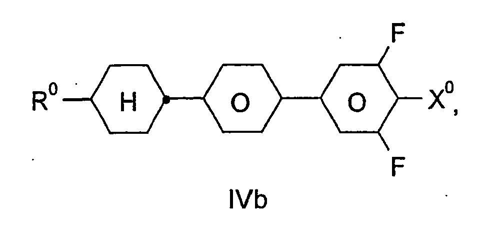 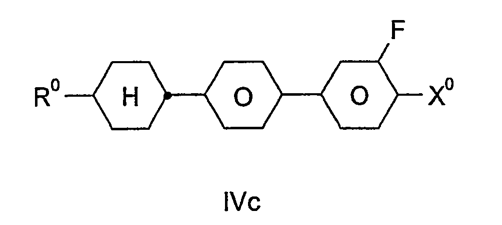 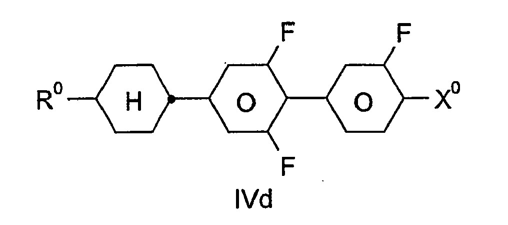 oder 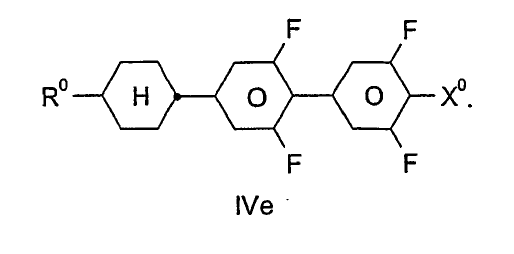
- Das Medium enthält zusätzlich eine oder mehrere Verbindungen ausgewählt aus der Gruppe bestehend aus den allgemeinen Formeln VII bis XIII: 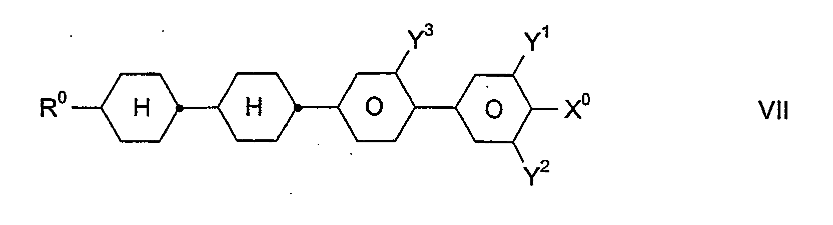 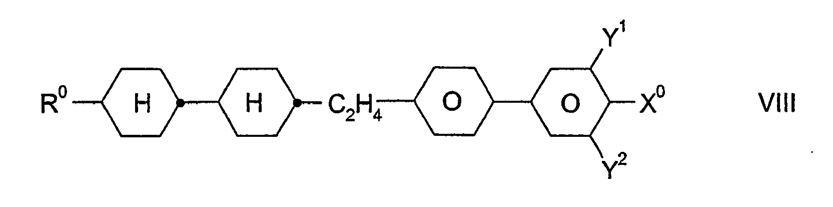 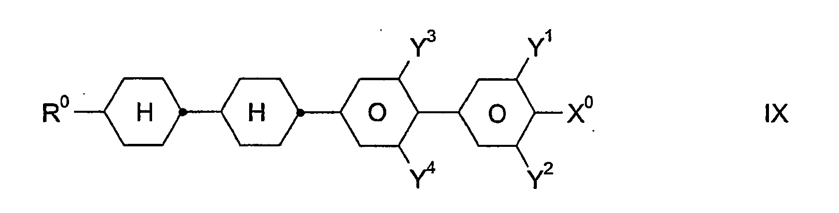 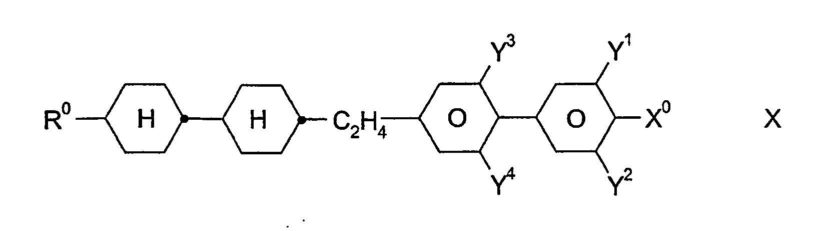 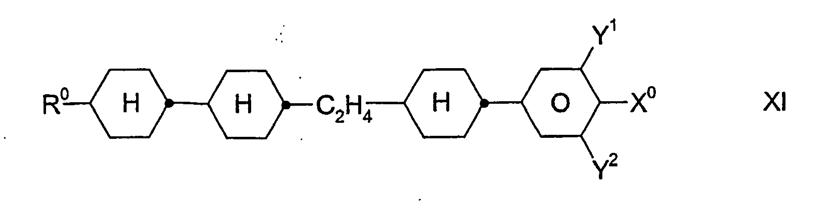 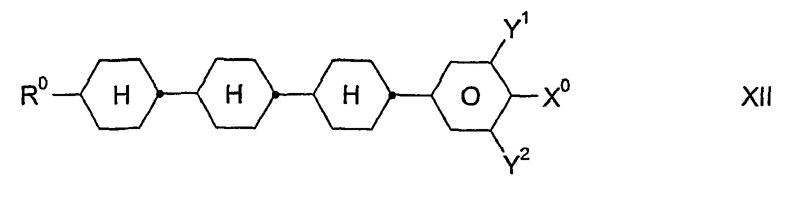 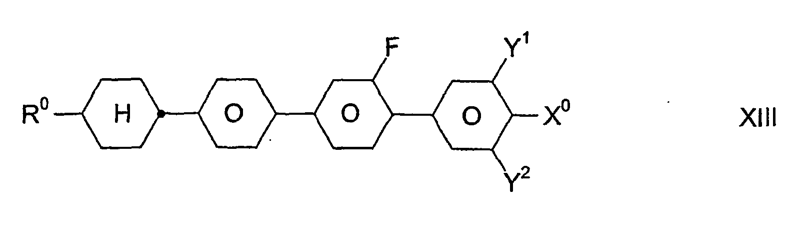 worin R⁰, X⁰, Y¹ und Y² jeweils unabhängig voneinander eine der in Anspruch 4 angegebenen Bedeutung haben. Y³ und Y⁴ bedeuten jeweils unabhängig voneinander H oder F. X⁰ ist vorzugsweise F, Cl, CF₃, OCF₃ oder OCHF₂. R⁰ bedeutet vorzugsweise Alkyl, Oxaalkyl, Fluoralkyl oder Alkenyl mit jeweils bis zu 6 C-Atomen.
- Das Medium enthält zusätzlich eine oder mehrere Ester-Verbindungen der Formeln Ea bis Ef: 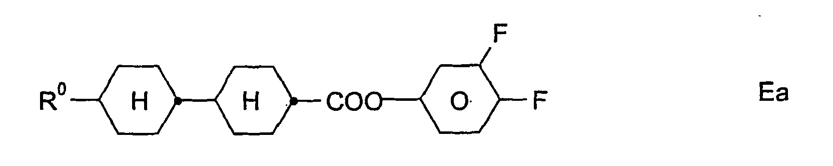 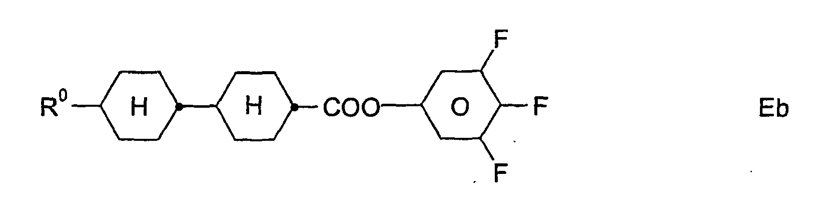 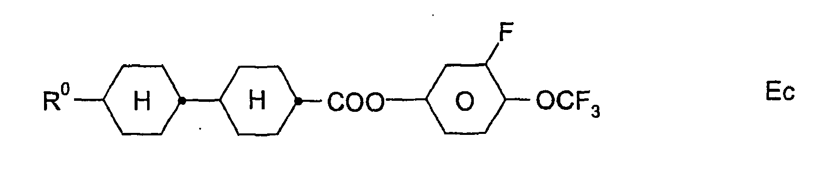 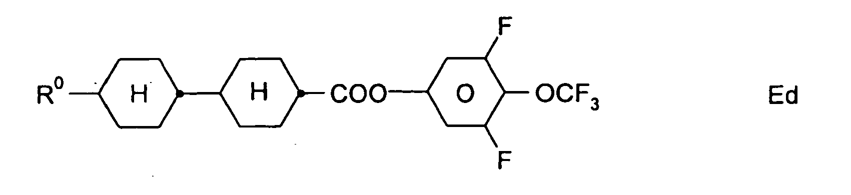 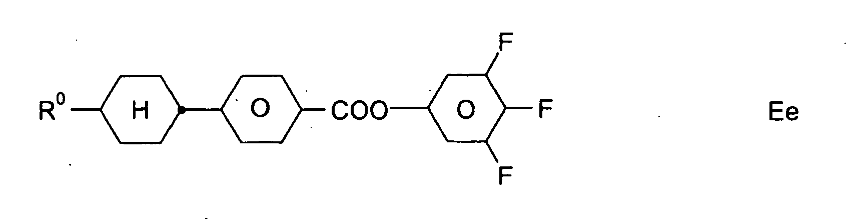 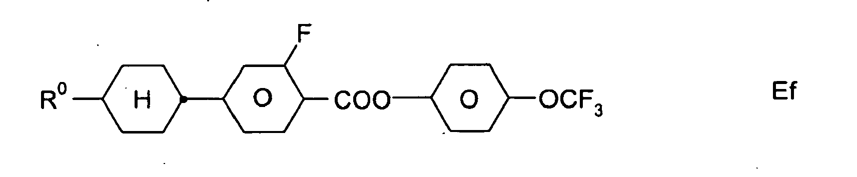
worin R⁰ die in Anspruch 4 angegebene Bedeutung hat;
- Der Anteil der Verbindung der Formeln Ea bis Ef ist vorzugsweise 10-30 Gew.%, insbesondere 15-25 Gew.%;
- Der Anteil an Verbindungen der Formeln IA und I bis VI zusammen beträgt im Gesamtgemisch mindestens 50 Gew.%;
- Der Anteil an Verbindungen der Formel I beträgt im Gesamtgemisch ganz besonders bevorzugt ≥ 24 Gew.%.
- Der Anteil an Verbindungen der Formel IA beträgt im Gesamtgemisch 5 bis 40, besonders bevorzugt 10 bis 30 Gew.%; 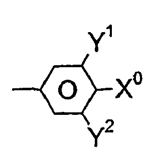 ist vorzugsweise 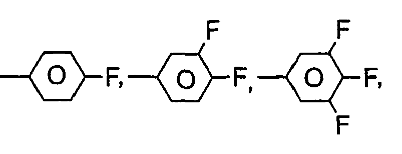 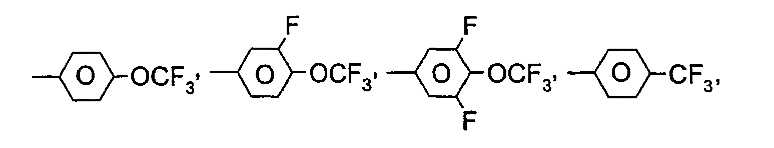 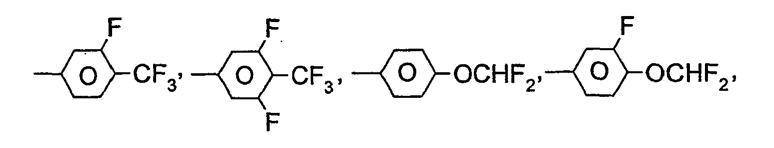 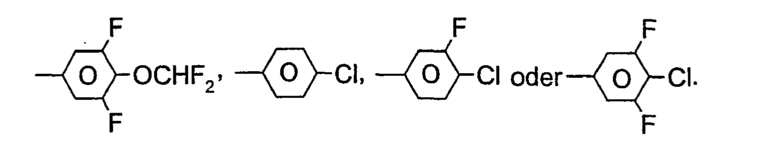
- Das Medium enthält Verbindungen der Formeln II, III, IV, V oder VI;
- R⁰ ist geradkettiges Alkyl oder Alkenyl mit 1 bzw. 2 bis 7 C-Atomen;
- Das Medium besteht im wesentlichen aus Verbindungen der Formeln IA und I bis VI;
- Das Medium enthält weitere Verbindungen, vorzugsweise ausgewählt aus der folgenden Gruppe bestehend aus den allgemeinen Formeln XIV bis XVII: 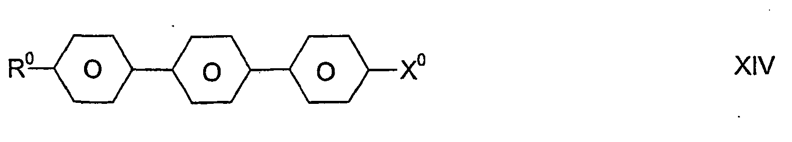 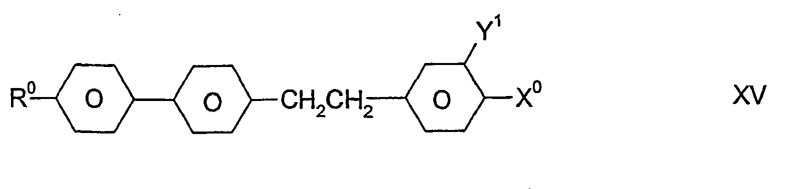 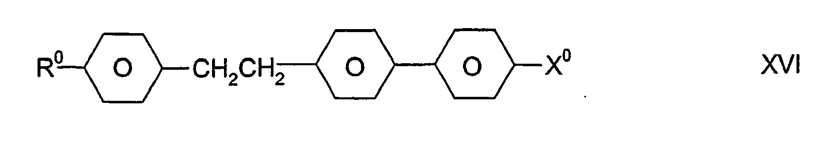 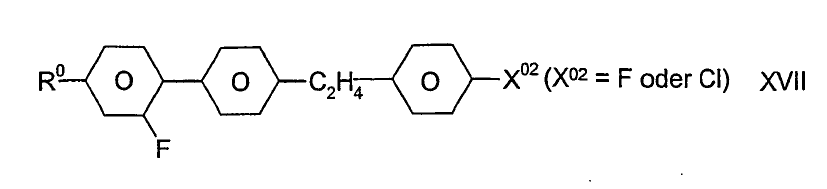
worin R⁰ und X⁰ die oben angegebene Bedeutung haben und die 1,4-Phenylenringe durch CN, Chlor oder Fluor substituiert sein können. Vorzugsweise sind die 1,4-Phenylenringe ein- oder mehrfach durch Fluoratome substituiert.
- Das Medium enthält zusätzlich ein oder mehrere Verbindungen der Formeln XVIII und/oder XIX, 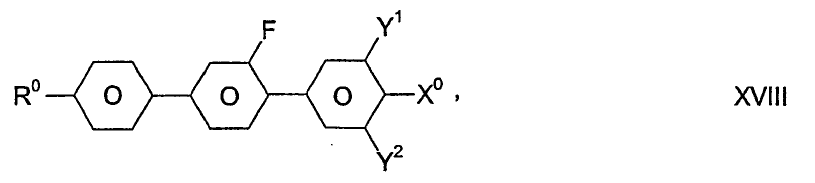 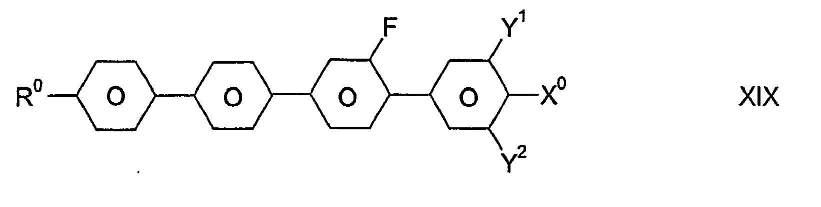
worin R⁰, X⁰, Y¹, Y² die oben angegebenen Bedeutungen haben.

Der Anteil der Verbindungen der Formel XVIII in der erfindungsgemäßen Mischung beträgt 2-30 Gew.%, während Verbindungen der Formel XIX mit 0,5-30 Gew.% in der Mischung enthalten sein könen. Die Verbindungen der Formel XIX beeinflussen auch gleichzeitig positiv die UV-Stabilität der Mischungen.
- Das Medium enthält zusätzlich ein, zwei, drei oder mehr, vorzugsweise zwei oder drei, Verbindungen der Formel 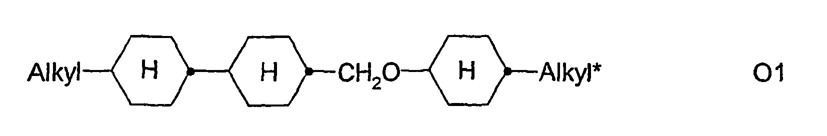 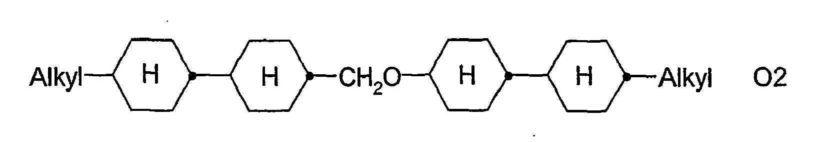 worin "Alkyl" und "Alkyl*" jeweils unabhängig voneinander ein geradkettiger oder verzweigter Alkylrest mit 1-9 C-Atomen bedeutet.

Der Anteil der Verbindungen der Formeln O1 und/oder 02 in den erfindungsgemäßen Mischungen beträgt vorzugsweise 5-10 Gew.%.
- Das Medium enthält vorzugsweise 5-35 Gew.% der Verbindung IVa.
- Das Medium enthält vorzugsweise eine, zwei oder drei Verbindungen der Formel IVa, worin X° F oder OCF₃ bedeutet.
- Das Medium enthält vorzugsweise ein oder mehrere Verbindungen der Formeln IIa bis IIg, 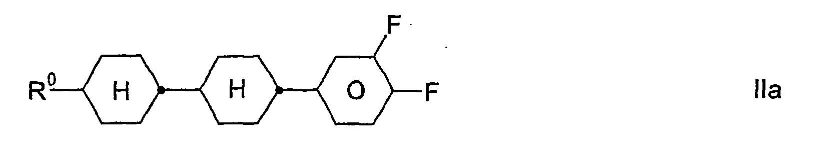 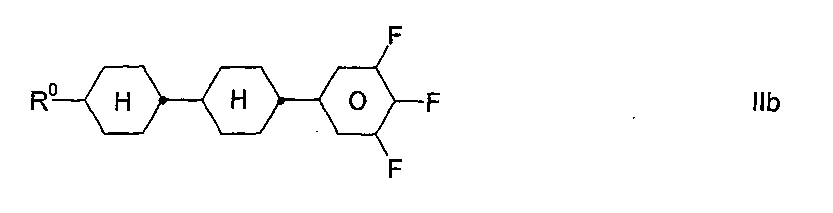 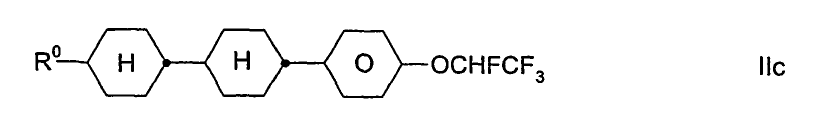 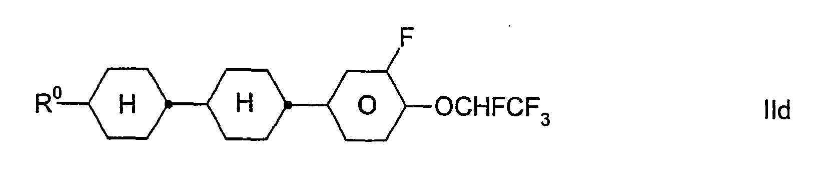 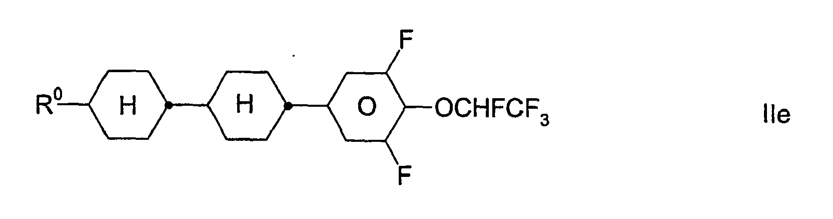 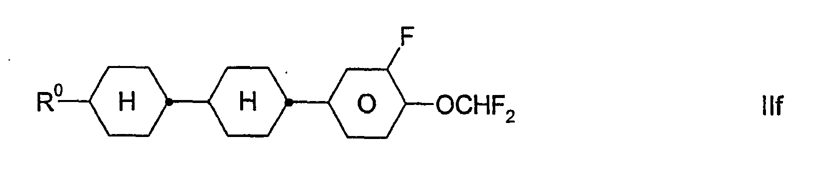 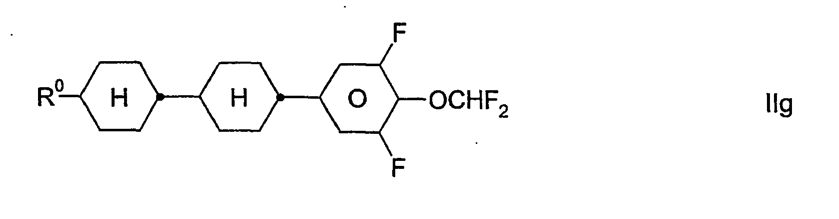
worin R⁰ die oben angegebenen Bedeutungen hat. In den Verbindungen der Formeln IIa-IIg bedeutet. R⁰ vorzugsweise H, Methyl, Ethyl, n-Propyl, n-Butyl oder n-Pentyl, ferner n-Hexyl oder n-Heptyl.
- Das Gewichtsverhältnis (I + IA) : (II + III + IV + V + VI) ist vorzugsweise 1 : 10 bis 10 : 1.
- Das Medium besteht im wesentlichen aus Verbindungen ausgewählt aus der Gruppe bestehend aus den allgemeinen Formeln IA und I bis XIII.
- Der Anteil der Verbindungen der Formel IVb und/oder IVc, worin X° Fluor und R⁰ C₂H₅, n-C₃H₇, n-C₄H₅ oder n-C₅H₁₁ bedeutet, beträgt im Gesamtgemisch 2 bis 20 Gew.%, insbesondere 2 bis 15 Gew.%;
- Das Medium enthält vorzugsweise ein, zwei oder drei, ferner vier, Homologe der Verbindungen ausgewählt aus der Gruppe H1 bis H19 (n = 1-12): 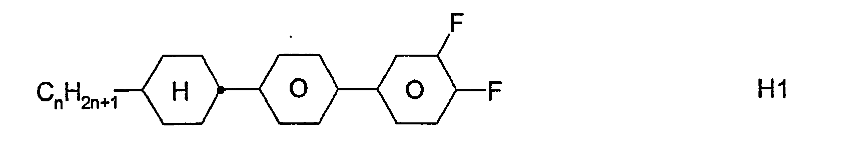 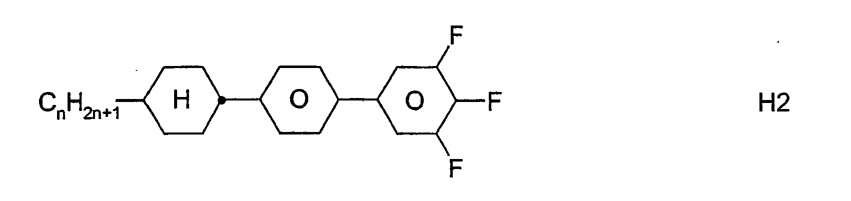 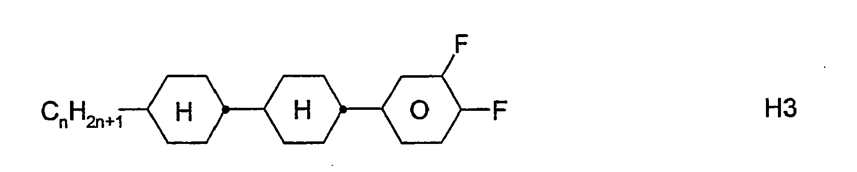 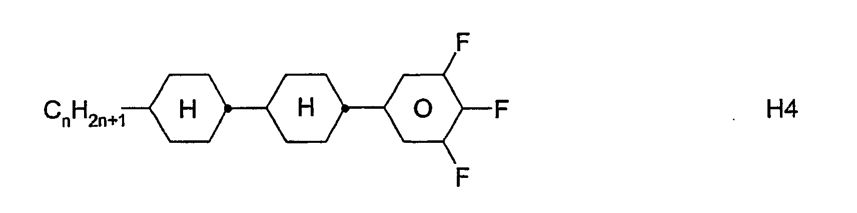 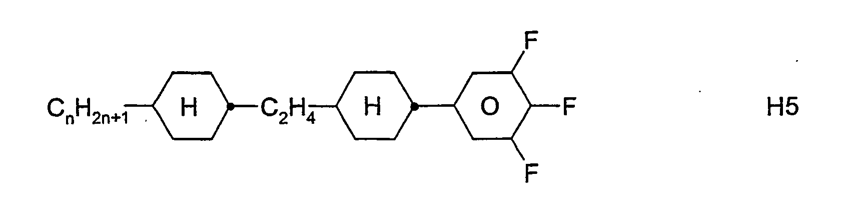 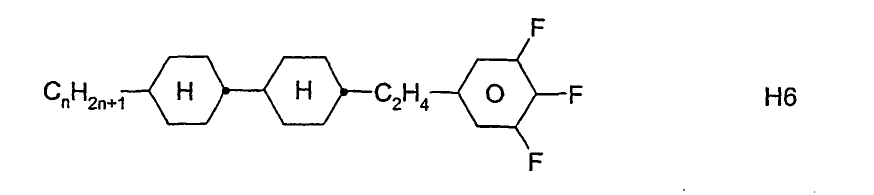 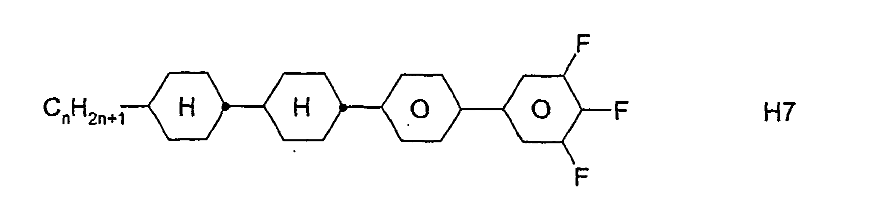 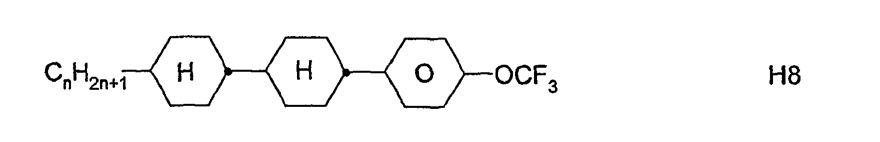 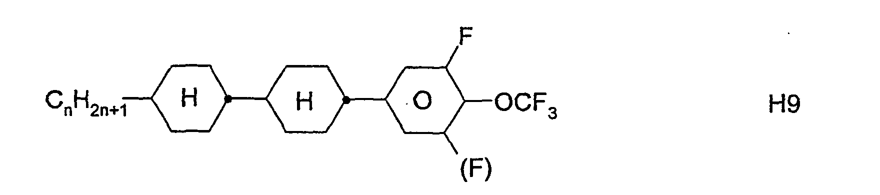 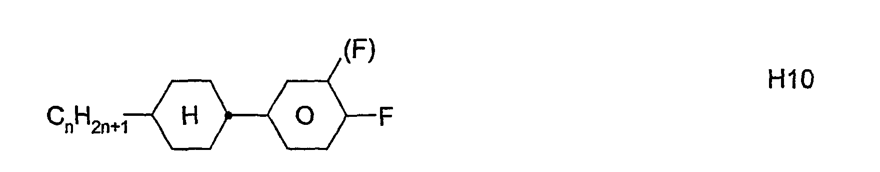 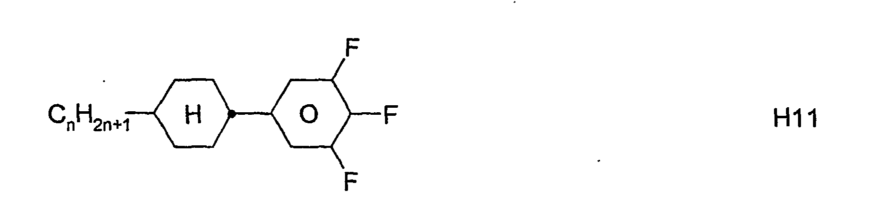 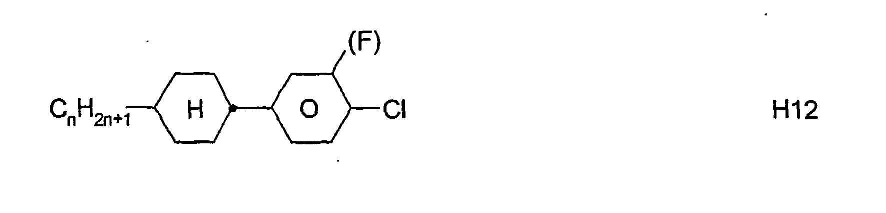 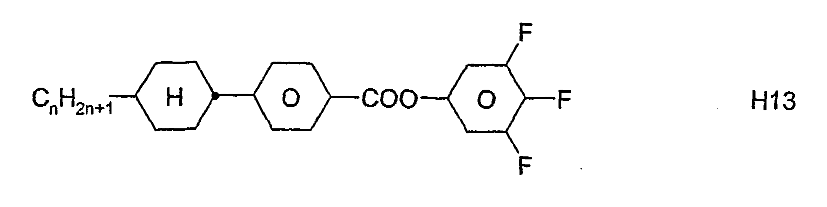 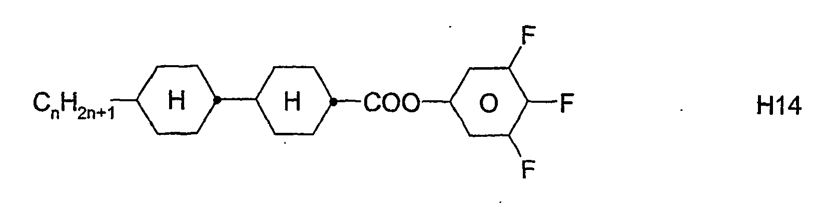 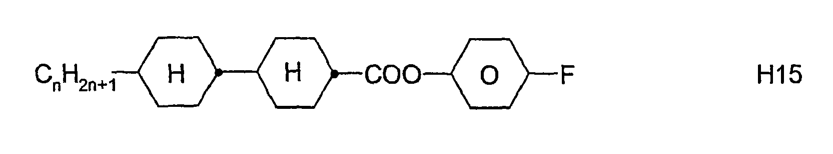 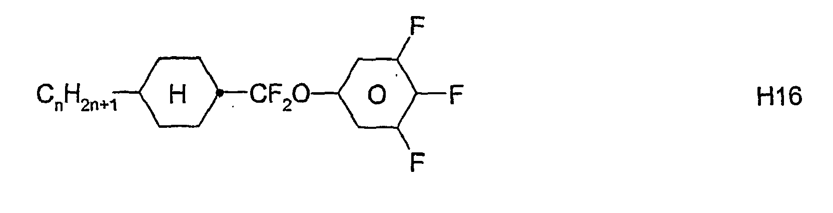 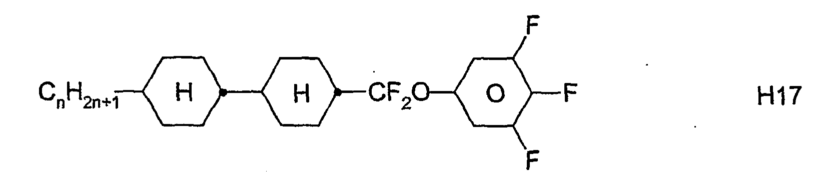 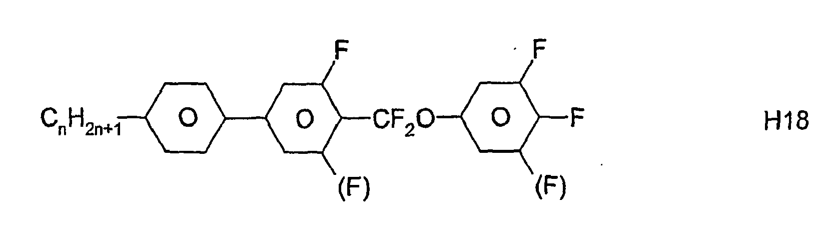 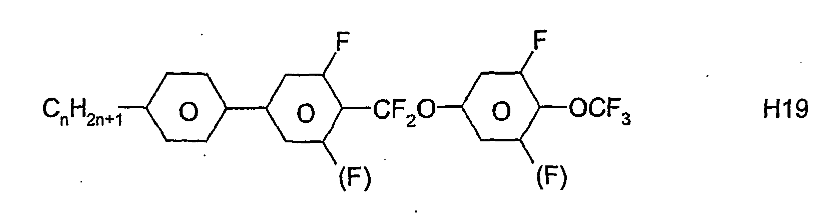
- Das Medium enthält vorzugsweise die Verbindung IIb, worin R° Methyl bedeutet;
- Das Medium enthält low Δn-Verbindungen, vorzugsweise ausgewählt aus der folgenden Gruppe bestehend aus den Formeln RI bis RVII, 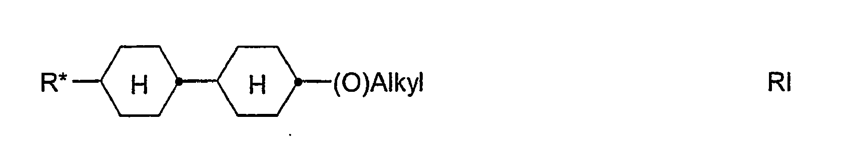 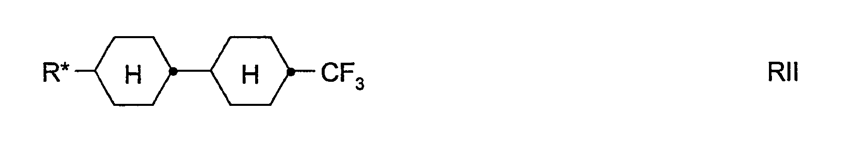 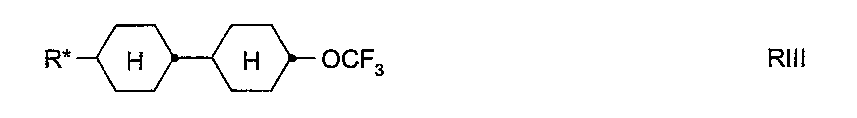 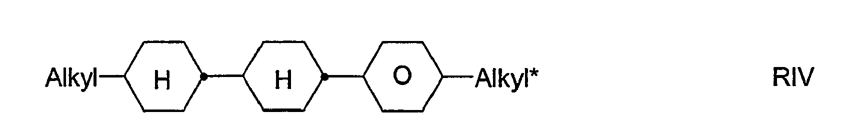 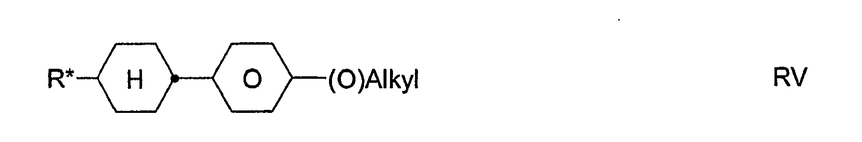 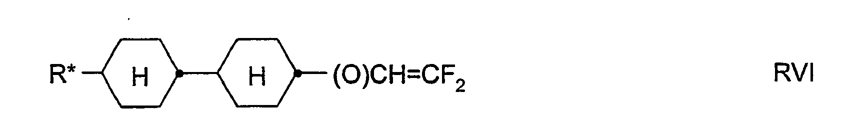 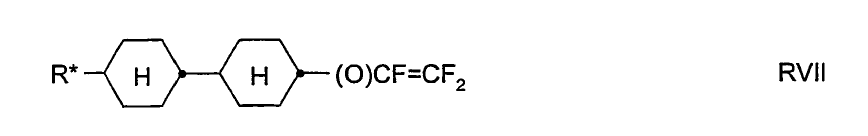
worin
- R*: n-Alkyl, Alkoxy, Oxaalkyl, Fluoralkyl oder Alkenyloxy mit jeweils bis zu 9 C-Atomen, und
- Alkyl oder Alkyl*: jeweils unabhängig voneinander ein geradkettiger oder verzweigter Alkylrest mit 1-9 C-Atomen,
bedeuten.
- Bevorzugte Mischungen für TN-Monitor-Anwendungen enthalten Verbindungen der Formel 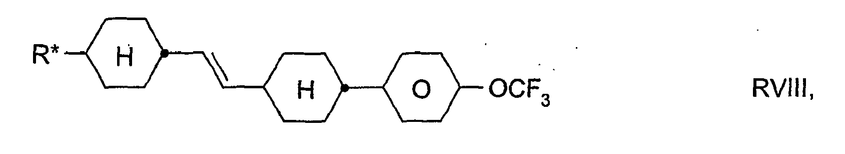
worin
- R*: die oben angegebenen Bedeutungen hat und vorzugsweise Alkenyl, insbesondere CH₃CH=CH
bedeutet.

Der Benzolring kann zusätzlich mit ein oder zwei Fluoratomen substituiert sein.
- Das Medium enthält zusätzlich ein, zwei oder mehr Verbindungen mit annellierten Ringen der Formeln AN1 bis AN11: 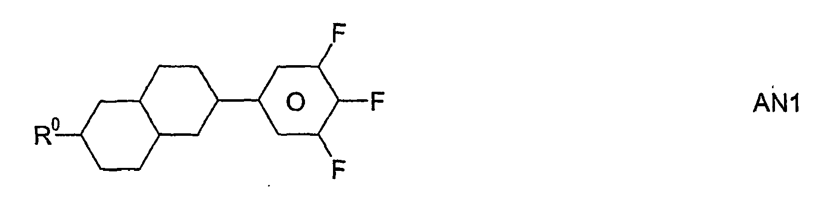 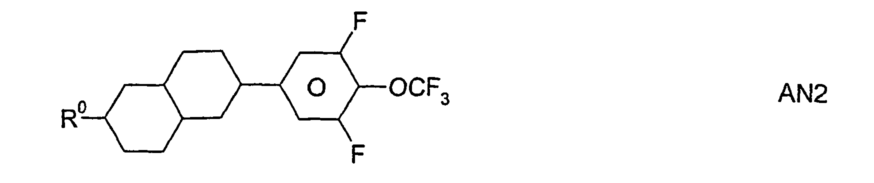 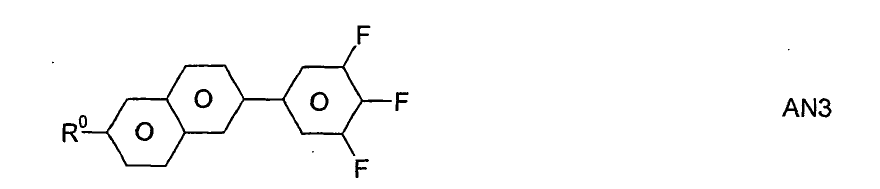 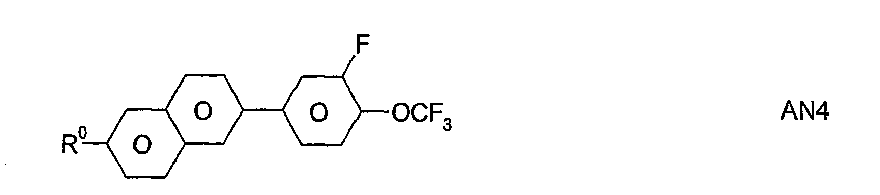 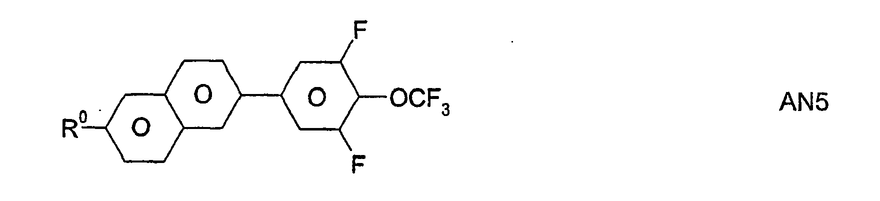 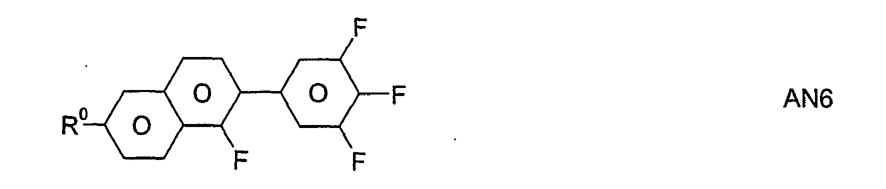 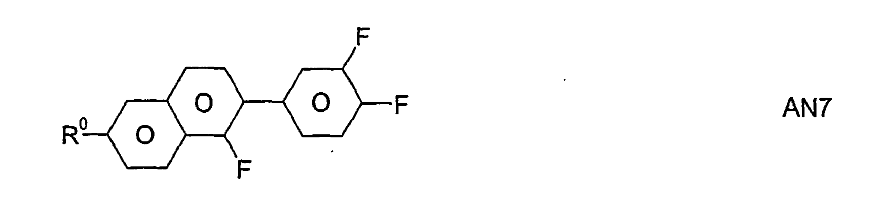 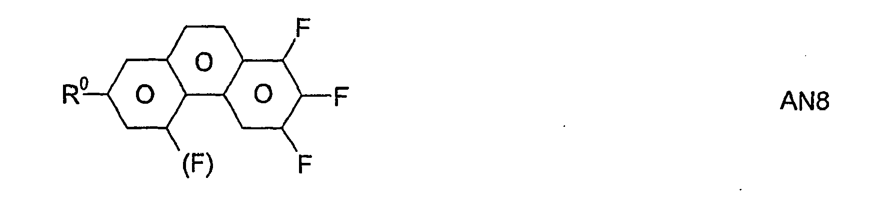 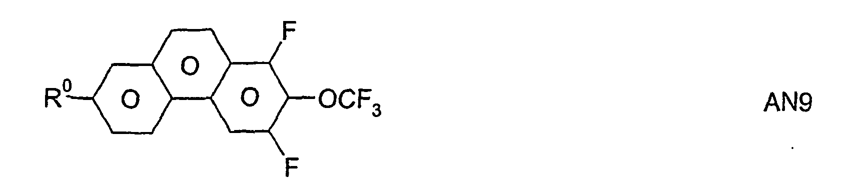 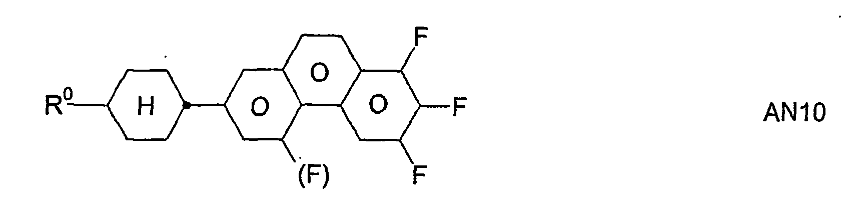 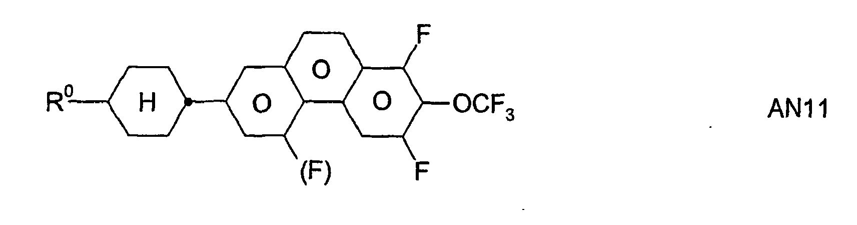
worin R⁰ die oben angegebenen Bedeutungen hat;

Der Ausdruck "Alkyl" bzw. "Alkyl*" umfasst geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenastoffatomen sind im allgemeinen bevorzugt.

Der Ausdruck "Alkenyl" umfasst geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.
- Das Medium enthält zusätzlich ein oder mehrere Pyranverbindungen der Formeln P-1 bis P-11, 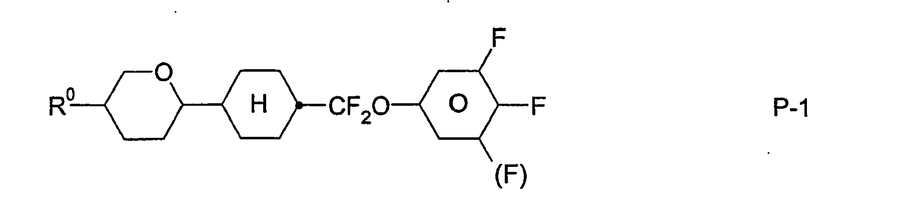 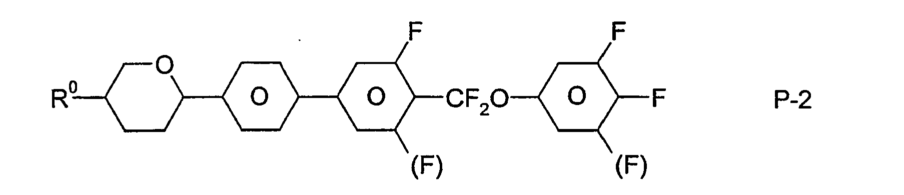 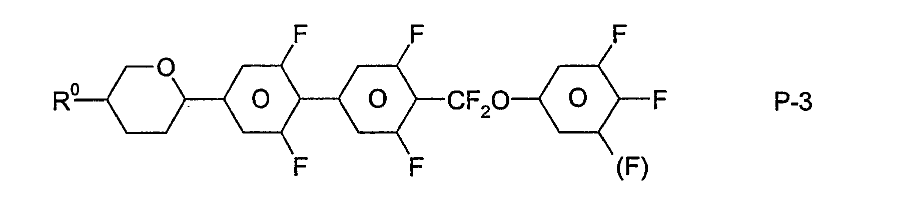 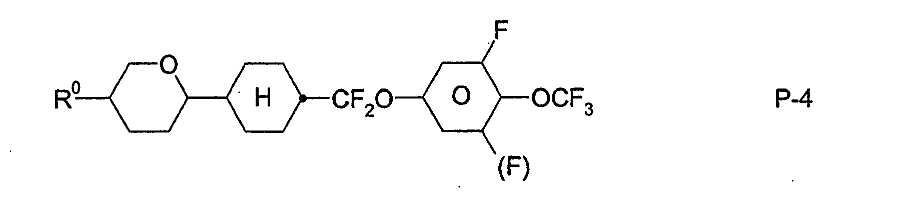 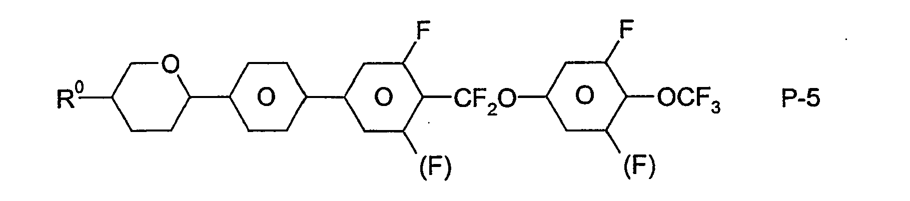 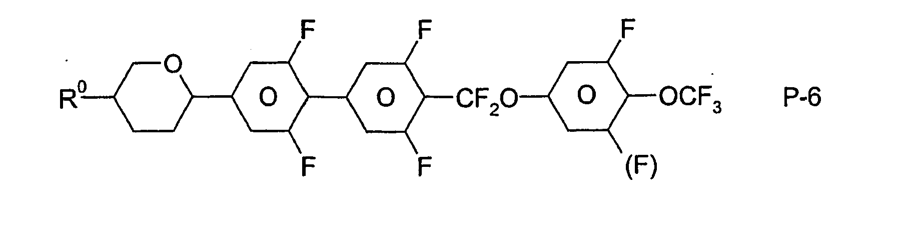 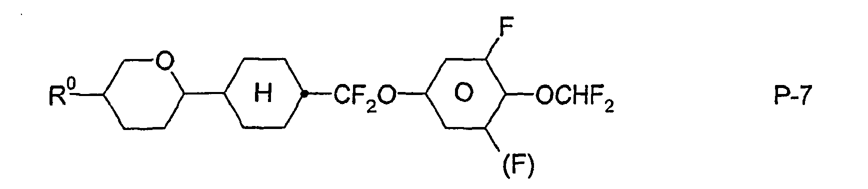 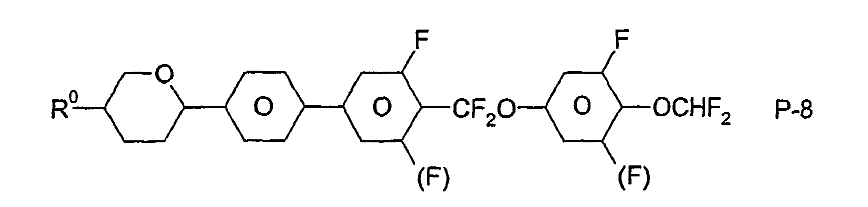 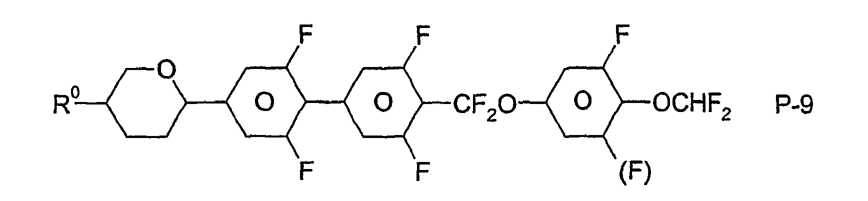 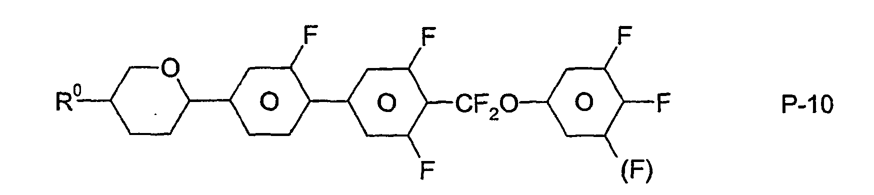 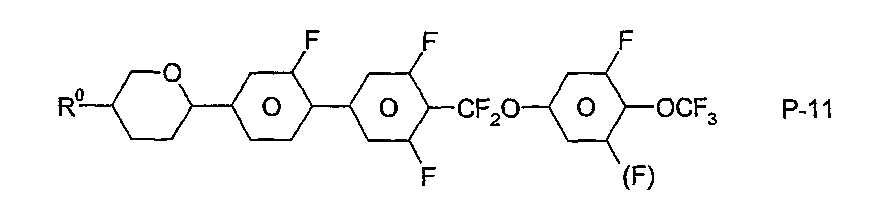
worin R⁰ die oben angegebenen Bedeutungen besitzt.
- Das Medium enthält vorzugseise ein oder mehrere Dioxanverbindungen der Formeln D-1 und/oder D-2, 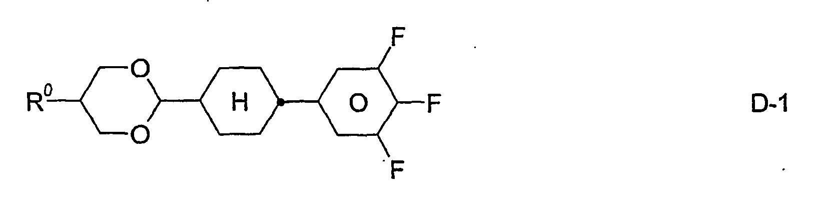 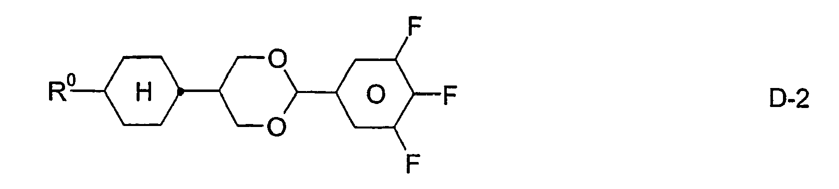
worin
R⁰ die oben angegebenen Bedeutungen hat.
Bevorzugte Mischungen enthalten 2-30 % an Dioxanen.

Der Ausdruck "Fluoralkyl" umfasst vorzugsweise geradkettige Gruppen mit endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfasst vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Es wurde gefunden, dass bereits ein relativ geringer Anteil an Verbindungen der Formeln I und IA im Gemisch mit üblichen Flüssigkristallmaterialien, insbesondere jedoch mit einer oder mehreren Verbindungen der Formeln II, III, IV, V und/oder VI zu einer beträchtlichen Erniedrigung der Schwellenspannung und zu hohen Werten für die VHR (100 °C) führt, wobei gleichzeitig breite nematische Phasen mit tiefen Übergangstemperaturen smektisch-nematisch beobachtet werden, wodurch die Lagerstabilität verbessert wird. Bevorzugt sind insbesondere Mischungen, die neben ein oder mehreren Verbindungen der Formeln I und IA ein oder mehrere Verbindungen der Formel IV enthalten, insbesondere Verbindungen der Formel IVa, worin X⁰ F oder OCF₃ bedeutet. Die Verbindungen der Formeln IA, I bis VI sind farblos, stabil und untereinander und mit anderen Flüssigkristallmaterialien gut mischbar.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine -CH₂CH₂-Gruppe führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I, IA und II + III + IV + V + VI hängt weitgehend von den gewünschten Eigenschaften, von der Wahl der Komponenten der Formeln I, IA, II, III, IV, V und/oder VI und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der Formeln IA und I bis XIII in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln IA und I bis XIII sind.

In einer besonders bevorzugten Ausführungsform enthalten die erfindungsgemäßen Medien Verbindungen der Formel II bis VI (vorzugsweise II, III und/oder IV, insbesondere IVa), worin X⁰ F, OCF₃, OCHF₂, F, OCH=CF₂, OCF=CF₂ oder OCF₂-CF₂H bedeutet. Eine günstige synergistische Wirkung mit den Verbindungen der Formeln I und IA führt zu besonders vorteilhaften Eigenschaften. Insbesondere Mischungen enthaltend Verbindungen der Formel I, IA und der Formel IVa zeichnen sich durch ihre niedrige Schwellenspannung aus.

Die einzelnen Verbindungen der Formeln IA und I bis XVIII und deren Unterformeln, die in den erfindungsgemäßen Medien verwendet werden können, sind entweder bekannt, oder sie können analog zu den bekannten Verbindungen hergestellt werden.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze, wie z. B. Stabilisatoren, UV-Filter, Antioxidantien, enthalten. Beispielsweise können 0-15 % pleochroitische Farbstoffe oder chirale Dotierstoffe zugesetzt werden.

C bedeutet eine kristalline, S eine smektische, S_{c} eine smektisch C, N eine nematische und I die isotrope Phase.

V₁₀ bezeichnet die Spannung für 10 % Transmission (Blickrichtung senkrecht zur Plattenoberfläche). tₒₙ bezeichnet die Einschaltzeit und t_{off} die Ausschaltzeit bei einer Betriebsspannung entsprechend dem 2,0fachen Wert von V₁₀. Δn bezeichnet die optische Anisotropie. Δε bezeichnet die dielektrische Anisotropie (Δε = ε_{∥} - ε_{⊥}, wobei ε_{∥} die Dielektrizitätskonstante parallel zu den Moleküllängsachsen und ε_{⊥} die Dielektrizitätskonstante senkrecht dazu bedeutet). Die elektro-optischen Daten werden in einer TN-Zelle im 1. Minimum (d.h. bei einem d · Δn-Wert von 0,5 µm) bei 20 °C gemessen, sofern nicht ausdrücklich etwas anderes angegeben wird. Die optischen Daten werden bei 20 °C gemessen, sofern nicht ausdrücklich etwas anderes angegeben wird.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n und m sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R^{1*}, R^{2*}, L^{1*}, L^{2*} und L^{3*}:

| Code für R^{1*}, R^{2*}, L^{1*}, L^{2*}, L^{3*} | R^{1*} | R^{2*} | L^{1*} | L^{2*} | L^{3*} |
|---|---|---|---|---|---|
| nm | CₙH₂ₙ₊₁ | CₘH₂ₘ₊₁ | H | H | H |
| nOm | OCₙH₂ₙ₊₁ | CₘH₂ₘ₊₁ | H | H | H |
| nO.m | CₙH₂ₙ₊₁ | OCₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CₙH₂ₙ₊₁ | CₘH₂ₘ₊₁ | F | H | H |
| nOCF₃ | CₙH₂ₙ₊₁ | OCF₃ | H | H | H |
| nOCF₃.F | CₙH₂ₙ₊₁ | OCF₃ | F | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

Bevorzugte Mischungskomponenten finden sich in den Tabellen A und B.

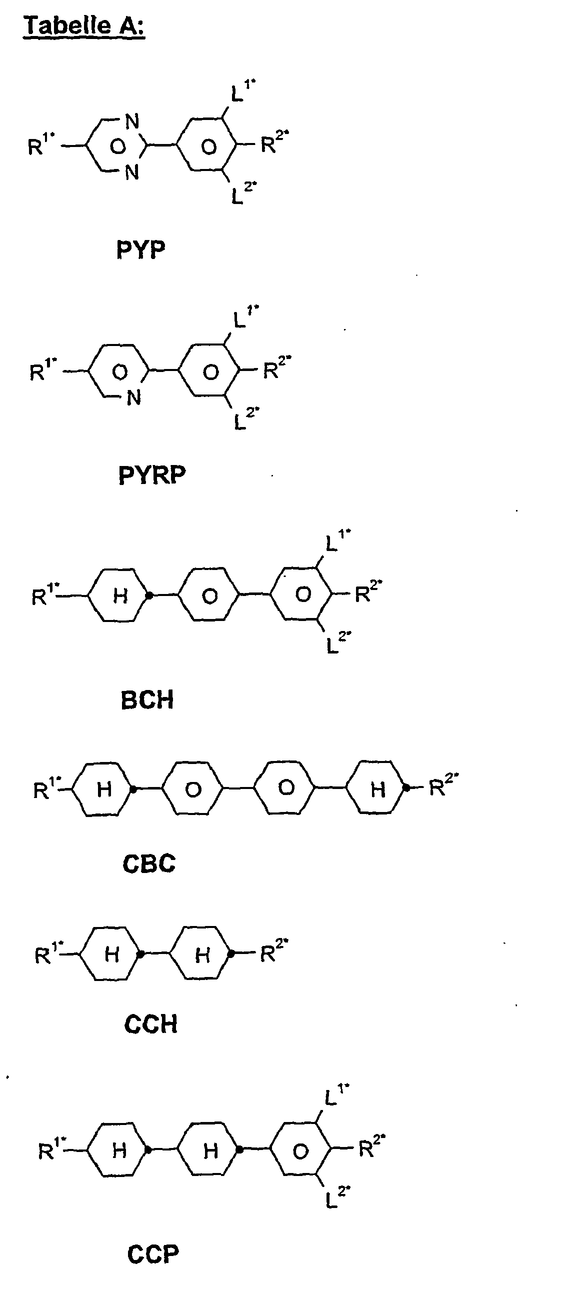

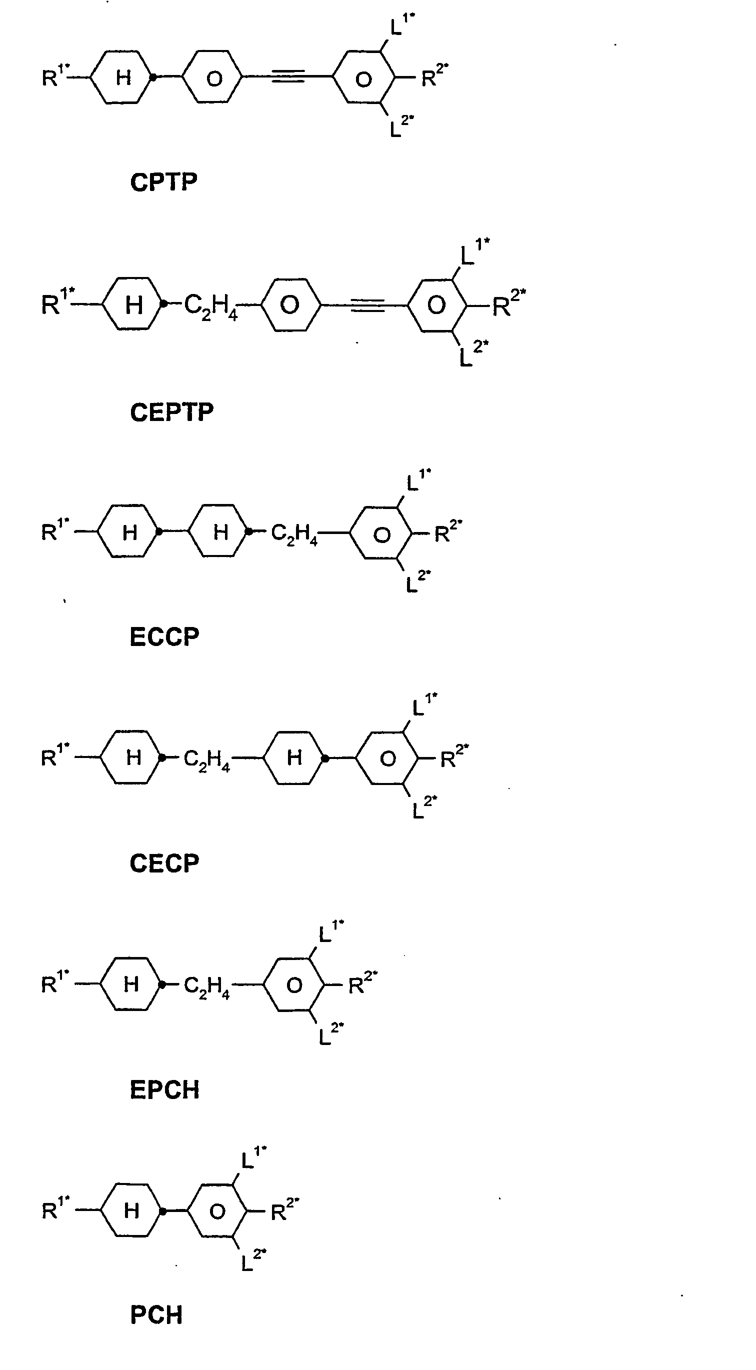

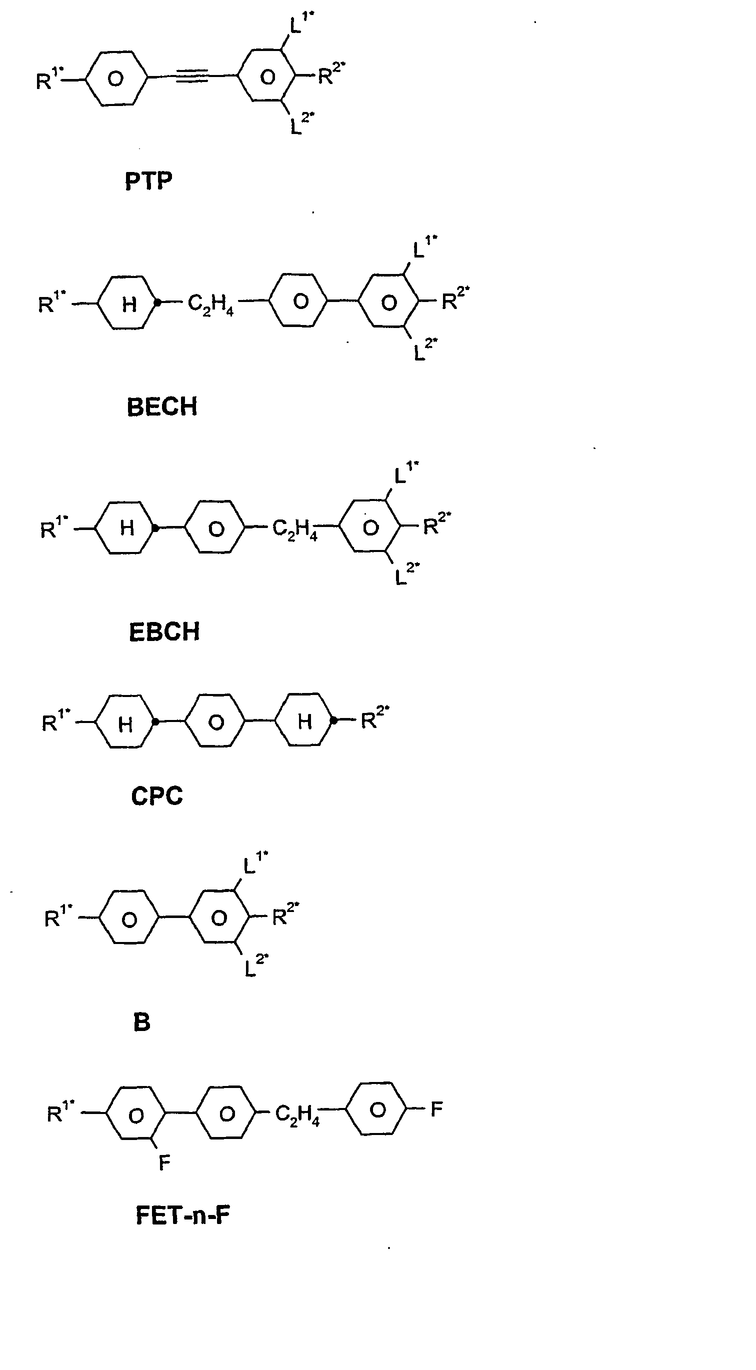

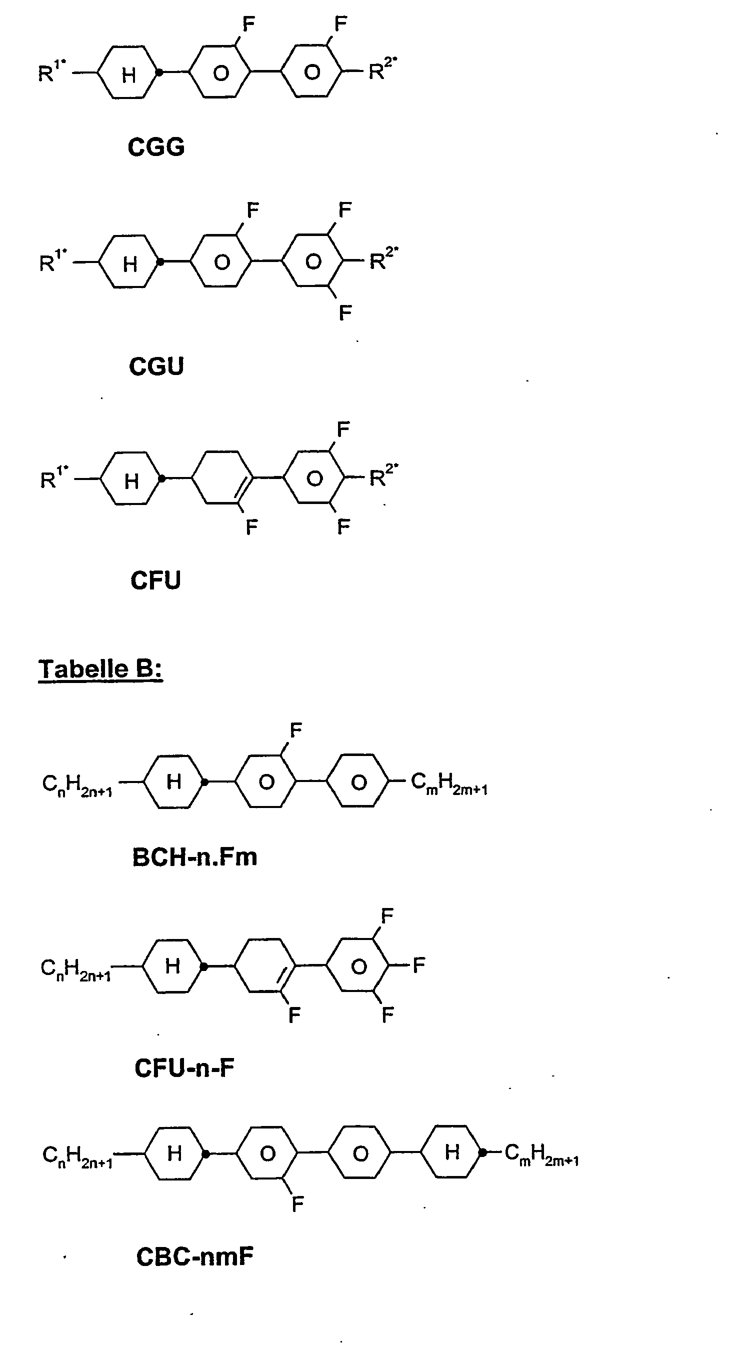

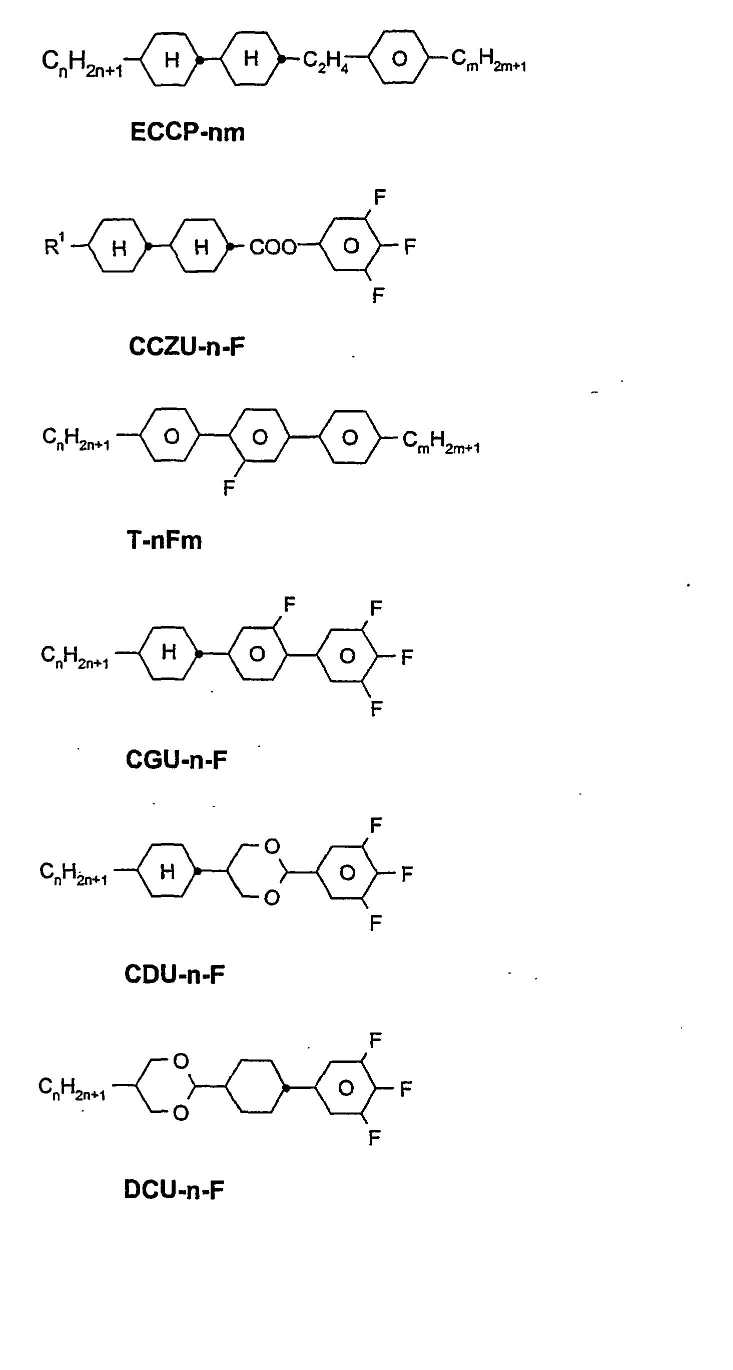

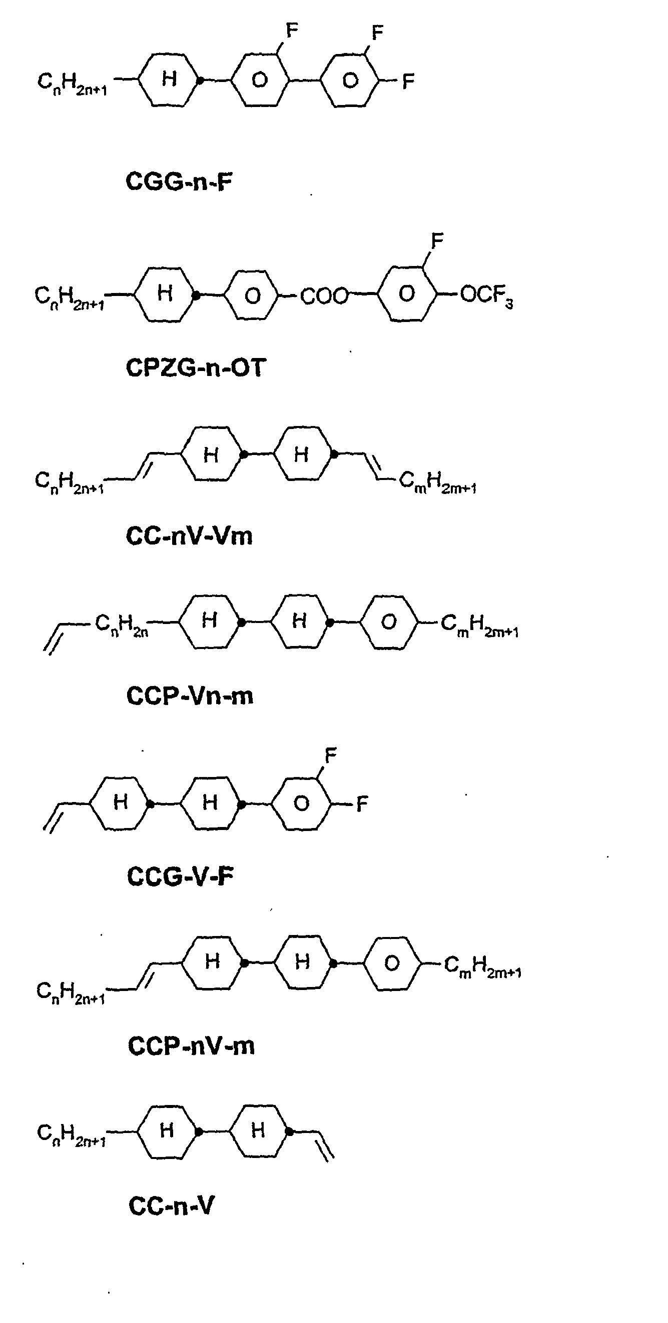

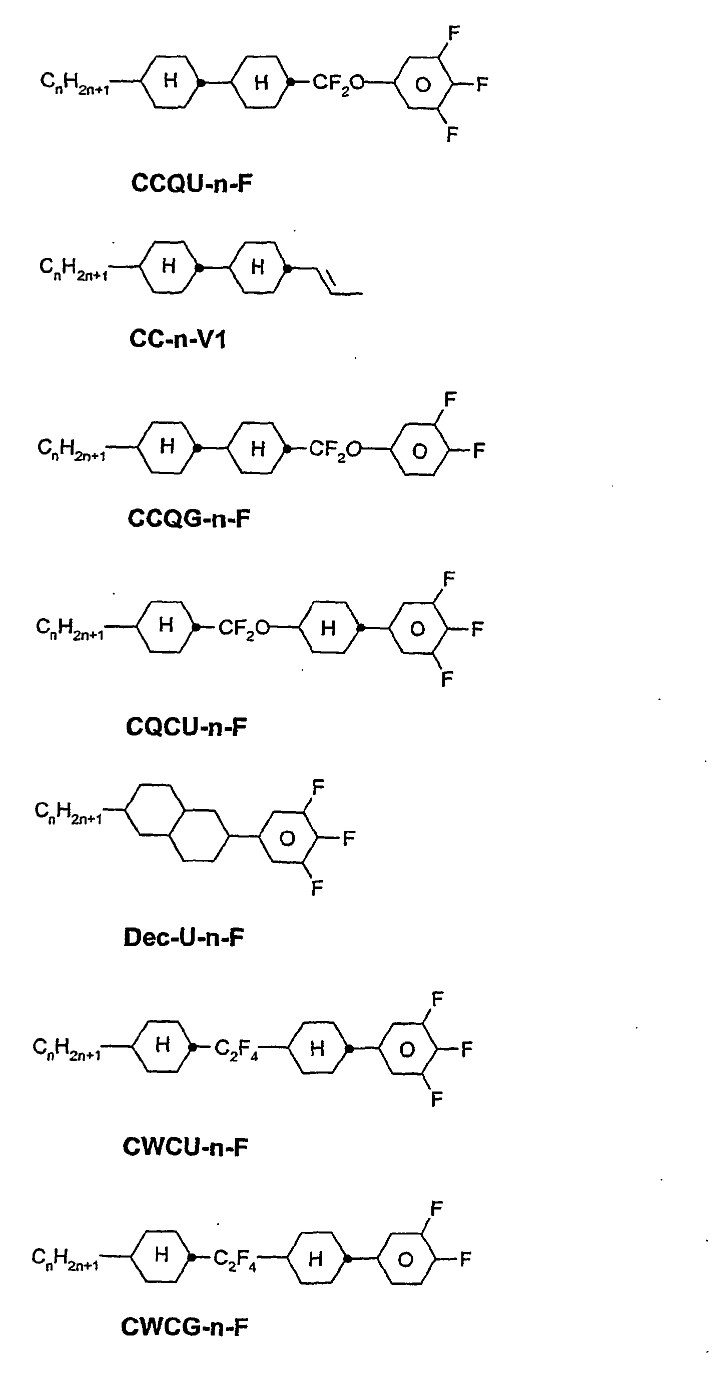

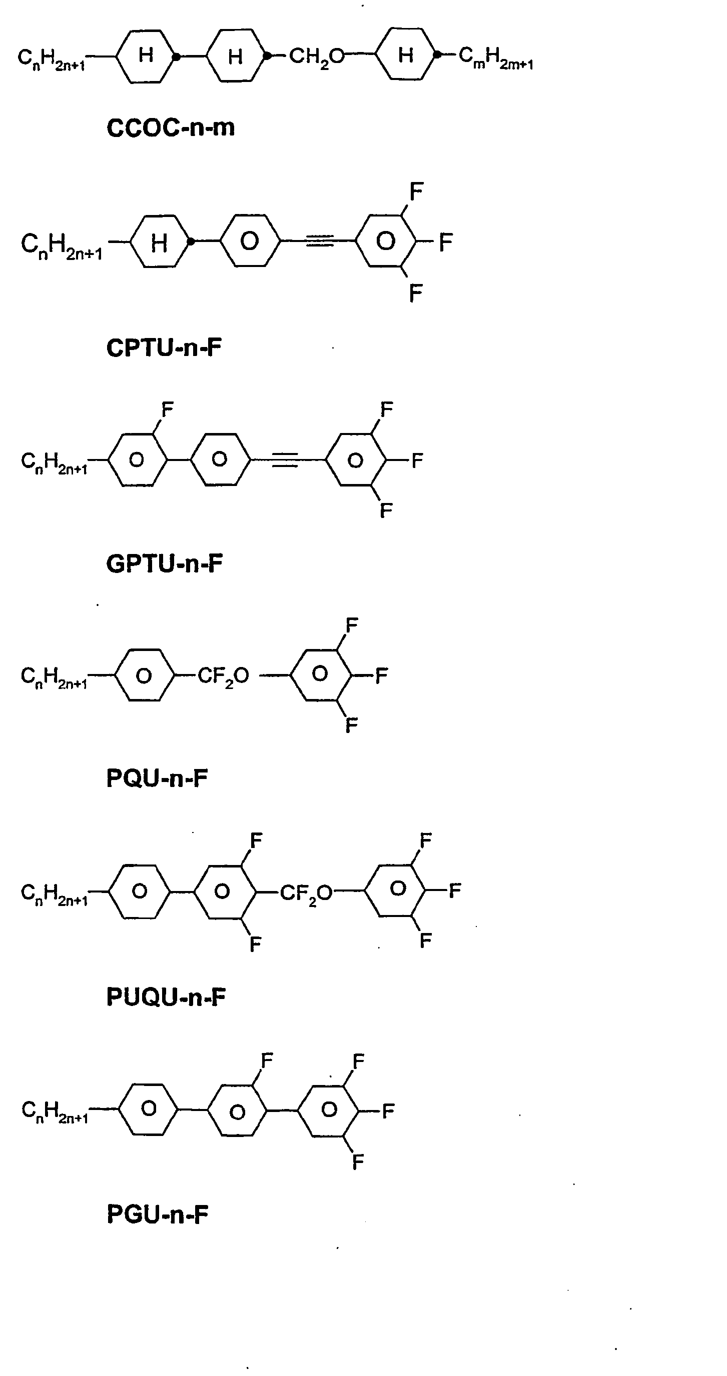

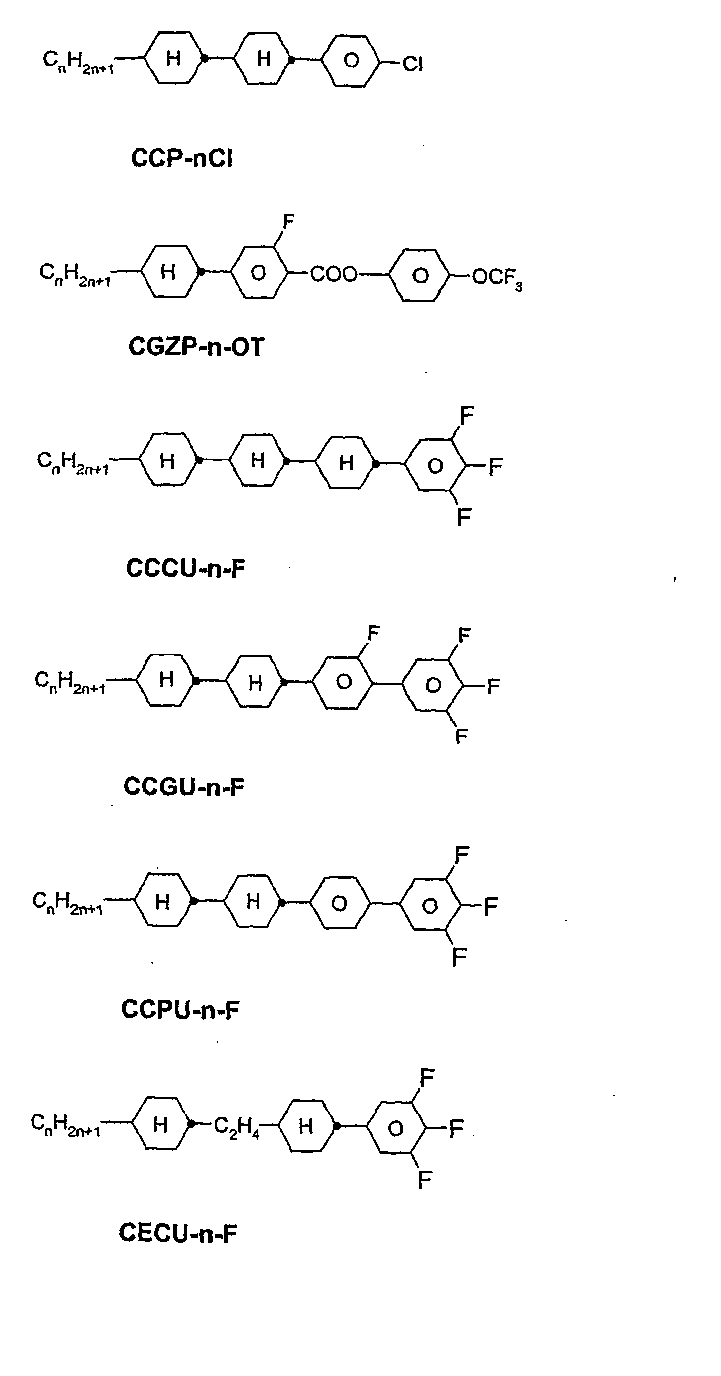

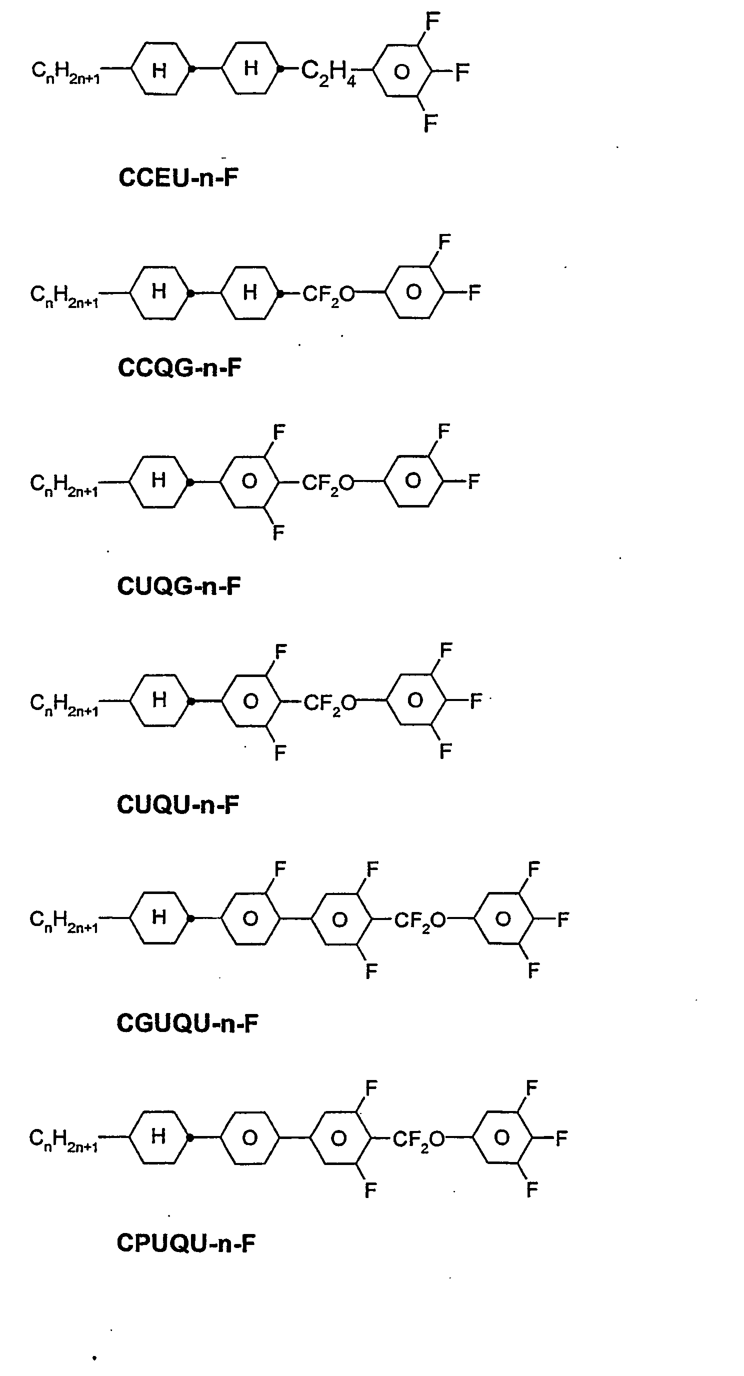

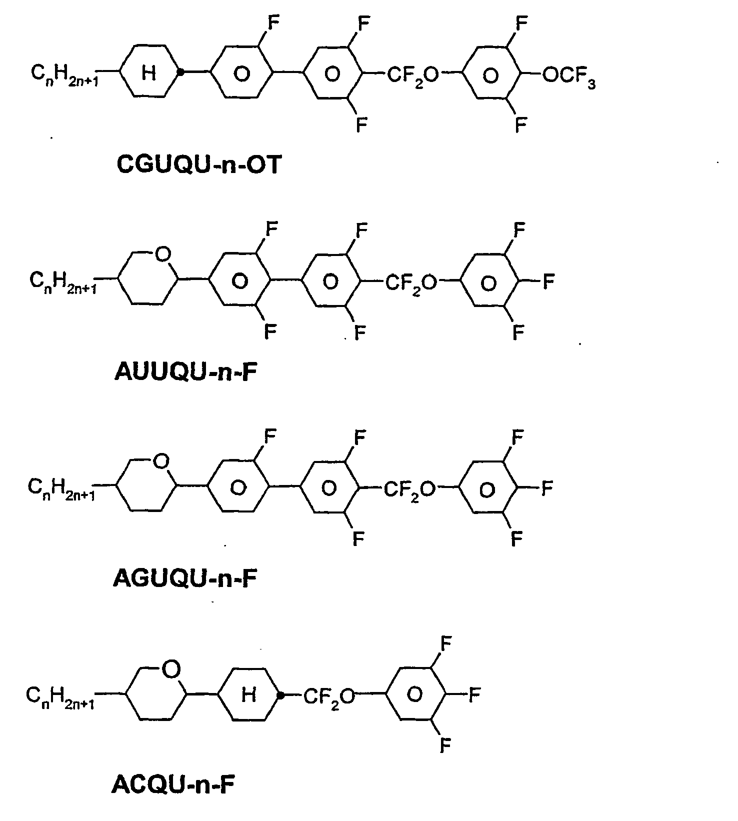

Besonders bevorzugt sind flüsigkristalline Mischungen, die neben den Verbindungen der Formeln I und IA mindestens ein, zwei, drei oder vier Verbindungen aus der Tabelle B enthalten.

**Tabelle C:**

| |
|---|
| In der Tabelle C werden mögliche Dotierstoffe angegeben, die in der Regel den erfindungsgemäßen Mischungen zugesetzt werden. |
| 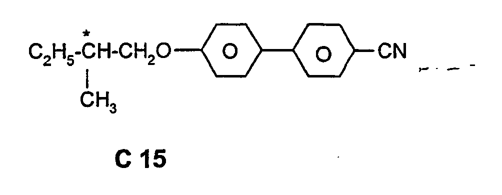 |
| 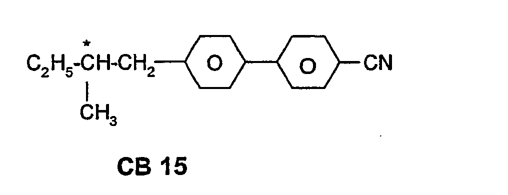 |
| 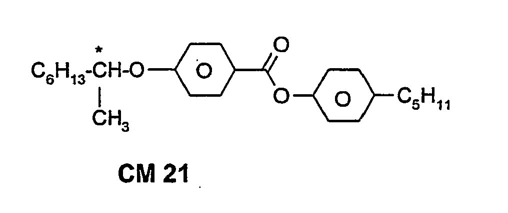 |
| 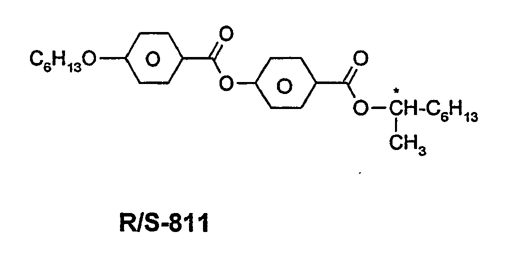 |
| 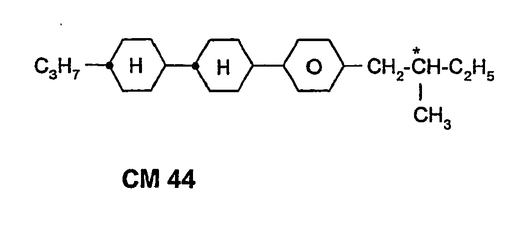 |
| 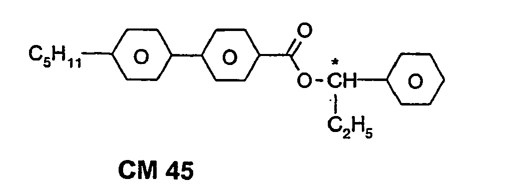 |
| 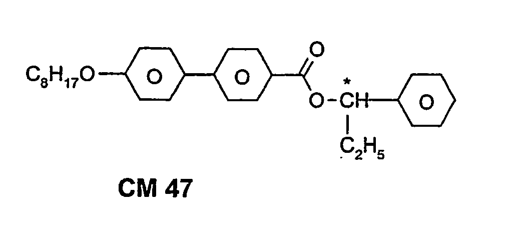 |
| 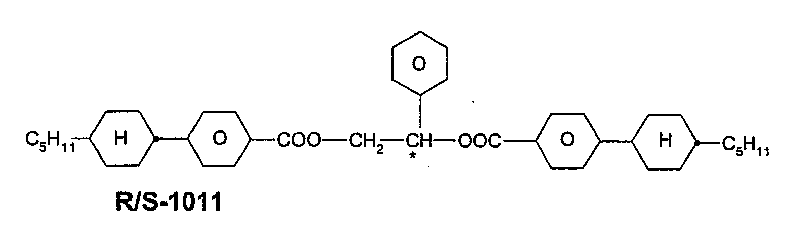 |
| 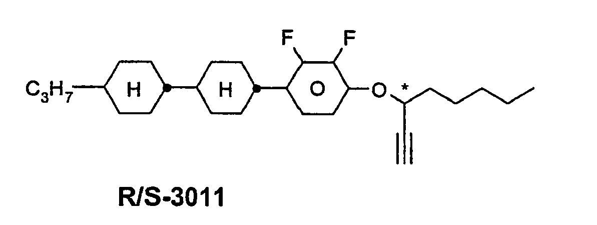 |
| 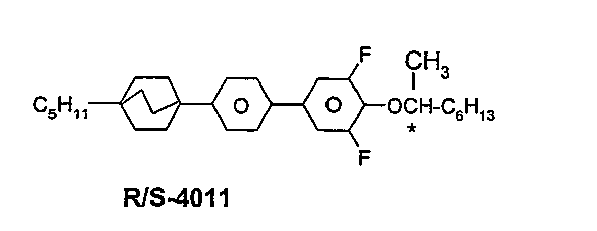 |
| 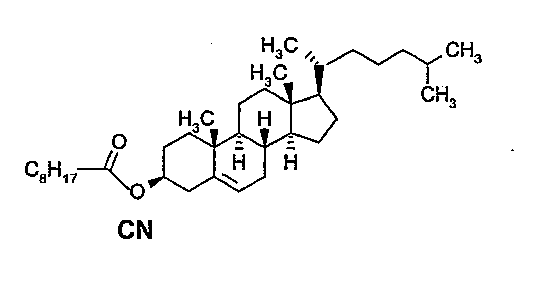 |
| 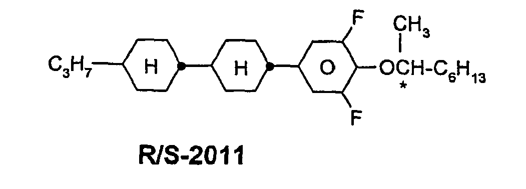 |
| 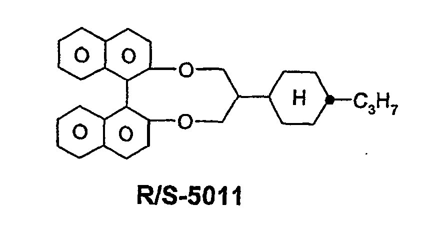 |

**Tabelle D**

| |
|---|
| Stabilisatoren, die beispielsweise den erfindungsgemäßen Mischungen zugesetzt werden können, werden nachfolgend genannt. |
| 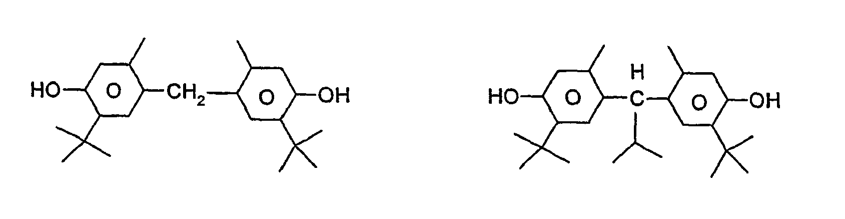 |
| 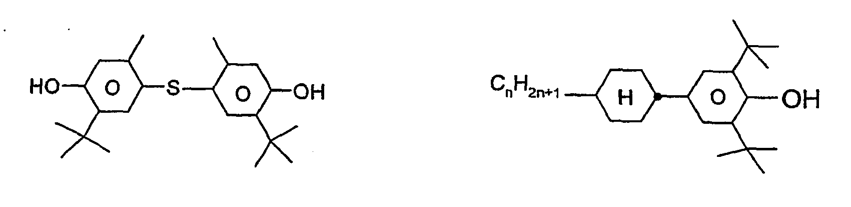 |
| 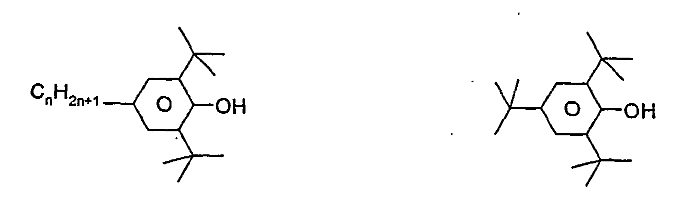 |
| 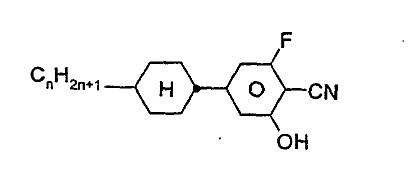 |
| 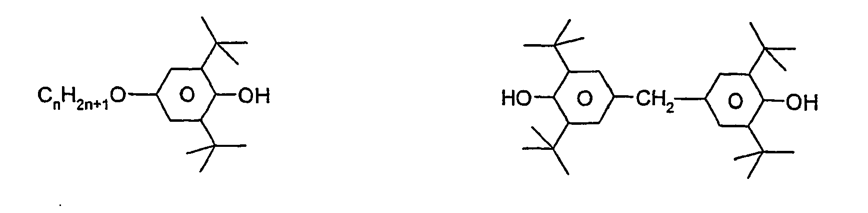 |
| 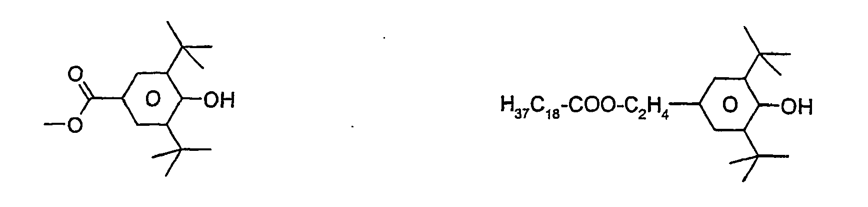 |
| 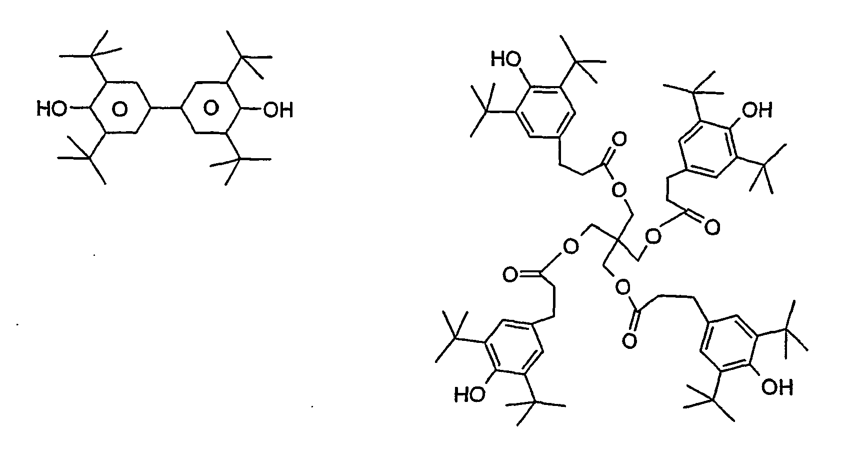 |
| 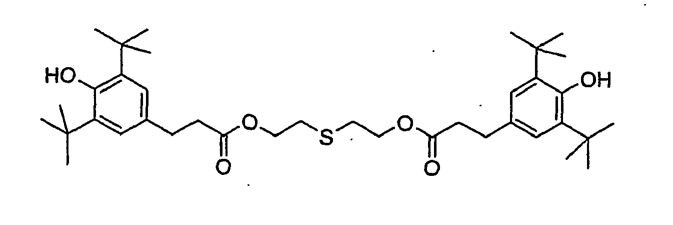 |
| 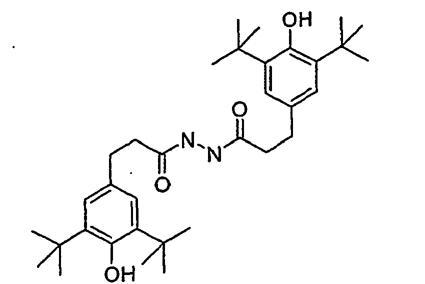 |
| 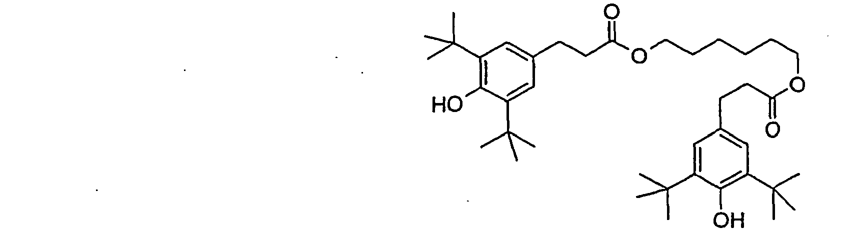 |
| 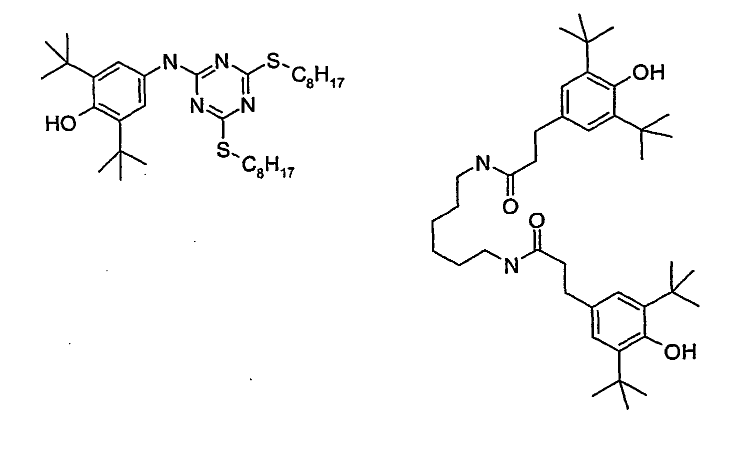 |
| 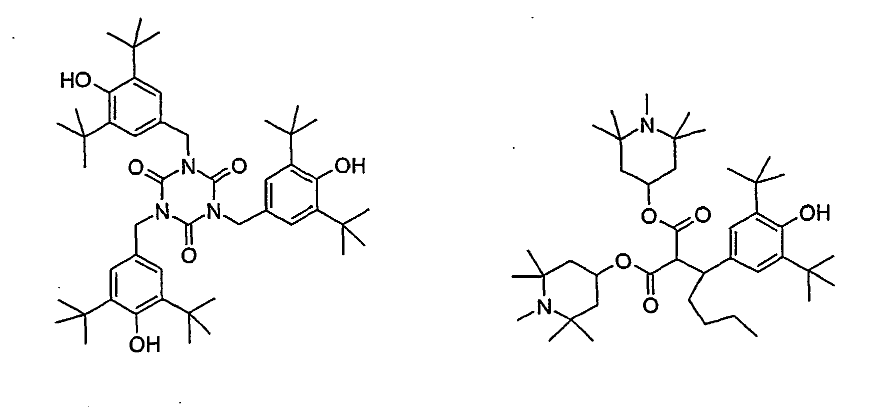 |
| 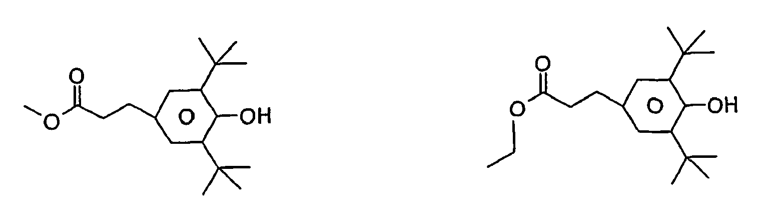 |
| 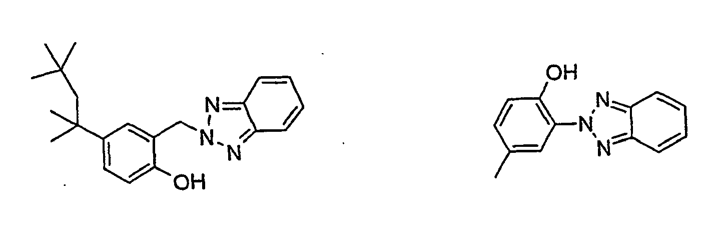 |
| 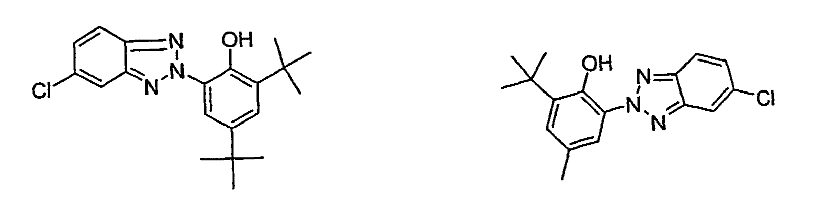 |
| 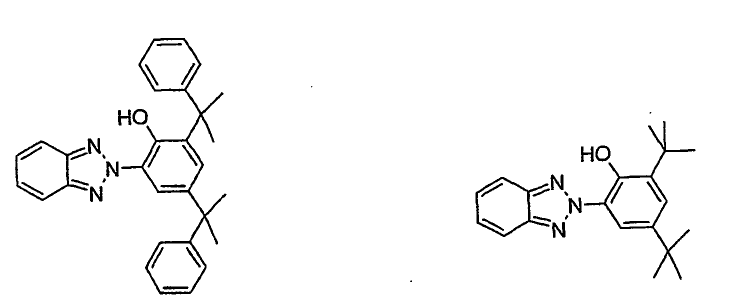 |
| 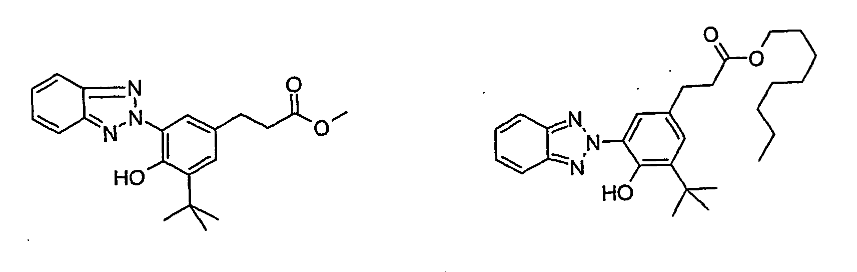 |
| 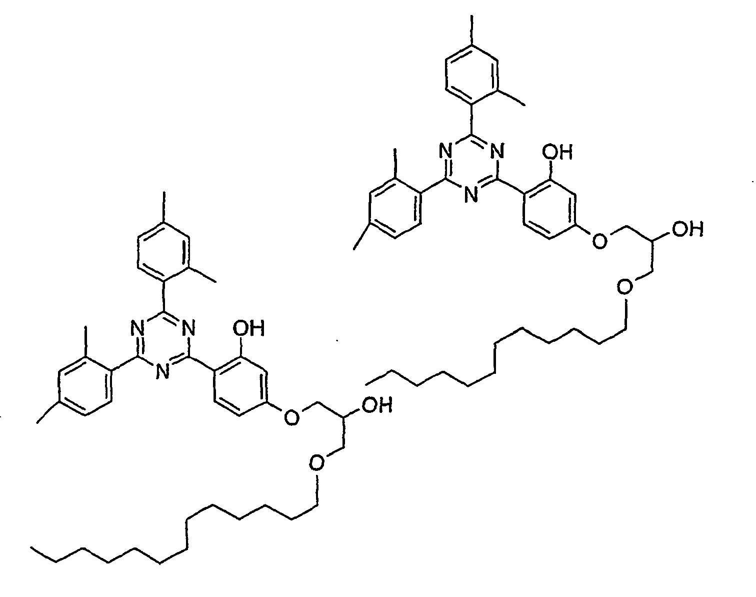 |
| 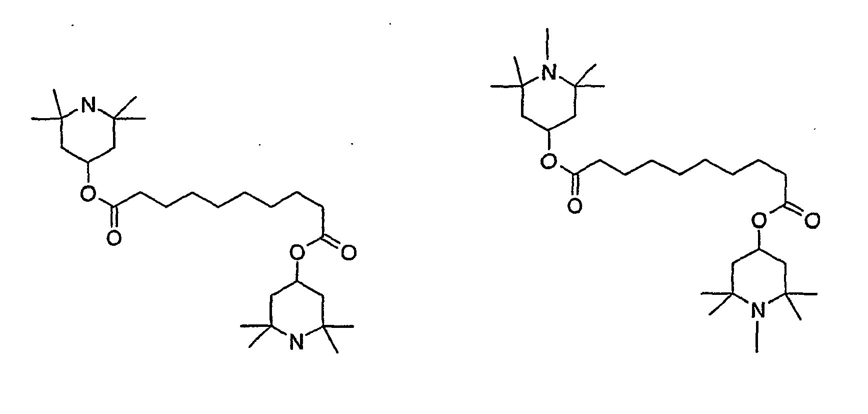 |

Die folgenden Beispiele sollen die Erfindung erläutern, ohne sie zu begrenzen. Vor- und nachstehend bedeuten Prozentangaben Gewichtsprozent. Alle Temperaturen sind in Grad Celsius angegeben. Fp. bedeutet Schmelzpunkt, Kp. Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Δn bedeutet optische Anisotropie (589 nm, 20 °C), Δε die dielektrische Anisotropie (1 kHz, 20 °C). Die Fließviskosität ν₂₀ (mm²/sec) wird bei 20 °C bestimmt. Die Rotationsviskosität γ₁ (mPa·s) wird ebenfalls bei 20 °C bestimmt.

**Beispiel M1**

| | | | |
|---|---|---|---|
| PUQU-2-F | 3,00 % | Klärpunkt [°C]: | 70,1 |
| PCH-7F | 5,00 % | Δn [589 nm, 20 °C]: | 0,0832 |
| CCP-2F.F.F | 12,00 % | Δε [1kHz, 20 °C]: | 8,7 |
| CCP-1F.F.F | 7,50 % | ν [mm²s⁻¹, 20 °C]. | 17,3 |
| CCP-30CF₃ | 8,00 % | | |
| CCP-4F.F.F | 10,00 % | | |
| CGUQU-2-F | 10,50 % | | |
| CCH-34 | 5,00 % | | |
| CPUQU-3-F | 10,00 % | | |
| CC-5-V | 15,00 % | | |
| CC-3-V1 | 8,00 % | | |
| CCP-20CF₃ | 5,00 % | | |
| CCG-V-F | 1,00 % | | |

**Beispiel M2**

| | | | |
|---|---|---|---|
| CC-3-V | 15,00 % | Klärpunkt [°C]: | 80,0 |
| CCZU-2-F | 4,00 % | Δn [589 nm, 20 °C]: | 0,0899 |
| CCZU-3-F | 14,00 % | Δε [1kHz, 20 °C]: | 10,9 |
| CGZP-2-OT | 10,00 % | ν [mm²s⁻¹, 20 °C]. | 19,1 |
| CDU-2-F | 7,00 % | | |
| CDU-3-F | 8,00 % | | |
| CDU-5-F | 7,00 % | | |
| PGU-2-F | 1,00 % | | |
| CCH-35 | 4,00 % | | |
| CGU-2-F | 2,50 % | | |
| CC-3-V1 | 7,50 % | | |
| CPUQU-3-F | 10,00 % | | |
| CPUQU-2-F | 10,00 % | | |

**Beispiel M3**

| | | | |
|---|---|---|---|
| CC-3-V | 16,00 % | Klärpunkt [°C]: | 82,0 |
| CC-3-V1 | 9,00 % | Δn [589 nm, 20 °C]: | 0,0895 |
| CCH-35 | 4,00 % | Δε [1kHz, 20 °C]: | 11,0 |
| CC-5-V | 2,50 % | ν [mm²s⁻¹, 20 °C]. | 18,3 |
| CCZU-2-F | 4,00 % | | |
| CCZU-3-F | 10,00 % | | |
| CGZP-2-OT | 10,00 % | | |
| CGZP-3-OT | 8,00 % | | |
| CDU-2-F | 7,00 % | | |
| CDU-3-F | 8,00 % | | |
| CDU-5-F | 1,50 % | | |
| CGUQU-2-F | 10,00 % | | |
| CGUQU-3-F | 10,00 % | | |

**Vergleichsbeispiel (S. 24 der EP 1 046 694)**

| | | | |
|---|---|---|---|
| PUQU-2-F | 9,00 % | Klärpunkt [°C]: | 72,1 |
| PUQU-3-F | 9,00 % | Δn [589 nm, 20 °C]: | 0,0841 |
| PCH-7F.F.F | 6,00 % | Δε [1kHz, 20 °C]: | 8,2 |
| CECU-3-F | 9,00 % | ν [mm²s⁻¹, 20 °C]. | 21,6 |
| CECU-4-F | 9,00 % | | |
| CECU-5-F | 9,00 % | | |
| CCP-3F.F.F | 7,00 % | | |
| CCP-4F.F.F | 5,00 % | | |
| CCEU-3-F | 4,00 % | | |
| CCPU-3-F | 3,00 % | | |
| PCH-302 | 3,00 % | | |
| CCH-34 | 10,00 % | | |
| CCH-35 | 5,00 % | | |
| CCP-31 | 2,00 % | | |
| CCP-4Cl | 4,00 % | | |
| CCCU-2-F | 2,00 % | | |
| CCCU-3-F | 2,00 % | | |
| CCCU-4-F | 2,00 % | | |

**Beispiel M4**

| | | | |
|---|---|---|---|
| CCP-20CF₃ | 3,00 % | S → N [°C]: | < -40,0 |
| CCP-30CF₃ | 7,00 % | Klärpunkt [°C]: | +83,5 |
| CCP-40CF₃ | 3,00 % | Δn [589,3 nm, 20 °C]: | 0,0805 |
| CCZU-2-F | 4,00 % | γ₁ [mPa·s, 20 °C]: | 89 |
| CCZU-3-F | 13,00 % | d ·Δn [20 °C, µm]: | 0,50 |
| CGZP-2-OT | 8,00 % | Twist [°C]: | 90 |
| CDU-2-F | 9,00 % | V₁₀ [V]: | 1,30 |
| CDU-3-F | 6,00 % | | |
| CC-3-V1 | 12,00 % | | |
| CC-3-V | 18,00 % | | |
| CCH-35 | 4,00 % | | |
| CGUQU-2-F | 10,00 % | | |
| CGUQU-3-F | 3,00 % | | |

**Beispiel M5**

| | | | |
|---|---|---|---|
| CCP-20CF₃ | 7,00 % | S → N [°C]: | < -40,0 |
| CCP-30CF₃ | 4,00 % | Klärpunkt [°C]: | +80,5 |
| CCP-2F.F.F | 3,00 % | Δn [589,3 nm, 20 °C]: | 0,0800 |
| CCZU-2-F | 4,00 % | γ₁ [mPa·s, 20 °C]: | 90 |
| CCZU-3-F | 13,00 % | d ·Δn [20 °C, µm]: | 0,50 |
| CGZP-2-OT | 6,00 % | Twist [°C]: | 90 |
| CDU-2-F | 7,00 % | V₁₀ [V]: | 1,28 |
| CDU-3-F | 7,00 % | | |
| CC-3-V1 | 11,00 % | | |
| CC-3-V | 18,00 % | | |
| CCH-35 | 5,00 % | | |
| CGUQU-2-F | 10,00 % | | |
| CGUQU-3-F | 5,00 % | | |

**Beispiel M6**

| | | | |
|---|---|---|---|
| CC-5-V | 8,00 % | S → N [°C]: | < -30,0 |
| CC-3-V1 | 11,00 % | Klärpunkt [°C]: | +85,0 |
| CCH-35 | 5,00 % | Δn [589,3 nm, 20 °C]: | 0,0960 |
| CCP-1 F.F.F | 10,00 % | γ₁ [mPa·s, 20 °C]: | 128 |
| CCP-2F.F.F | 9,00 % | d ·Δn [20 °C, µm]: | 0,50 |
| CCP-3F.F.F | 2,00 % | Twist [°C]: | 90 |
| CCP-30CF₃.F | 5,00 % | V₁₀ [V]: | 1,28 |
| CCP-20CF₃ | 2,00 % | | |
| CCP-30CF₃ | 8,00 % | | |
| CCP-40CF₃ | 6,00 % | | |
| CGU-3-F | 5,00 % | | |
| PGU-2-F | 6,00 % | | |
| CCP-V-1 | 3,00 % | | |
| CGUQU-2-OT | 10,00 % | | |
| CGUQU-3-OT | 10,00 % | | |

**Beispiel M7**

| | | | |
|---|---|---|---|
| CCP-20CF₃ | 3,00 % | S → N [°C]: | < -40,0 |
| CCP-30CF₃ | 7,00 % | Klärpunkt [°C]: | 77,5 |
| CCP-40CF₃ | 3,00 % | Δn [589,3 nm, 20 °C]: | 0,0813 |
| CCZU-2-F | 4,00 % | γ₁ [mPa·s, 20 °C]: | 86 |
| CCZU-3-F | 13,00 % | d ·Δn [20 °C, µm]: | 0,50 |
| AUUQU-2-F | 8,00 % | Twist [°C]: | 90 |
| CDU-2-F | 9,00 % | V₁₀ [V]: | 1,39 |
| CDU-3-F | 6,00 % | | |
| CC-3-V1 | 12,00 % | | |
| CC-3-V | 18,00 % | | |
| CCH-35 | 4,00 % | | |
| CGUQU-2-F | 8,00 % | | |
| AGUQU-2-F | 5,00 % | | |

**Beispiel M8**

| | | | |
|---|---|---|---|
| CC-5-V | 8,00 % | S → N [°C]: | < -40,0 |
| CC-3-V1 | 11,00 % | Klärpunkt [°C]: | +85,5 |
| CCH-35 | 5,00 % | Δn [589,3 nm, 20 °C]: | 0,0952 |
| ACQU-1-F | 10,00 % | γ₁ [mPa·s, 20 °C]: | 126 |
| ACQU-2-F | 9,00 % | d ·Δn [20 °C, µm]: | 0,50 |
| ACQU-3-F | 2,00 % | Twist [°C]: | 90 |
| CCP-30CF₃.F | 5,00 % | V₁₀ [V]: | 1,21 |
| CCP-20CF₃ | 2,00 % | | |
| CCP-30CF₃ | 8,00 % | | |
| CCP-40CF₃ | 6,00 % | | |
| CGU-3-F | 5,00 % | | |
| PGU-2-F | 6,00 % | | |
| CCP-V-1 | 3,00 % | | |
| CGUQU-2-OT | 10,00 % | | |
| CGUQU-3-OT | 10,00 % | | |

## Patentansprüche

1. Flüssigkristallines Medium auf der Basis eines Gemisches von polaren Verbindungen mit positiver dielektrischer Anisotropie, **dadurch gekennzeichnet, dass** es eine oder mehrere Verbindungen der Formel I, 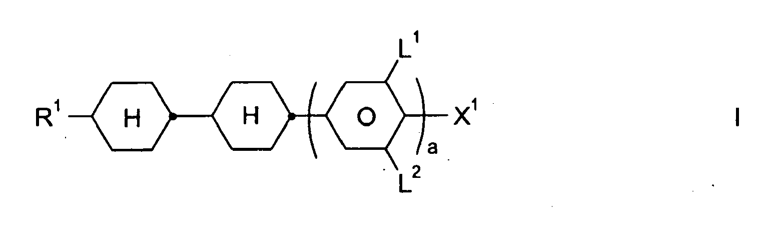 eine oder mehrere Verbindungen der Formel IA, 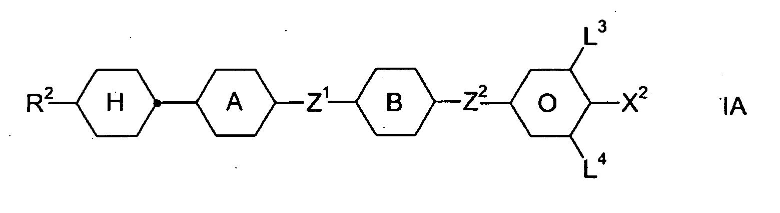 und
zusätzlich eine oder mehrere Verbindungen ausgewählt aus der Gruppe bestehend aus den allgemeinen Formeln II bis VI: 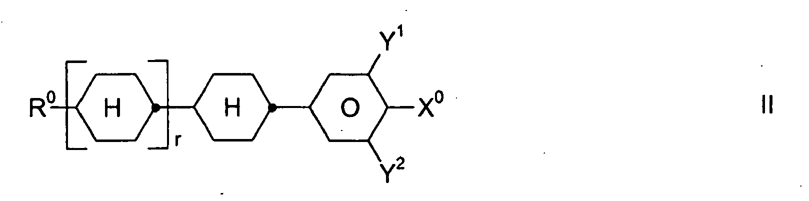 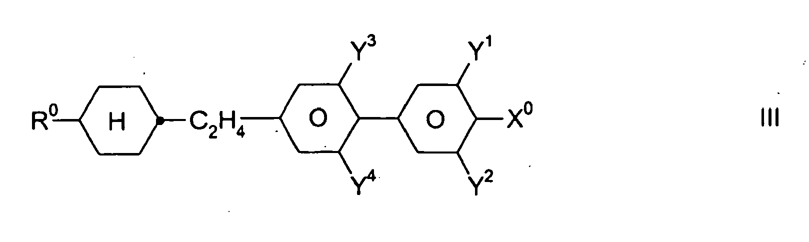 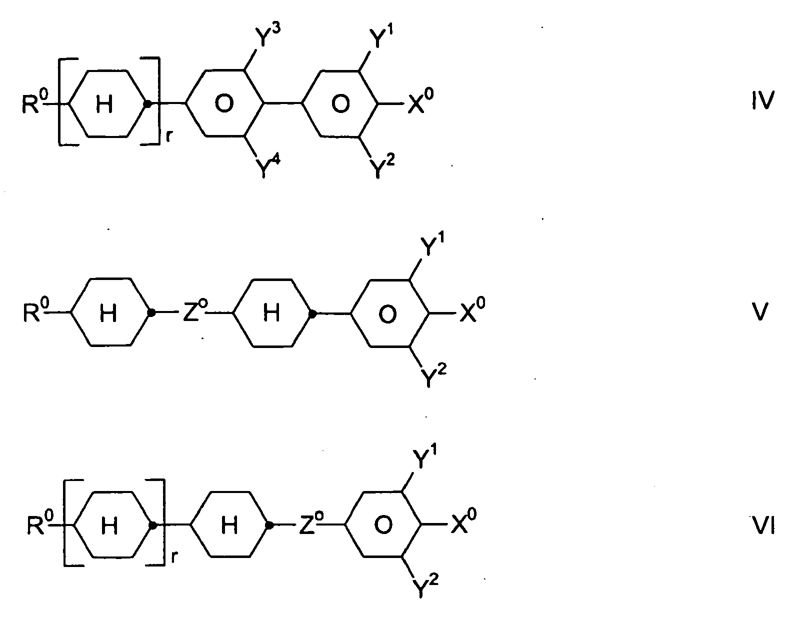 enthält,
wobei die Verbindung der Formel II nicht mit der Formel I identisch ist,
wobei der Anteil der Verbindungen der Formel I im Medium mindestens 22 Gew.% beträgt und
wobei der Anteil an Verbindungen der Formeln II bis VI im Gesamtgemisch 30 bis 80 Gew. % beträgt,
worin die einzelnen Reste folgende Bedeutungen besitzen:
R¹ einen Alkenylrest mit 2 bis 8 C-Atomen,
R² H, einen halogenierten, durch CN oder CF₃ substituierten oder unsubstituierten Alkylrest mit 1 bis 15 C-Atomen, wobei in diesen Resten auch eine oder mehrere CH₂-Gruppen jeweils unabhängig voneinander durch -C≡C-, -CO-, -CH=CH-, -O-, 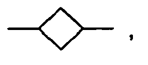 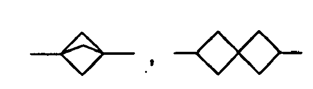 so ersetzt sein können, dass O-Atome nicht direkt miteinander verknüpft sind,
X¹ Alkylrest, Alkenylrest, Alkoxyrest oder Alkenyloxyrest mit jeweils bis zu 6 C-Atomen, im Fall a = 1 auch F, Cl, CN, SF₅, SCN, NCS, OCN,
X² F, CI, CN, SF₅, SCN, NCS, OCN, halogenierter Alkylrest, halogenierter Alkenylrest, halogenierter Alkoxyrest oder halogenierter Alkenyloxyrest mit jeweils bis zu 6 C-Atomen,
Z¹ und Z² jeweils unabhängig voneinander -CF₂O-, -OCF₂- oder eine Einfachbindung, wobei Z¹ ≠ Z² ist,
a 0 oder 1, 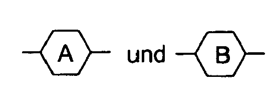
jeweils unabhängig voneinander 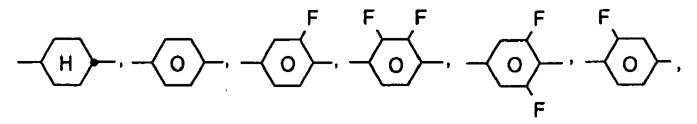 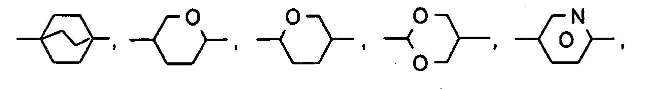 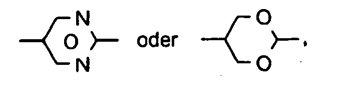
L¹⁻⁴ jeweils unabhängig voneinander H oder F,
R⁰ H, n-Alkyl, Alkoxy, Oxaalkyl, Fluoralkyl, Alkenyloxy oder Alkenyl mit jeweils bis zu 9 C-Atomen,
X⁰ F, CL, halogeniertes Alkyl, Alkenyl, Alkenyloxy oder Alkoxy mit bis zu 6 C-Atomen,
Z⁰ -C₂F₄-, -CF=CF-, -CH=CF-, -CF=CH-, -CH=CH-, -O(CH₂)₃-, -(CH₂)₃O-, -C₂H₄-, -(CH₂)₄-, -CF₂O-, -OCF₂-, -OCH₂- oder -CH₂O-,
Y¹⁻⁴ jeweils unabhängig voneinander H oder F, und
r 0 oder 1.

2. Flüssigkristallines Medium nach Anspruch 1, **dadurch gekennzeichnet, dass** es ein, zwei oder mehr Verbindungen der Formeln IA-1- bis IA-30, 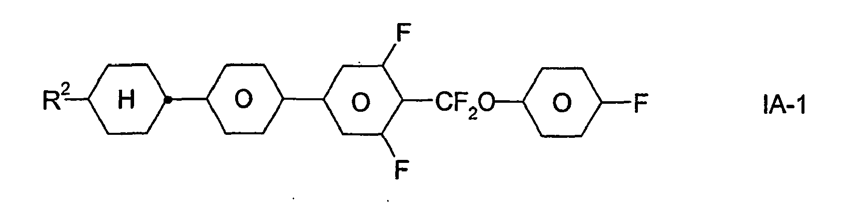 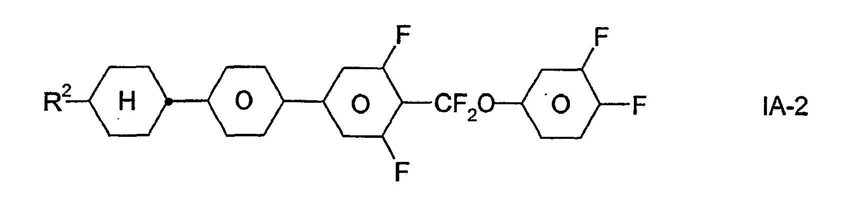 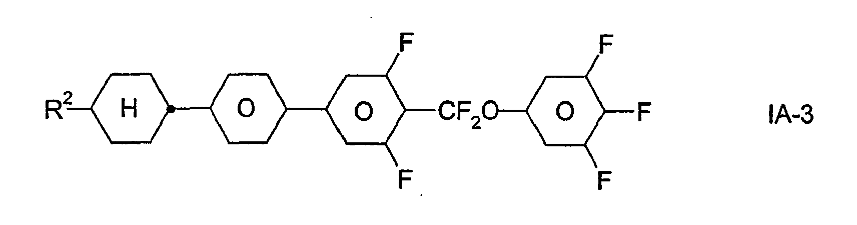 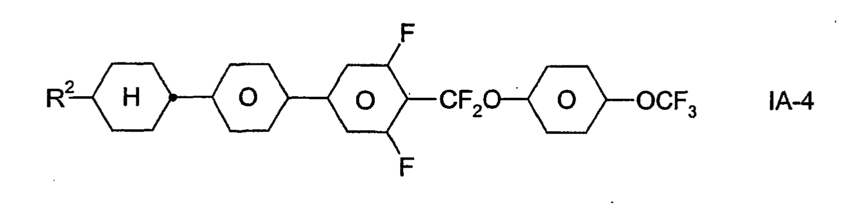 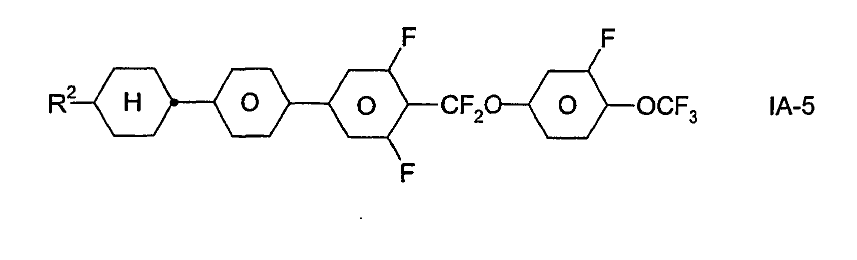 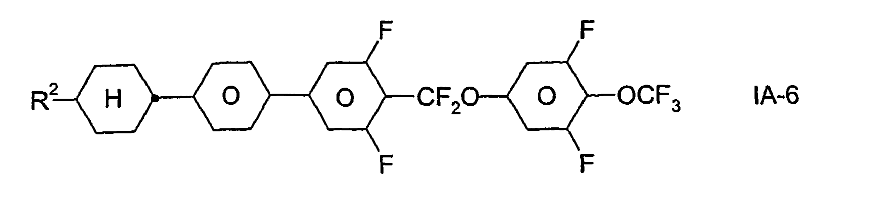 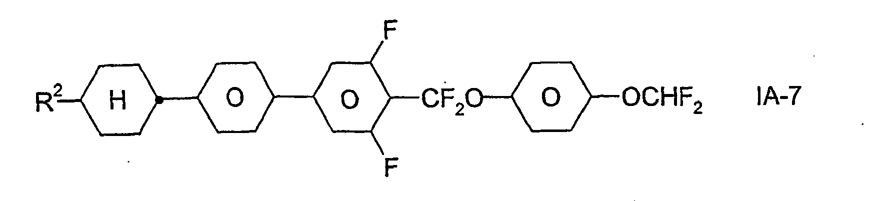 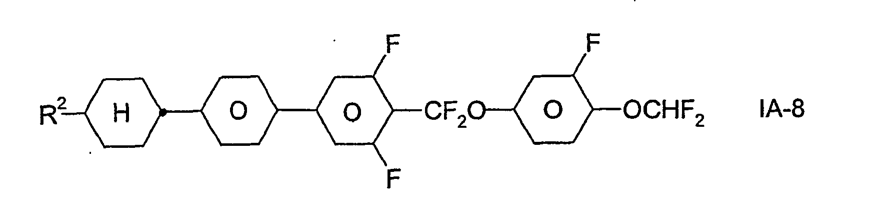 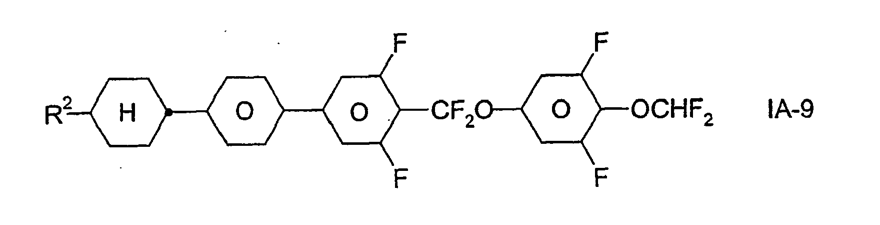 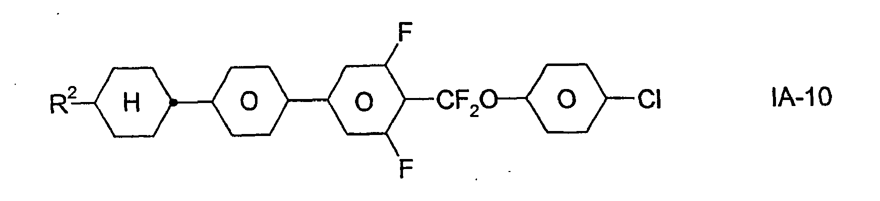 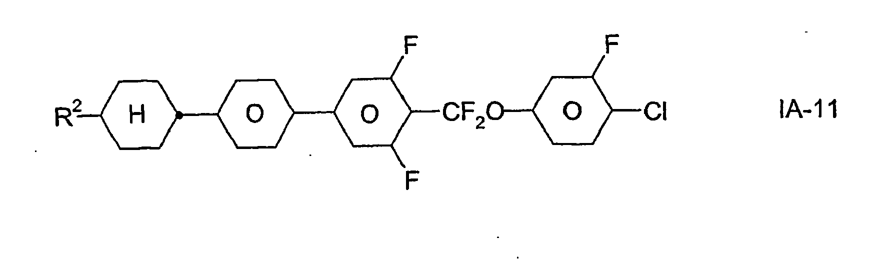 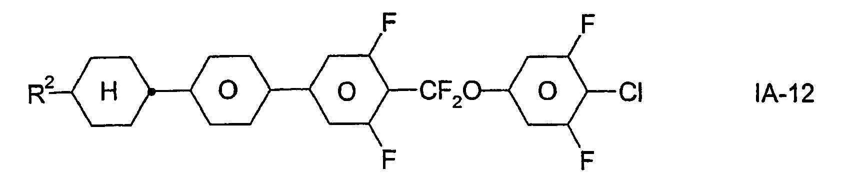 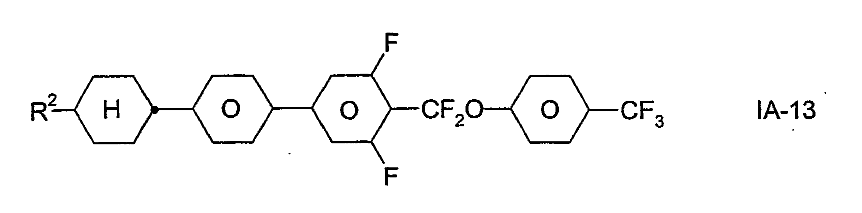 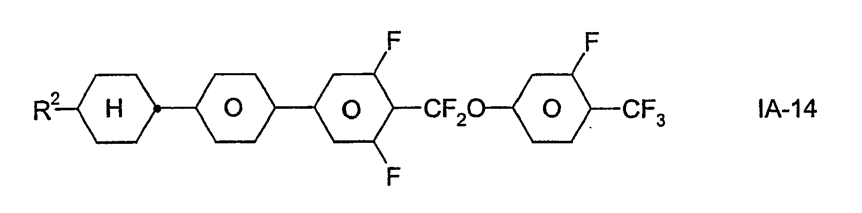 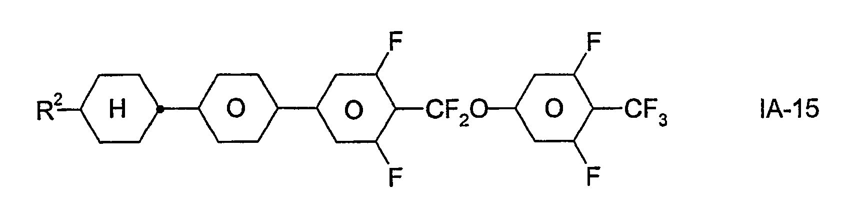 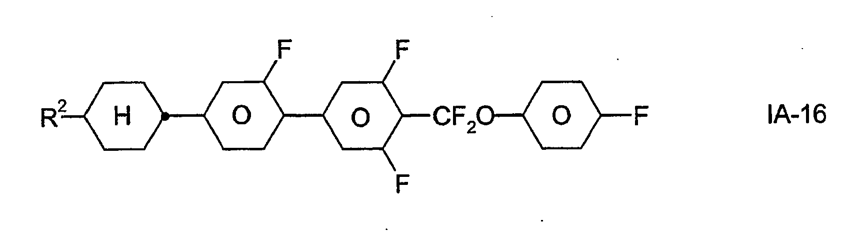 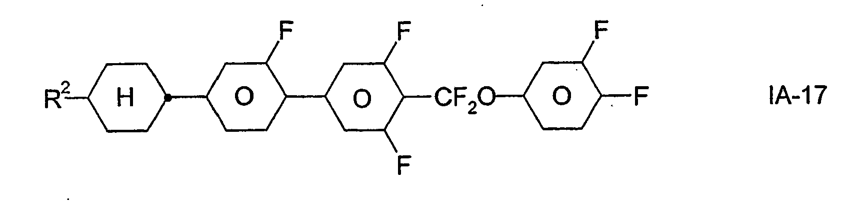 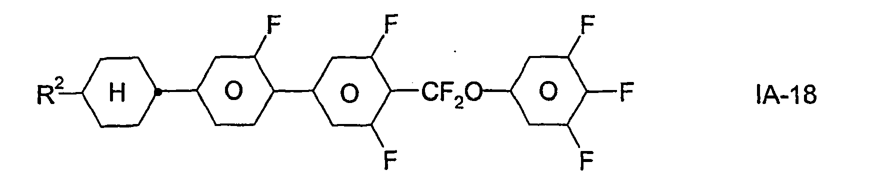 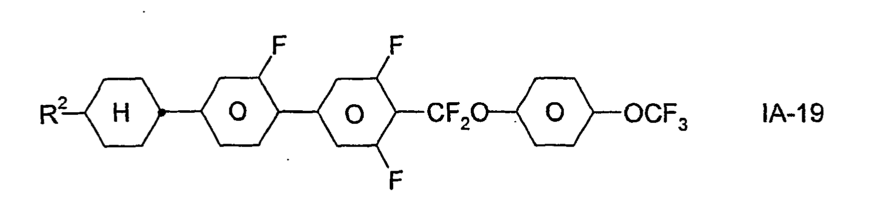 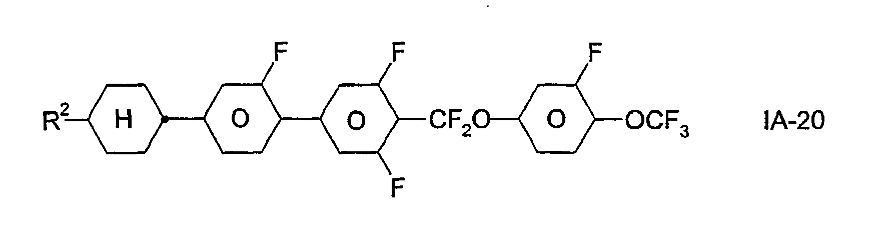 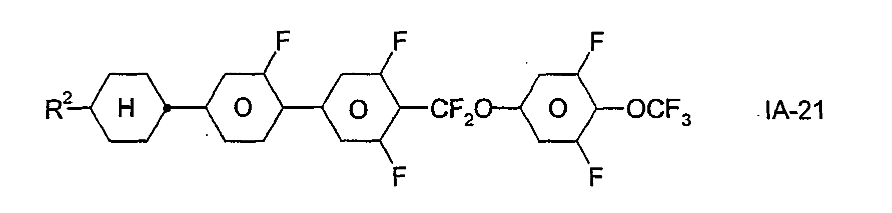 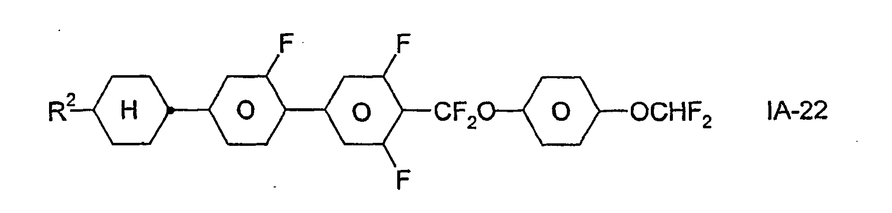 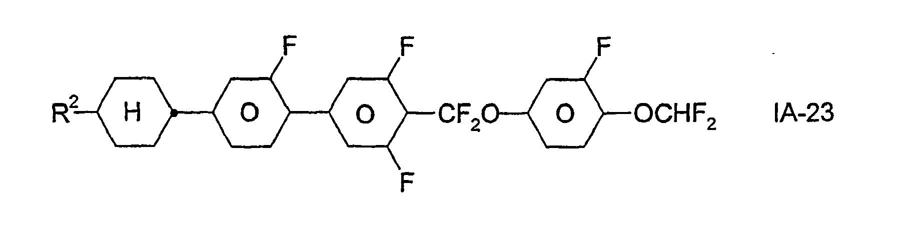 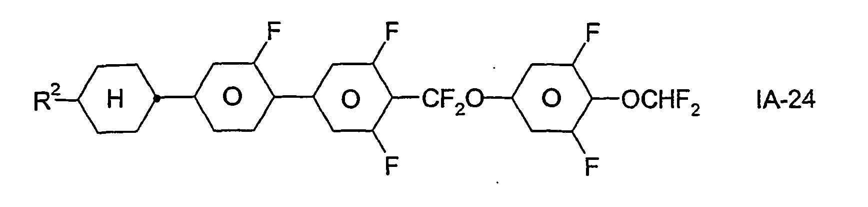 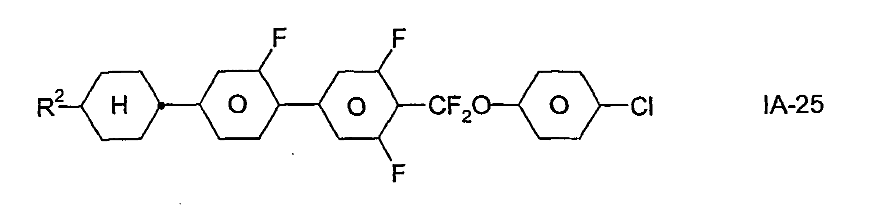 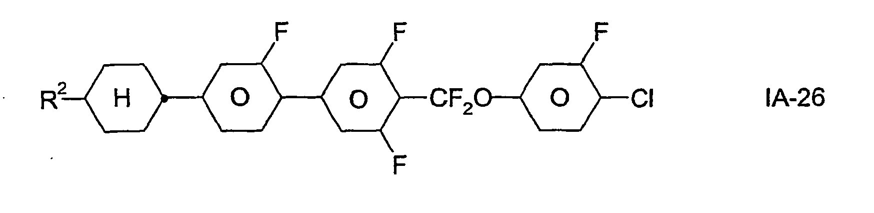 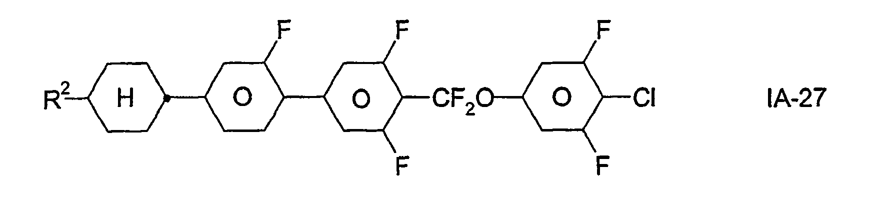 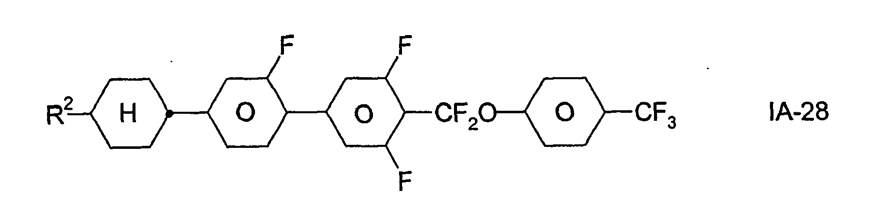 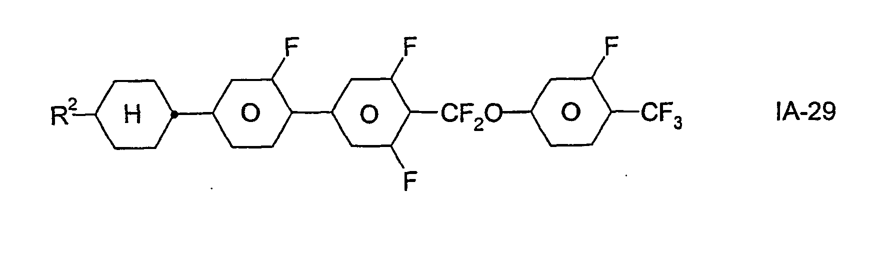 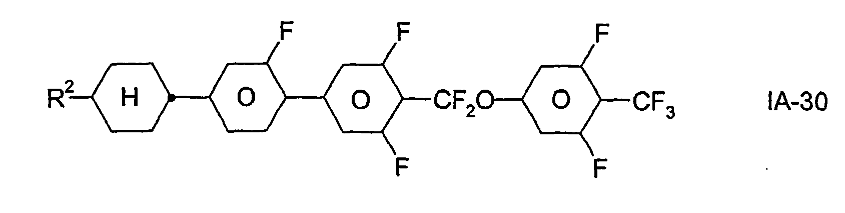 worin R² die in Anspruch 1 angegebenen Bedeutungen hat,
enthält.

3. Flüssigkristallines Medium nach Anspruch 1 oder 2, **dadurch gekennzeichnet, dass** es eine oder mehrere Verbindungen der Formeln I-1 bis I-5: 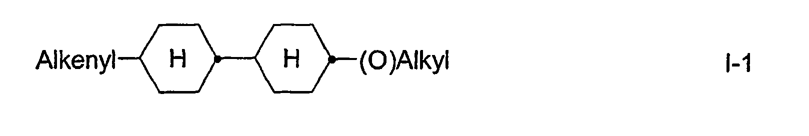 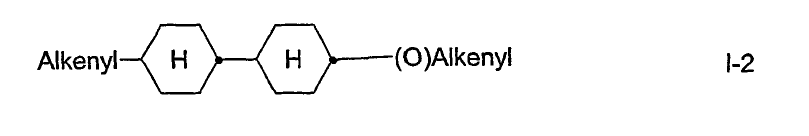 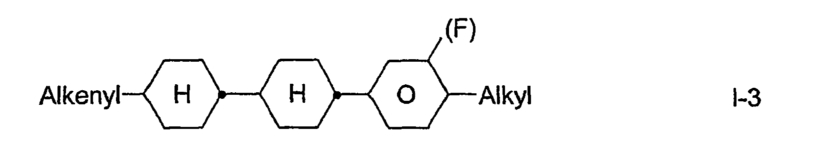 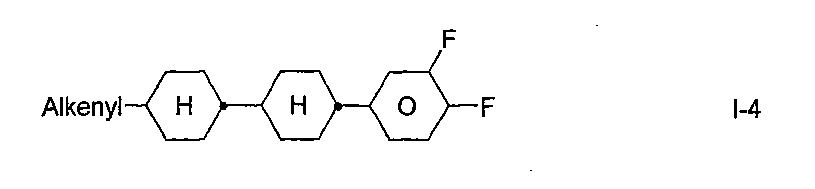 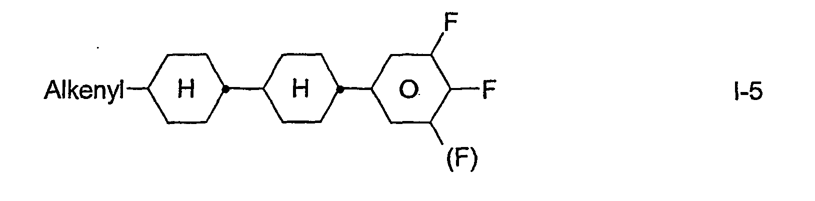 worin Alkenyl ein Alkenylrest mit 2 bis 8 C-Atomen und Alkyl ein geradkettiger Alkylrest mit 1-15 C-Atomen
bedeutet,
enthält.

4. Flüssigkristallines Medium nach Anspruch 1, **dadurch gekennzeichnet, dass** der Anteil an Verbindungen der Formeln IA und I bis VI zusammen im Gesamtgemisch mindestens 50 Gew.% beträgt.

5. Flüssigkristallines Medium nach einem der Ansprüche 1 bis 4, **dadurch gekennzeichnet, dass** es zusätzlich eine oder mehrere Verbindungen der Formeln Ea bis Ef, 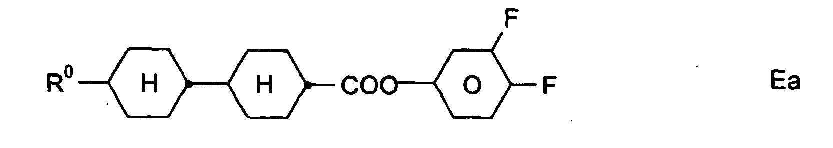 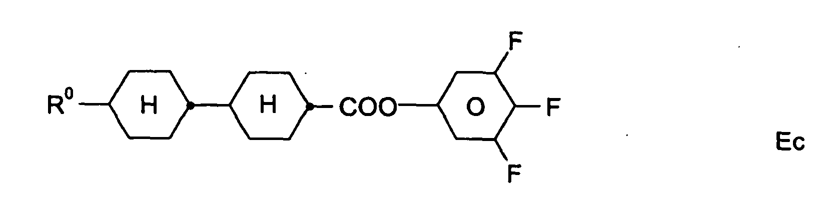 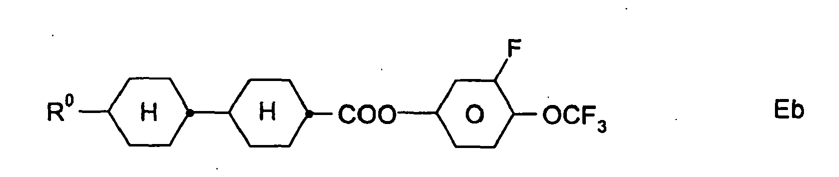 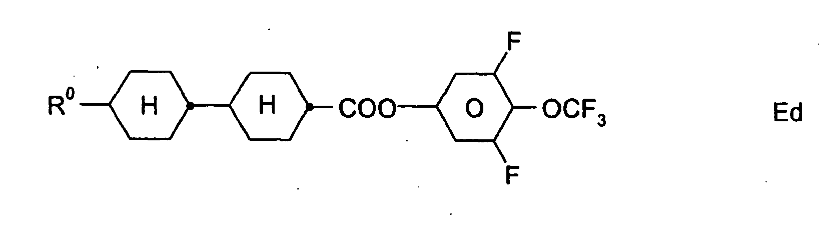 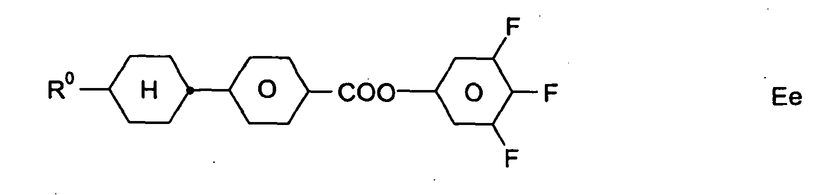 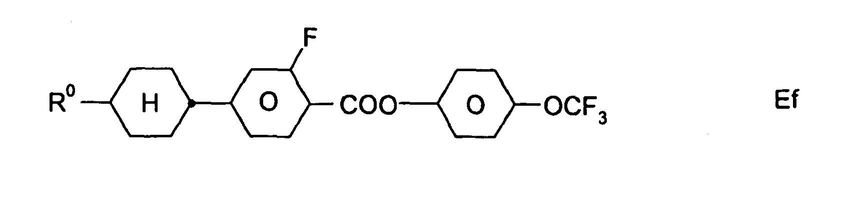 worin R⁰ die in Anspruch 1 angegebene Bedeutung hat,
enthält.

6. Flüssigkristallines Medium nach einem der Ansprüche 1 bis 5, **dadurch gekennzeichnet, dass** es eine oder mehrere Verbindungen der Formeln IIa bis IIg, 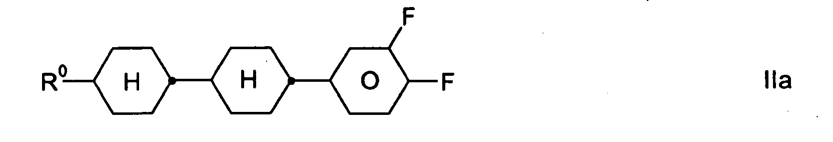 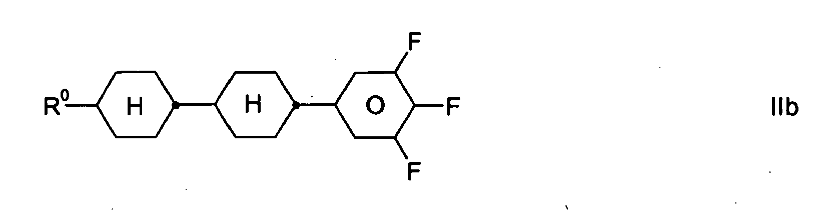 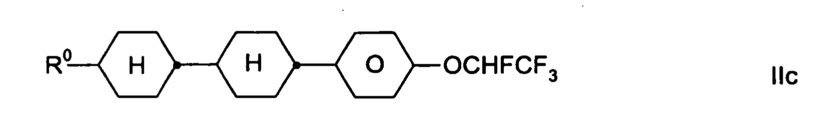 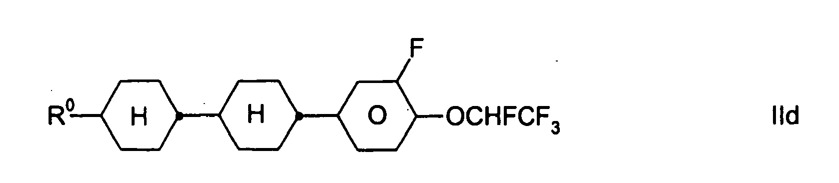 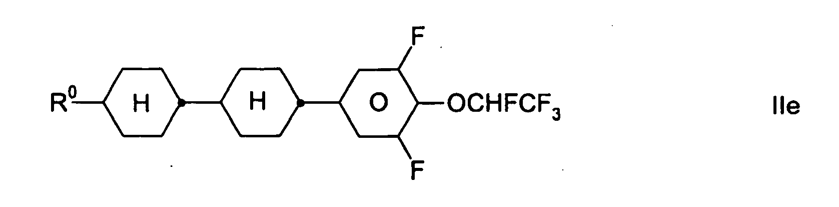 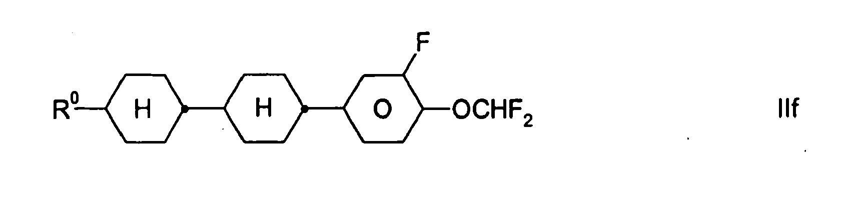 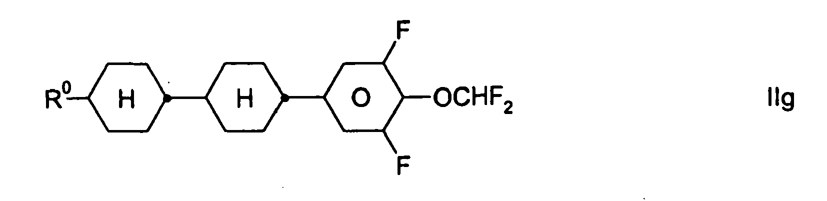 worin R⁰ die in Anspruch 1 angegebene Bedeutung hat,
enthält.

7. Flüssigkristallines Medium nach einem der Ansprüche 1 bis 6, **dadurch gekennzeichnet, dass** es zusätzlich eine oder mehrere Verbindungen der RI bis RVII, 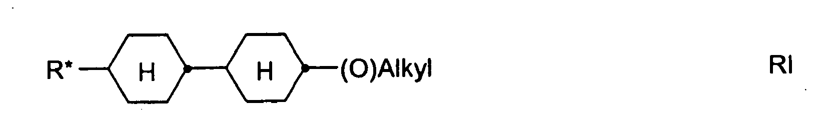 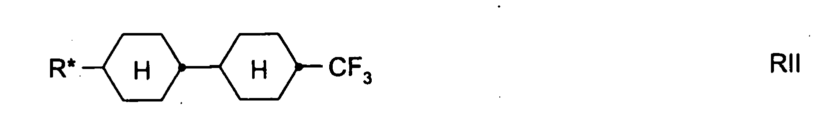 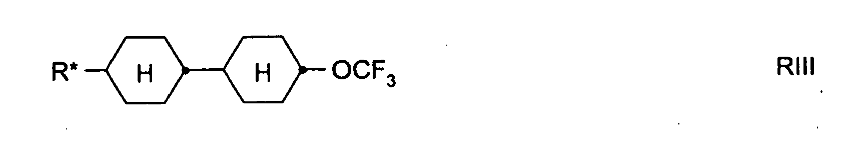 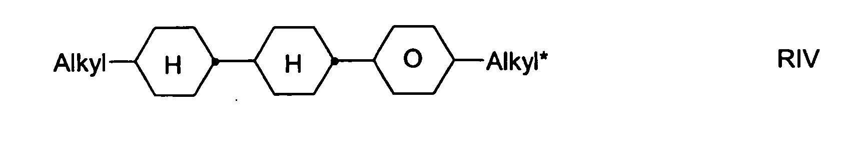 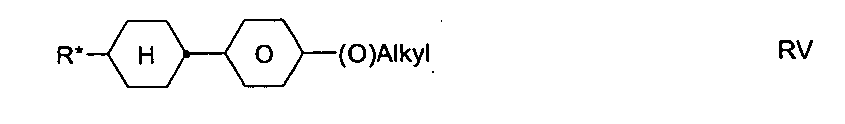 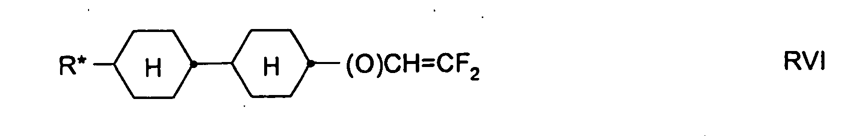 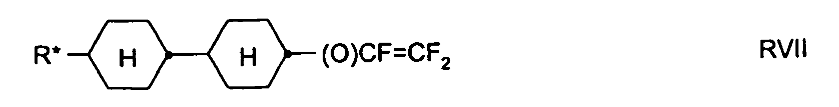 worin
R* n-Alkyl, Alkoxy, Oxaalkyl, Fluoralkyl oder Alkenyloxy mit jeweils bis zu 9 C-Atomen, und
Alkyl oder Alkyl* jeweils unabhängig voneinander ein geradkettiger oder verzweigter Alkylrest mit 1-9 C-Atomen,
bedeuten,
enthält.

8. Flüssigkristallines Medium nach einem der Ansprüche 1 bis 7, **dadurch gekennzeichnet, dass** der Anteil an Verbindungen der Formel IA im Gesamtgemisch 5 bis 40 Gew.% beträgt.

9. Verwendung des flüssigkristallinen Mediums nach Anspruch 1 für elektrooptische Zwecke.

10. Elektrooptische Flüssigkristallanzeige enthaltend ein flüssigkristallines Medium nach Anspruch 1.

## Claims

1. Liquid-crystalline medium based on a mixture of polar compounds of positive dielectric anisotropy, **characterised in that** it comprises one or more compounds of the formula I 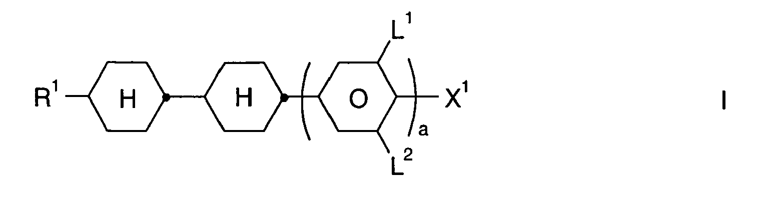 one or more compounds of the formula IA 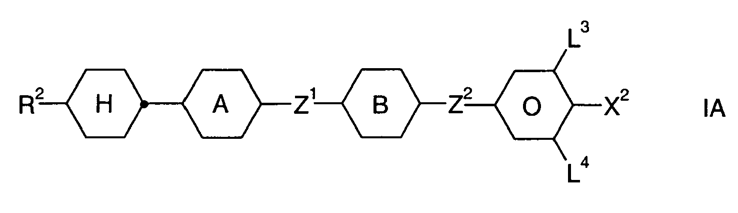 and
additionally one or more compounds selected from the group consisting of the general formulae II to VI: 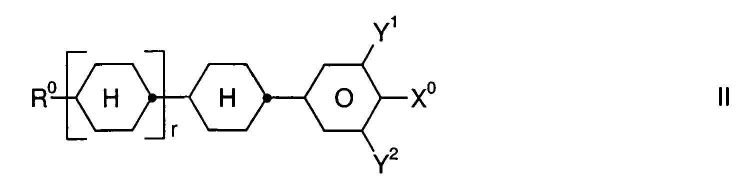 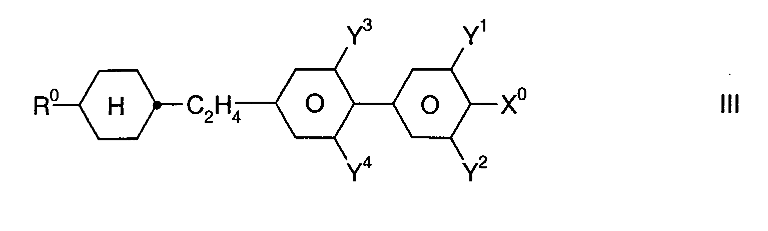 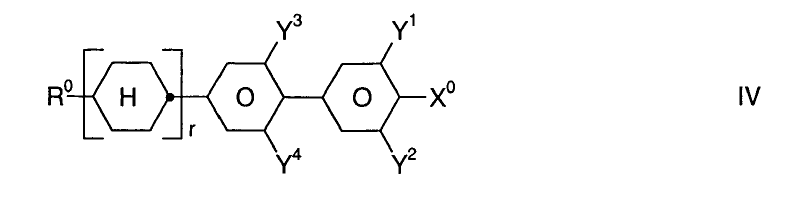 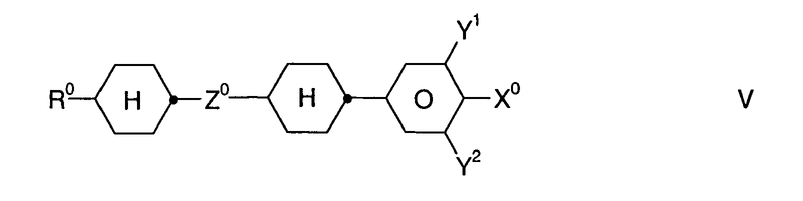 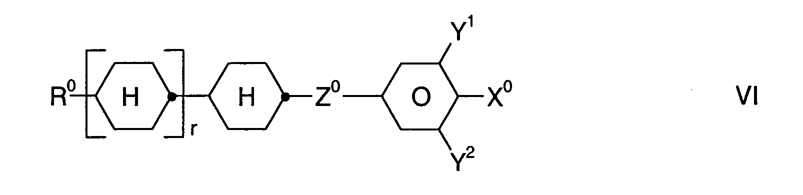 where the compound of the formula II is not identical with the compound of the formula I,
where the proportion of the compounds of the formula I in the medium is at least 22% by weight and
where the proportion of compounds of the formulae II to VI in the mixture as a whole is 30 to 80% by weight,
in which the individual radicals have the following meanings:
R¹ denotes an alkenyl radical having 2 to 8 C atoms,
R² denotes H, an alkyl radical having 1 to 15 C atoms which is halogenated, substituted by CN or CF₃ or un-substituted, where, in addition, one or more CH₂ groups in these radicals may each be replaced, independently of one another, by -C≡C-, -CO-, -CH=CH-, -O-, 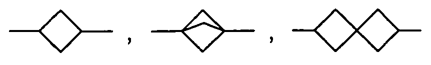 in such a way that O atoms are not linked directly to one another,
X¹ denotes an alkyl radical, alkenyl radical, alkoxy radical or alkenyloxy radical, each having up to 6 C atoms, in the case where a = 1 also F, Cl, CN, SF₅, SCN, NCS, OCN,
X² denotes F, Cl, CN, SF₅, SCN, NCS, OCN, a halogenated alkyl radical, halogenated alkenyl radical, halogenated alkoxy radical or halogenated alkenyloxy radical, each having up to 6 C atoms,
Z¹ and Z² each, independently of one another, denote -CF₂O-, -OCF₂- or a single bond, where Z¹ ≠ Z²,
a denotes 0 or 1, 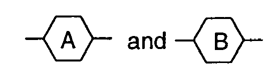
each, independently of one another, denote 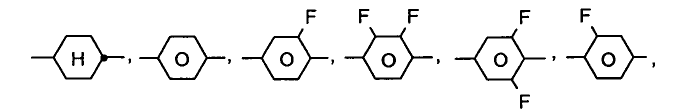 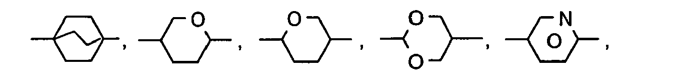 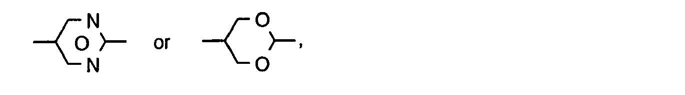
L¹⁻⁴ each, independently of one another, denote H or F,
R⁰ denotes H, n-alkyl, alkoxy, oxaalkyl, fluoroalkyl, alkenyloxy or alkenyl, each having up to 9 C atoms,
X⁰ denotes F, Cl, halogenated alkyl, alkenyl, alkenyloxy or alkoxy having up to 6 C atoms,
Z⁰ denotes -C₂F₄-, -CF=CF-, -CH=CF-, -CF=CH-, -CH=CH-, -O(CH₂)₃-, -(CH₂)₃O-, -C₂H₄-, -(CH₂)₄-, -CF₂O-, -OCF₂-, -OCH₂- or -CH₂O-,
Y¹⁻⁴ each, independently of one another, denote H or F, and
r denotes 0 or 1.

2. Liquid-crystalline medium according to Claim 1, **characterised in that** it comprises one, two or more compounds of the formulae IA-1 to IA-30: 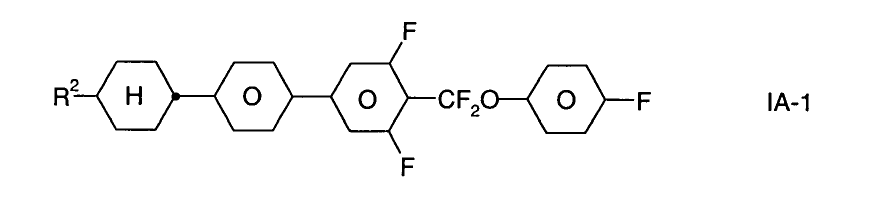 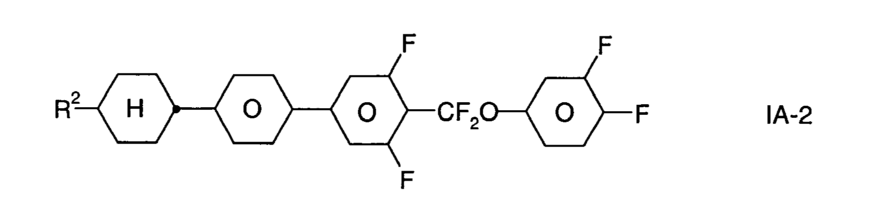 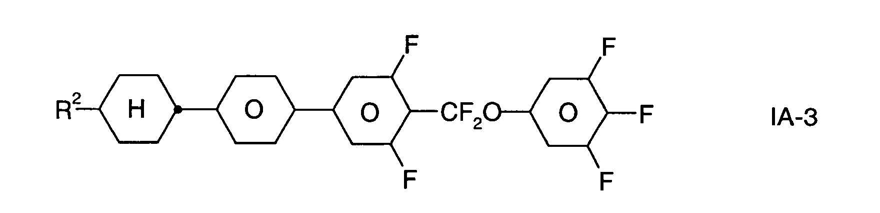 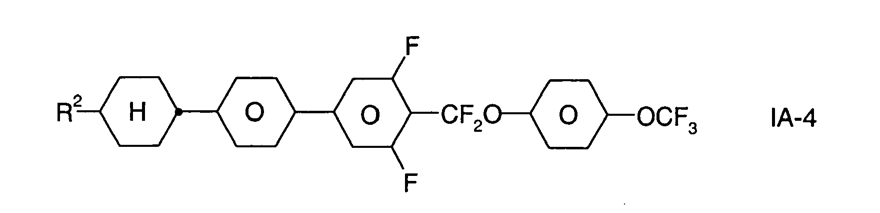 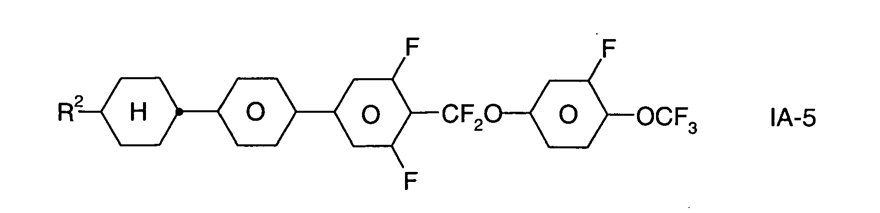 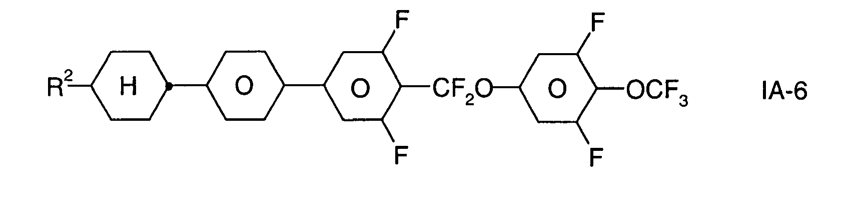 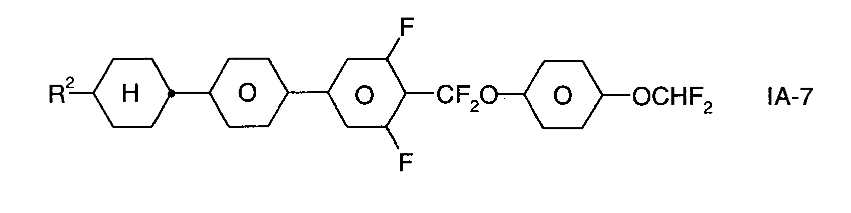 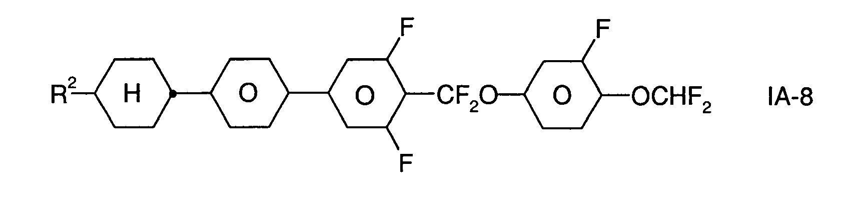 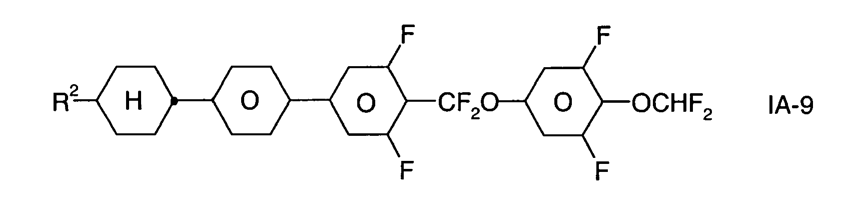 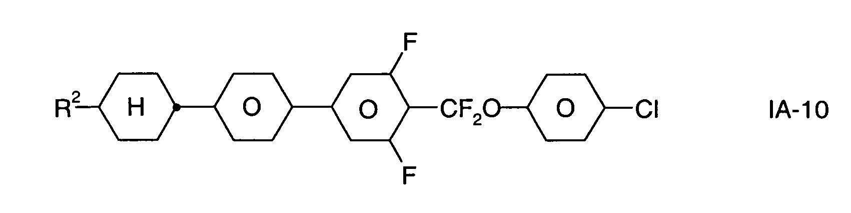 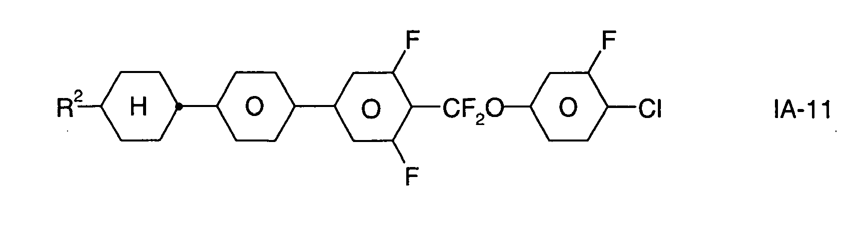 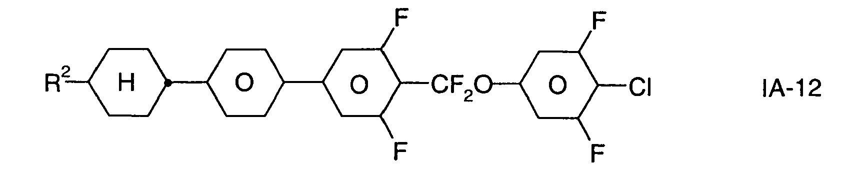 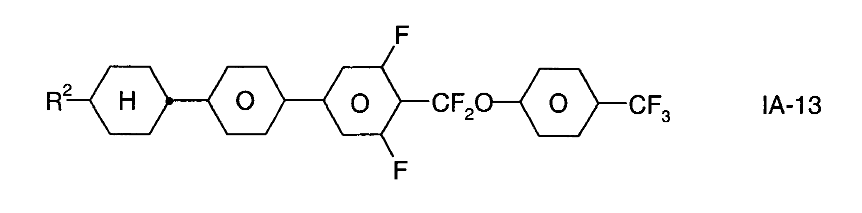 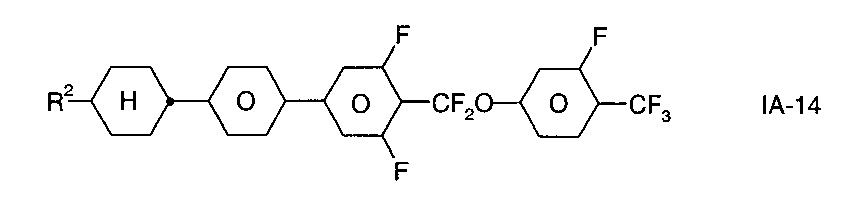 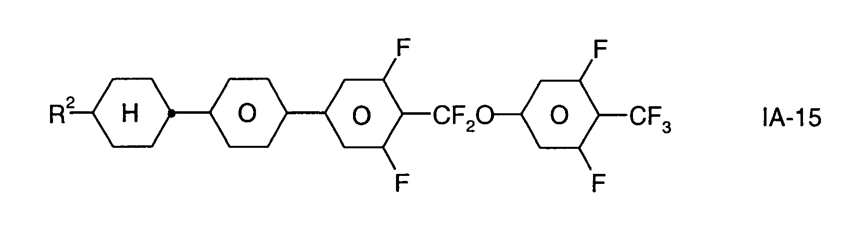 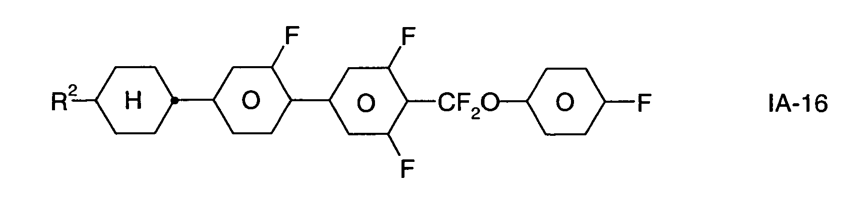 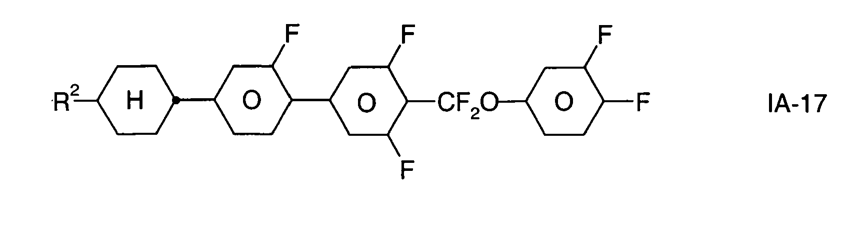 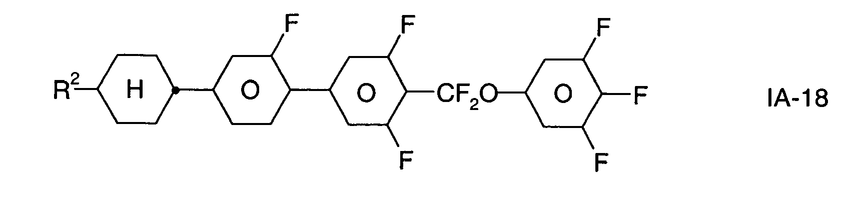 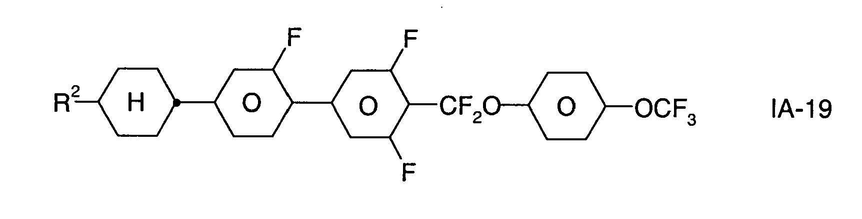 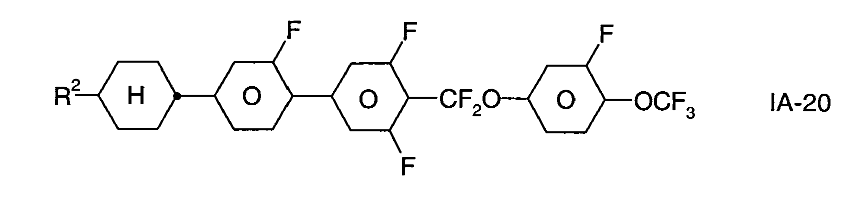 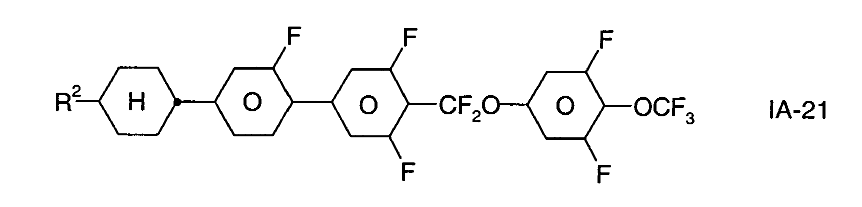 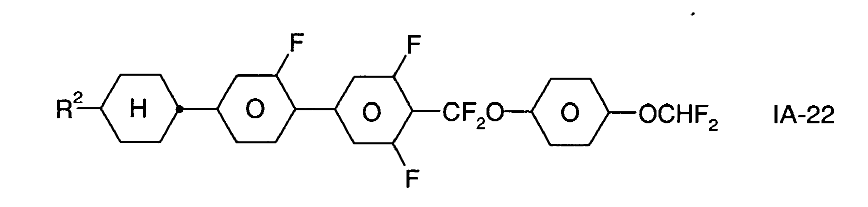 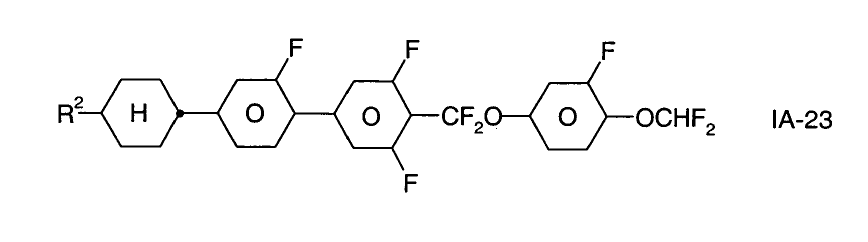 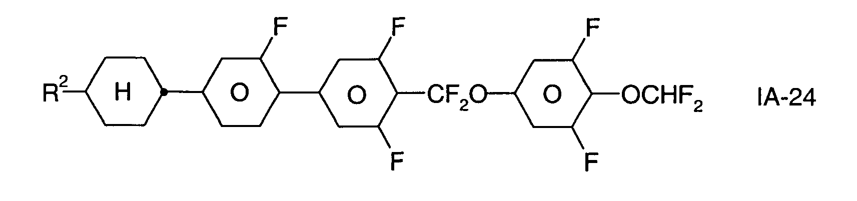 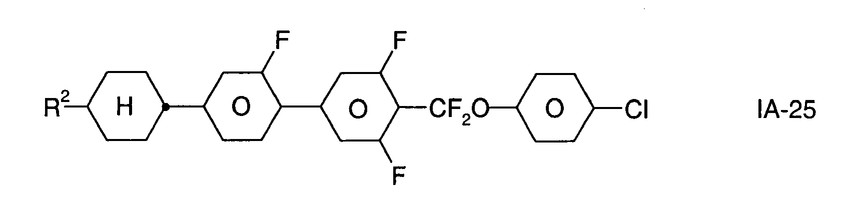 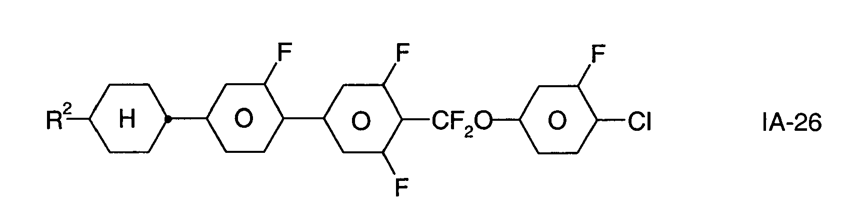 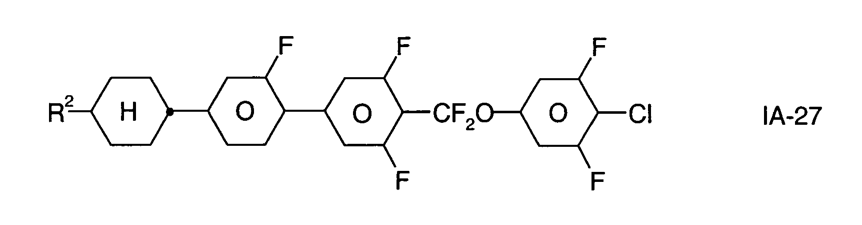 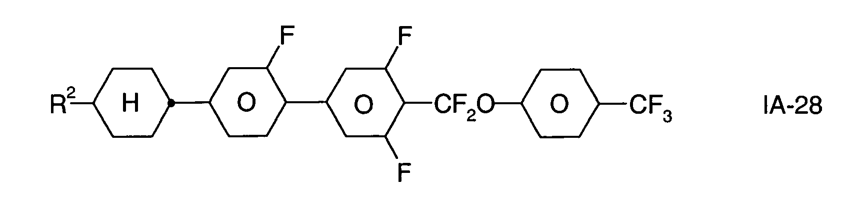 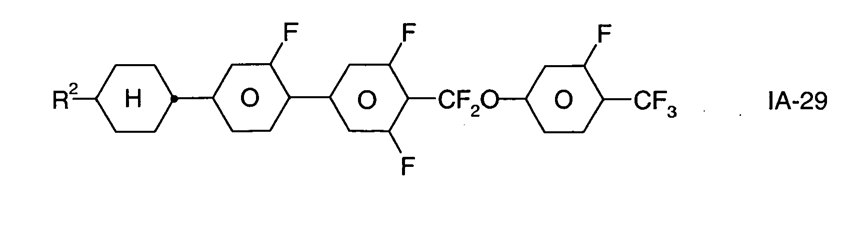 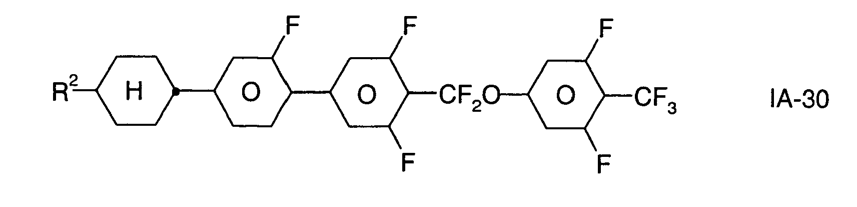 in which R² has the meanings indicated in Claim 1.

3. Liquid-crystalline medium according to Claim 1 or 2, **characterised in that** it comprises one or more compounds of the formulae I-1 to I-5: 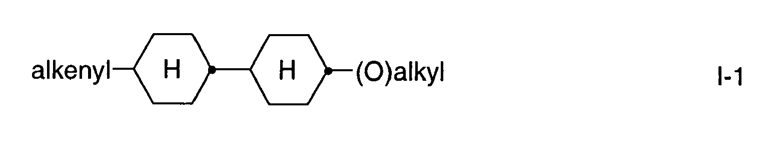 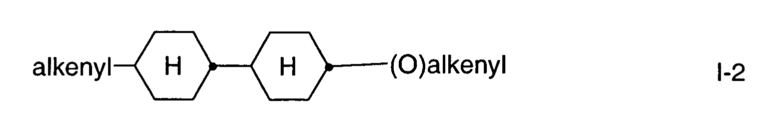 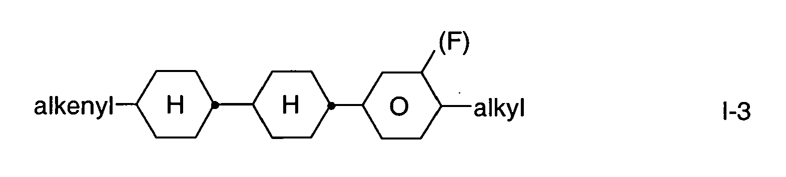 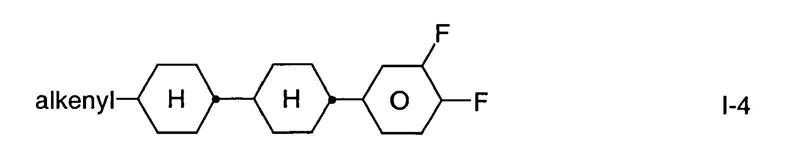 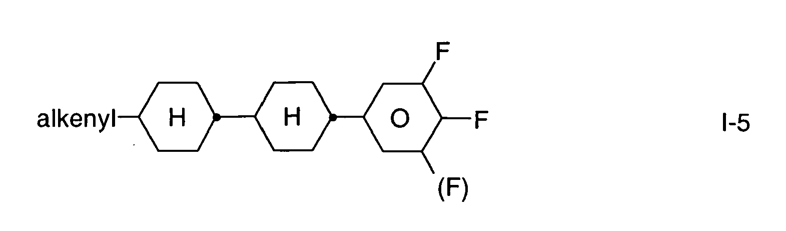 in which alkenyl denotes an alkenyl radical having 2 to 8 C atoms and alkyl denotes a straight-chain alkyl radical having 1-15 C atoms.

4. Liquid-crystalline medium according to Claim 1, **characterised in that** the proportion of compounds of the formulae IA and I to VI together in the mixture as a whole is at least 50% by weight.

5. Liquid-crystalline medium according to one of Claims 1 to 4, **characterised in that** it additionally comprises one or more compounds of the formulae Ea to Ef: 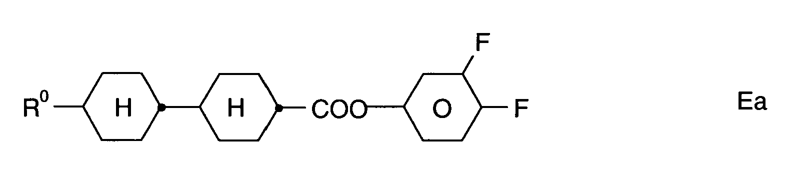 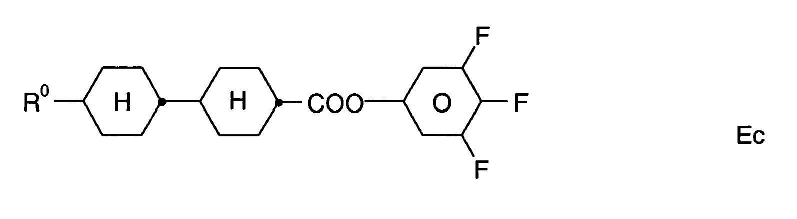 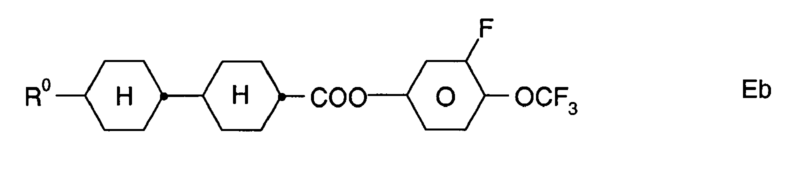 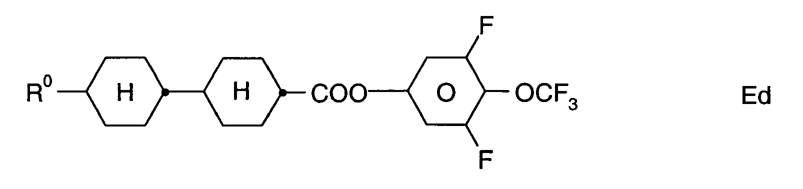 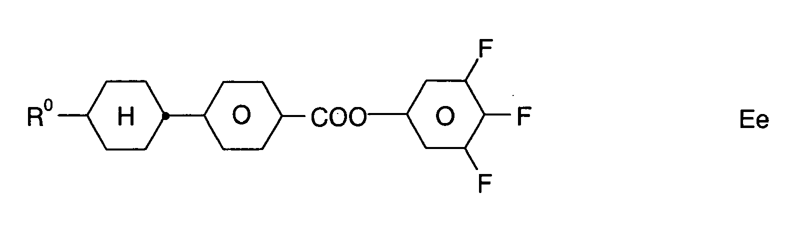 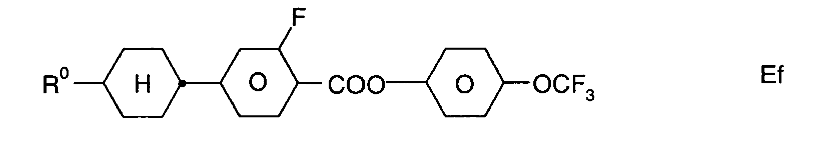 in which R⁰ has the meaning indicated in Claim 1.

6. Liquid-crystalline medium according to one of Claims 1 to 5, **characterised in that** it comprises one or more compounds of the formulae IIa to IIg: 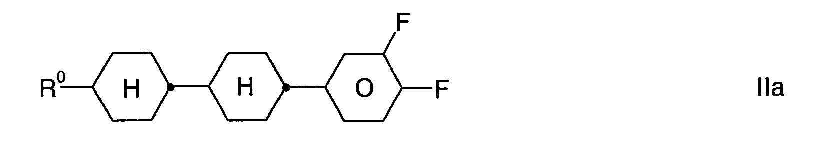 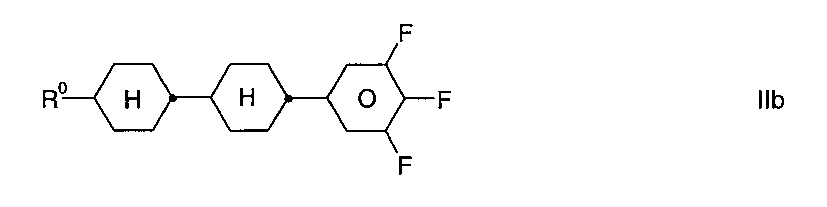 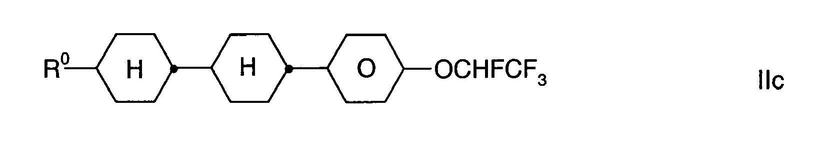 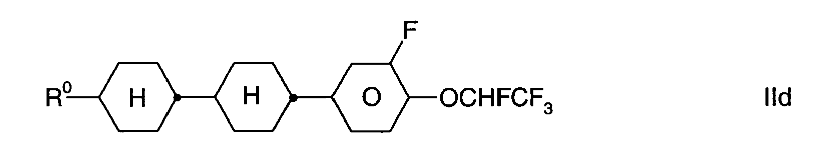 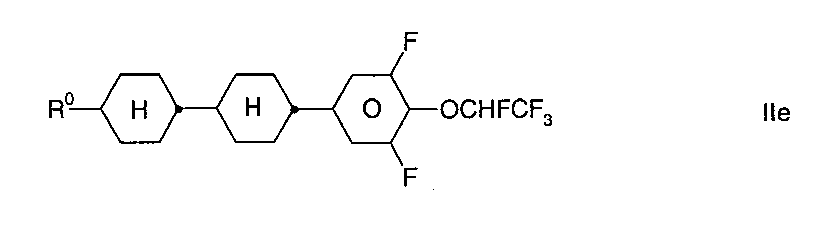 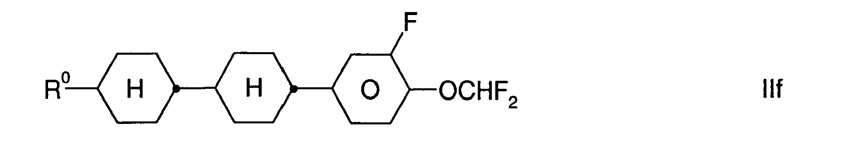 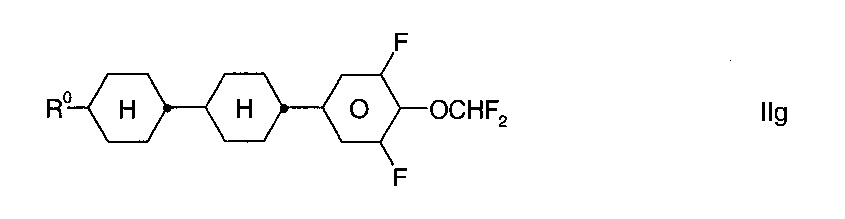 in which R⁰ has the meaning indicated in Claim 1.

7. Liquid-crystalline medium according to one of Claims 1 to 6, **characterised in that** it additionally comprises one or more compounds of the formulae RI to RVII: 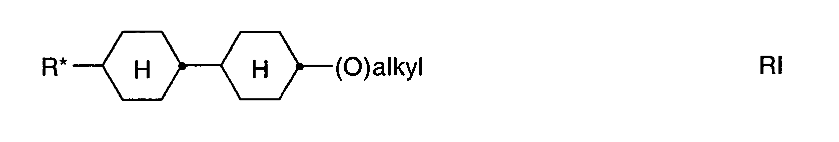 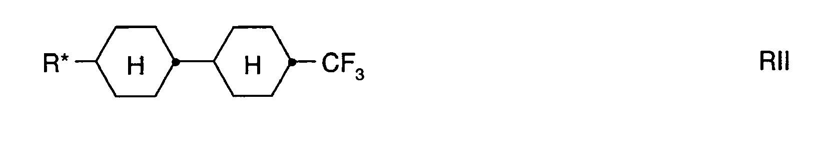 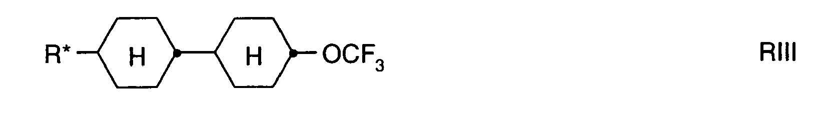 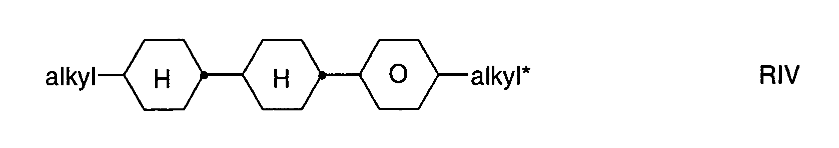 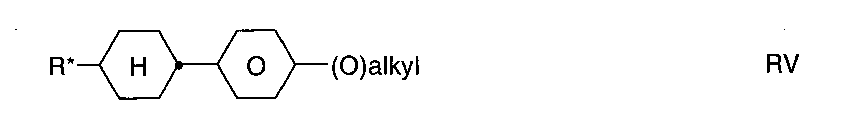 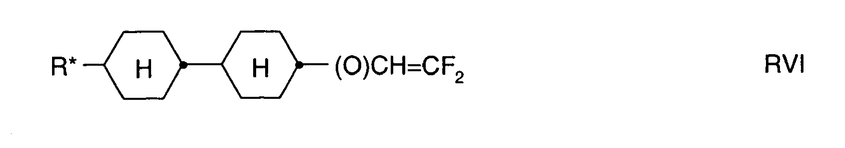 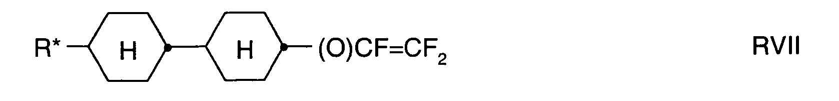 in which
R* denotes n-alkyl, alkoxy, oxaalkyl, fluoroalkyl or alkenyloxy, each having up to 9 C atoms, and
alkyl or alkyl* in each case, independently of one another, denotes a straight-chain or branched alkyl radical having 1-9 C atoms.

8. Liquid-crystalline medium according to one of Claims 1 to 7, **characterised in that** the proportion of compounds of the formula IA in the mixture as a whole is 5 to 40% by weight.

9. Use of the liquid-crystalline medium according to Claim 1 for electro-optical purposes.

10. Electro-optical liquid-crystal display containing a liquid-crystalline medium according to Claim 1.

## Revendications

1. Milieu cristallin liquide basé sur un mélange de composés polaires d'anisotropie diélectrique positive, **caractérisé en ce qu'**il comprend un ou plusieurs composés de la formule I, 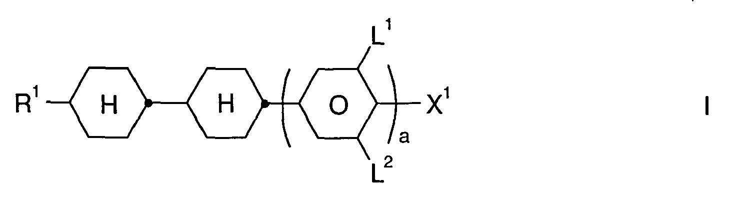 un ou plusieurs composés de la formule IA, 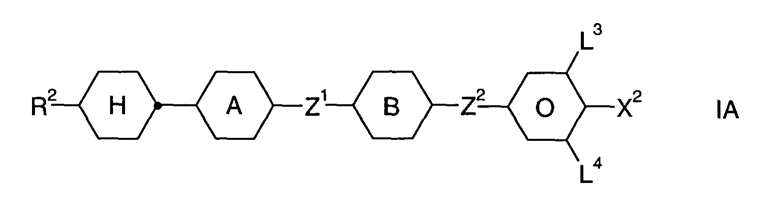 et
additionnellement un ou plusieurs composés choisis parmi le groupe constitué des formules générales II à VI: 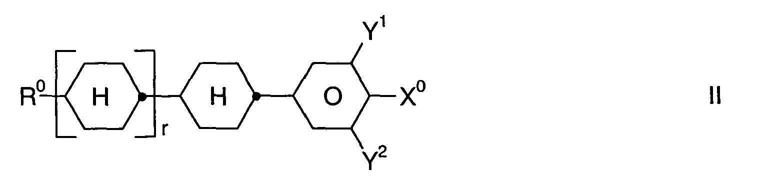 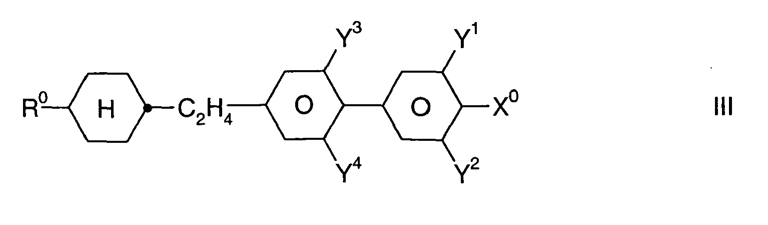 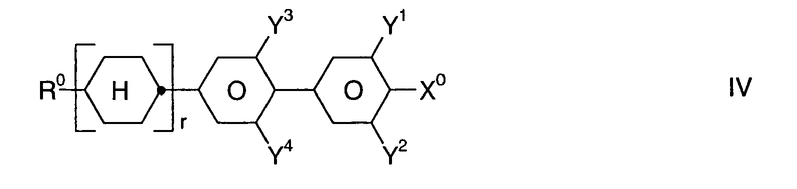 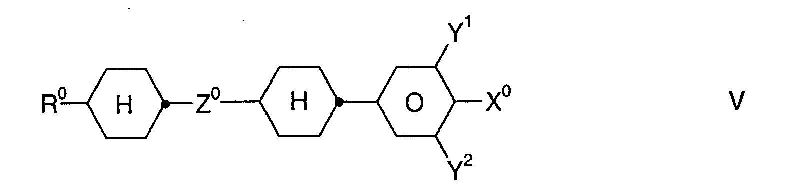 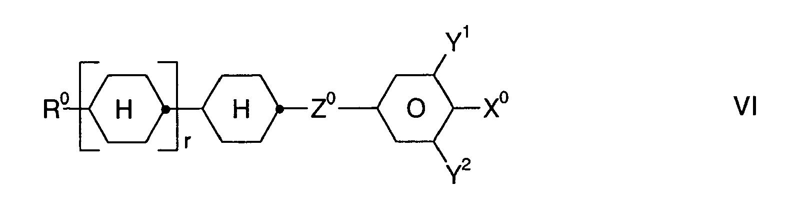 dans lesquelles le composé de la formule II n'est pas identique au composé de la formule I,
dans lesquelles la proportion des composés de la formule I dans le milieu est d'au moins 22% en poids et
dans lesquelles la proportion des composés des formules II à VI dans le mélange complet est de 30 à 80% en poids,
dans lesquelles les radicaux individuels ont les significations suivantes:
R¹ représente un radical alkényle ayant 2 à 8 atomes de C,
R² représente H, un radical alkyle ayant 1 à 15 atomes de C qui est halogéné, substitué par CN ou CF₃ ou non substitué, où, en addition, un ou plusieurs groupes CH₂ dans ces radicaux peuvent être remplacés, indépendamment les uns des autres, par -C≡C-, -CO-, -CH=CH-, -O-, 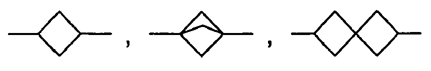 de telle sorte que des atomes de O ne soient pas liés directement l'un à l'autre,
X¹ représente un radical alkyle, un radical alkényle, un radical alcoxy ou un radical alkényloxy, chacun ayant jusqu'à 6 atomes de C, dans le cas où a = 1 aussi F, Cl, CN, SF₅, SCN, NCS, OCN,
X² représente F, Cl, CN, SF₅, SCN, NCS, OCN, un radical alkyle halogéné, un radical alkényle halogéné, un radical alcoxy halogéné ou un radical alkényloxy halogéné, chacun ayant jusqu'à 6 atomes de C,
Z¹ et Z² chacun, indépendamment l'un de l'autre, représentent -CF₂O-, -OCF₂- ou une liaison simple, où Z¹ ≠ Z²,
a représente 0 ou 1, 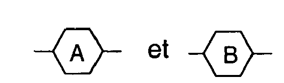
chacun, indépendamment l'un de l'autre, représentent 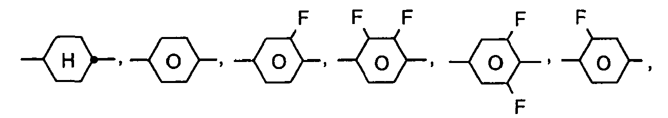 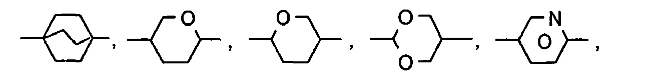 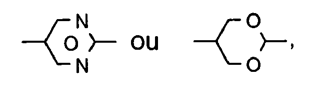
L¹⁻⁴ chacun, indépendamment les uns des autres, représentent H ou F,
R⁰ représente H, n-alkyle, alcoxy, oxaalkyle, fluoroalkyle, alkényloxy ou alkényle, chacun ayant jusqu'à 9 atomes de C,
X⁰ représente F, Cl, alkyle, alkényle, alkényloxy ou alcoxy halogéné ayant jusqu'à 6 atomes de C,
Z⁰ représente -C₂F₄-, -CF=CF-, -CH=CF-, -CF=CH-, -CH=CH-, -O(CH₂)₃-, -(CH₂)₃O-, -C₂H₄-, -(CH₂)₄-, -CF₂O-, -OCF₂-, -OCH₂- ou -CH₂O-,
Y¹⁻⁴ chacun, indépendamment les uns des autres, représentent H ou F, et
r représente 0 ou 1.

2. Milieu cristallin liquide selon la revendication 1, **caractérisé en ce qu'**il comprend un, deux ou plus de deux composés des formules IA-1 à IA-30: 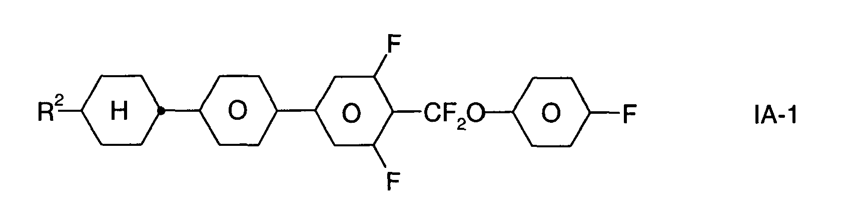 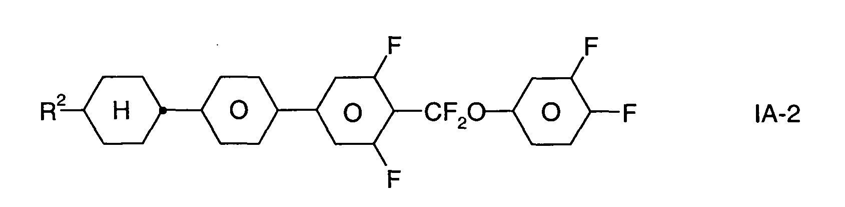 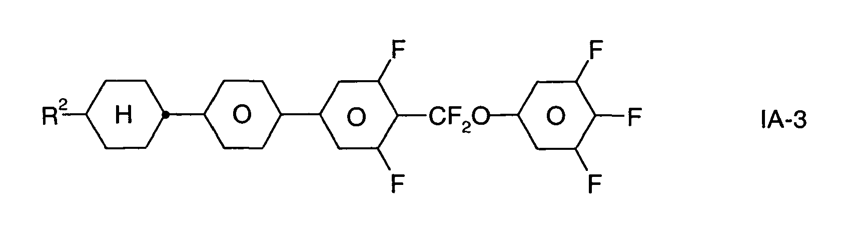 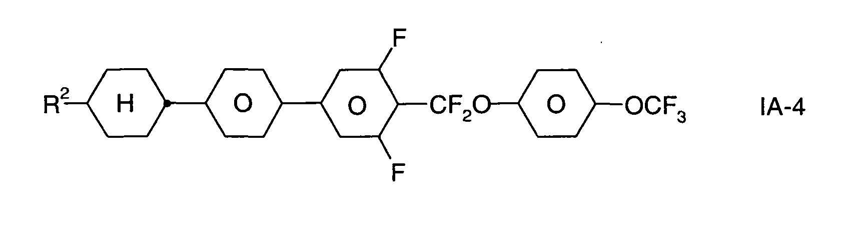 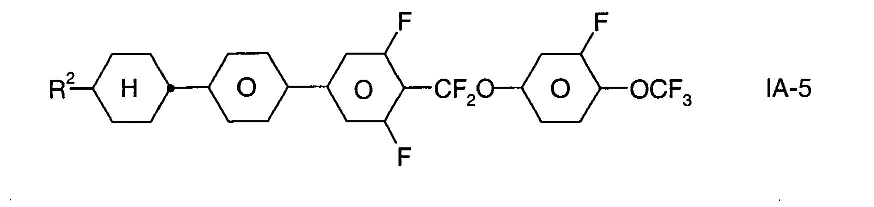 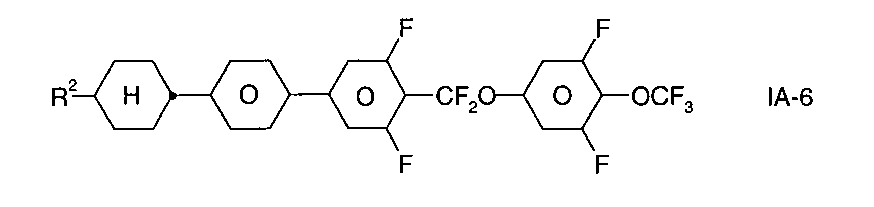 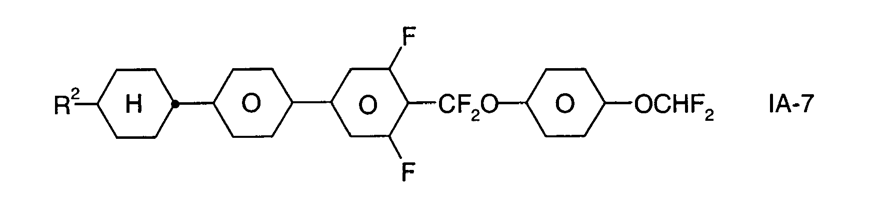 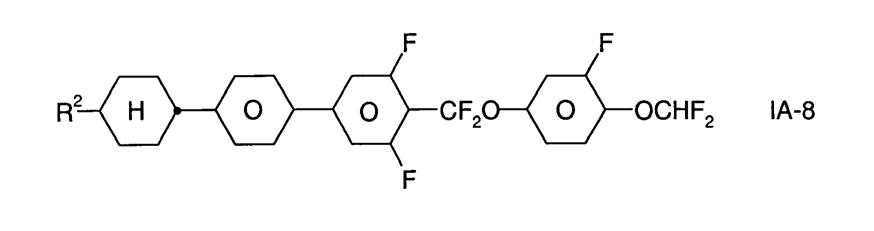 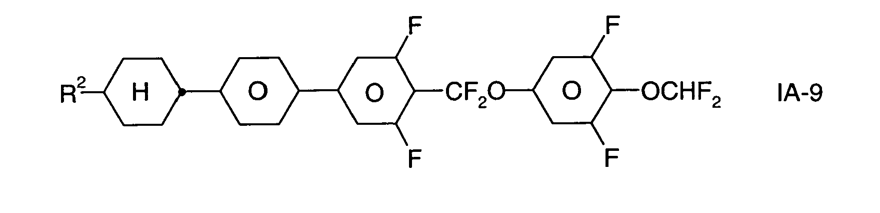 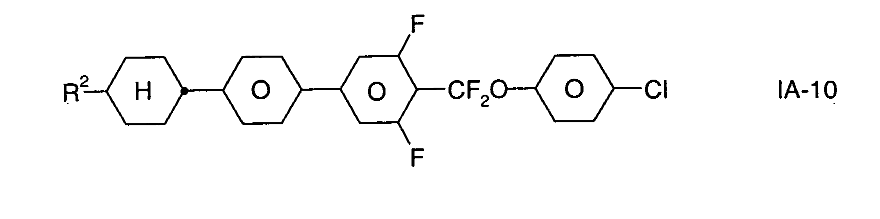 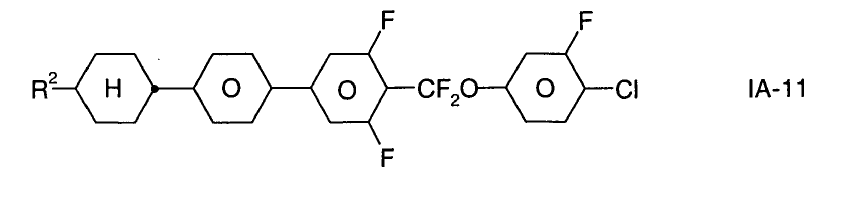 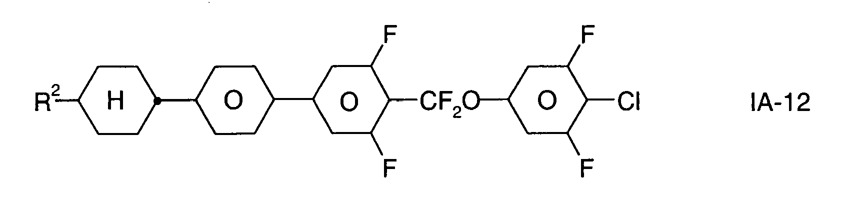 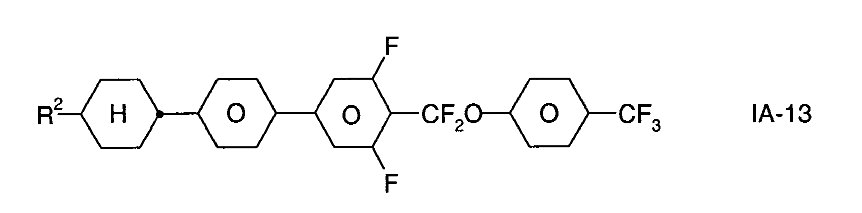 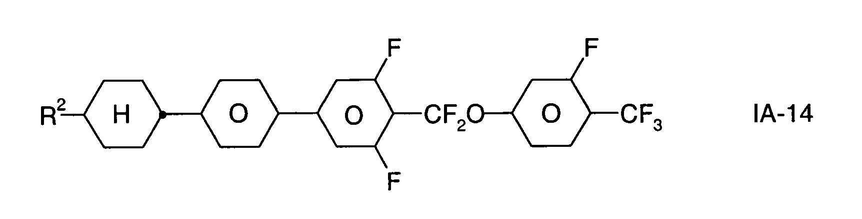 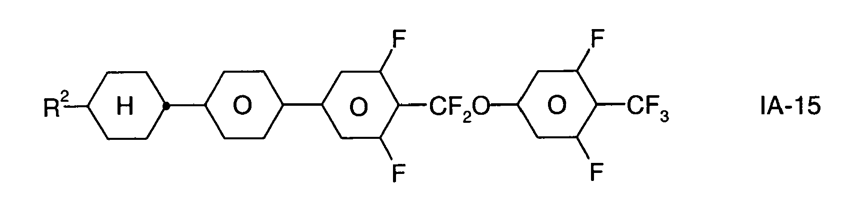 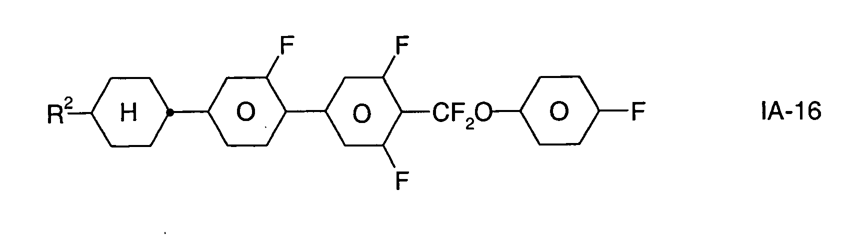 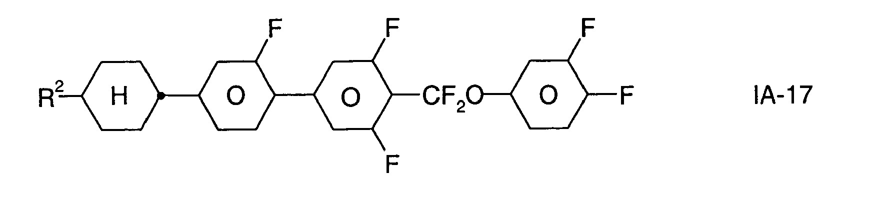 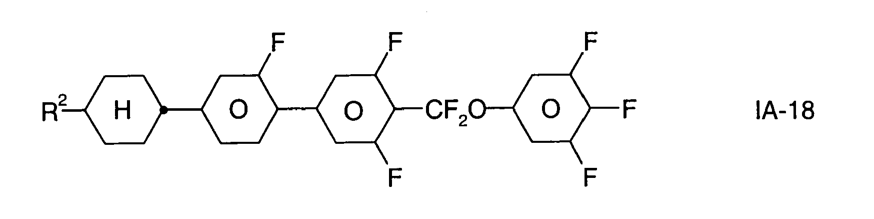 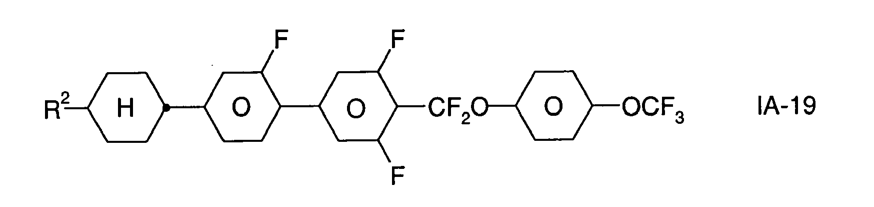 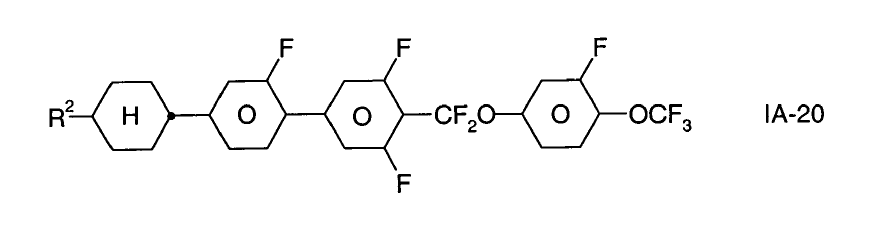 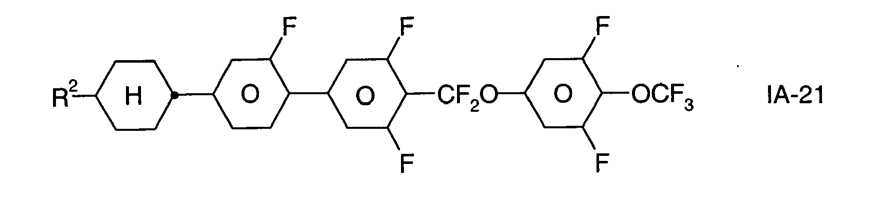 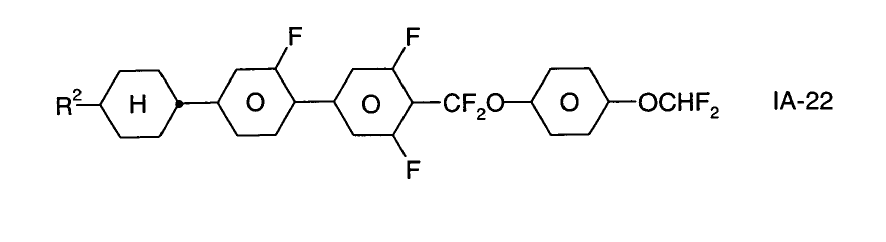 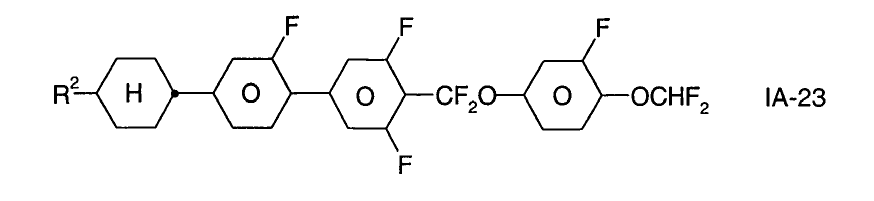 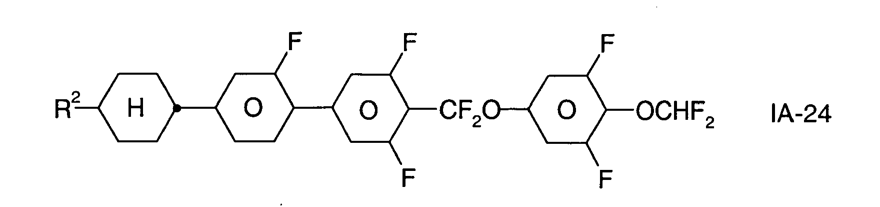 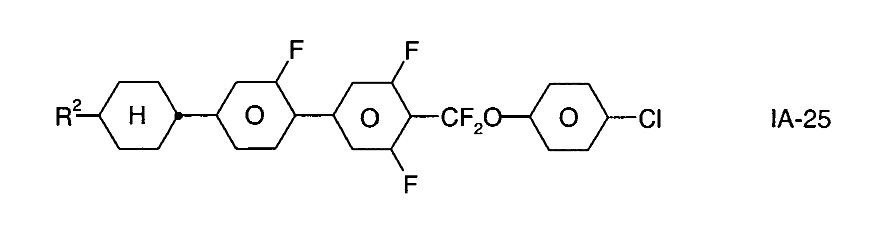 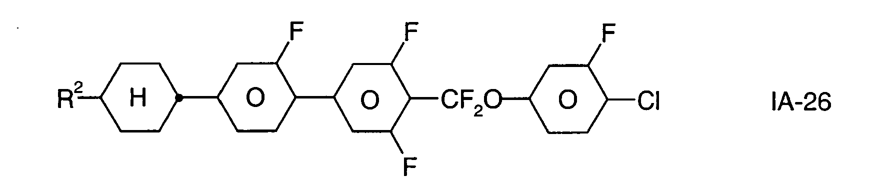 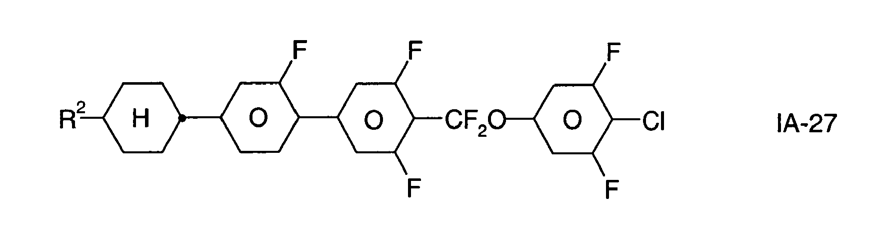 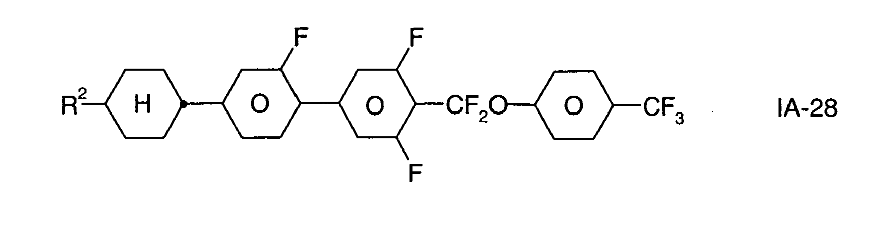 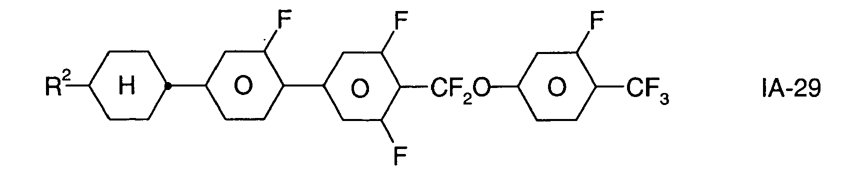 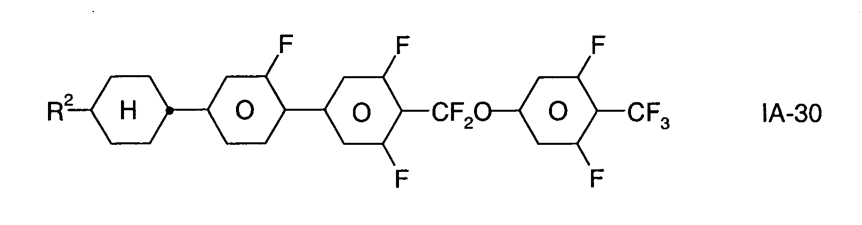 dans lesquelles R² a les significations indiquées dans la revendication 1.

3. Milieu cristallin liquide selon la revendication 1 ou 2, **caractérisé en ce qu'**il comprend un ou plusieurs composés des formules I-1 à I-5: 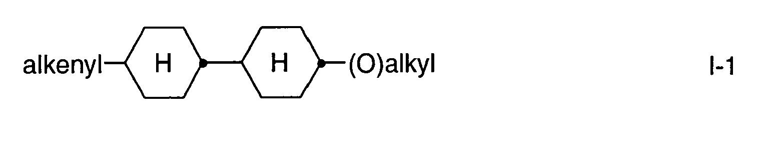 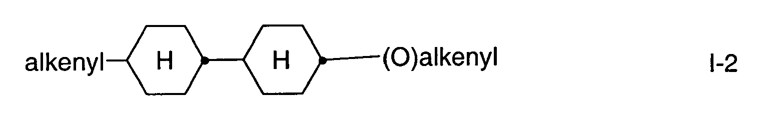 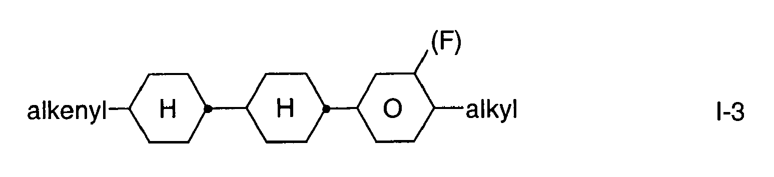 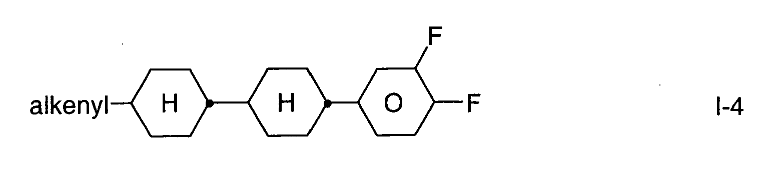 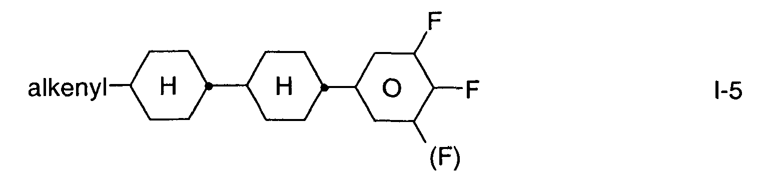 dans lesquelles alkenyl représente un radical alkényle ayant 2 à 8 atomes de C et alkyl représente un radical alkyle en chaîne droite ayant 1-15 atomes de C.

4. Milieu cristallin liquide selon la revendication 1, **caractérisé en ce que** la proportion de composés des formules IA et I à VI ensemble dans le mélange complet est d'au moins 50% en poids.

5. Milieu cristallin liquide selon l'une des revendications 1 à 4, **caractérisé en ce qu'**il comprend additionnellement un ou plusieurs composés des formules Ea à Ef: 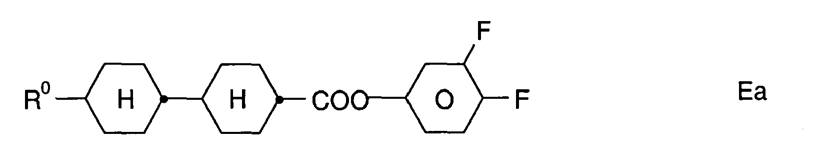 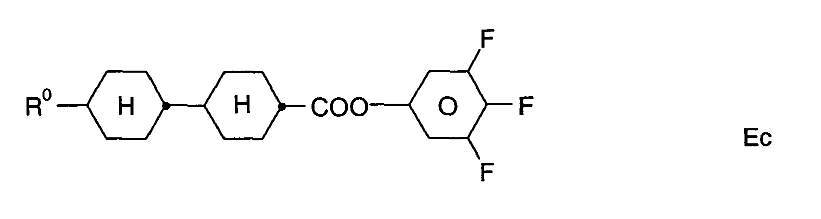 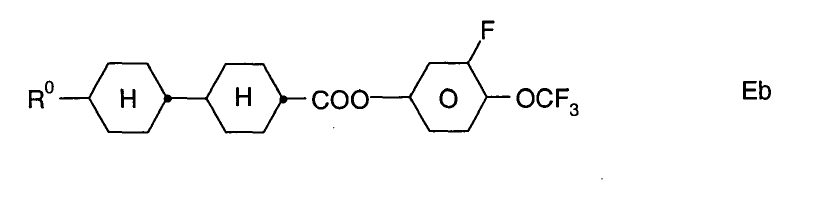 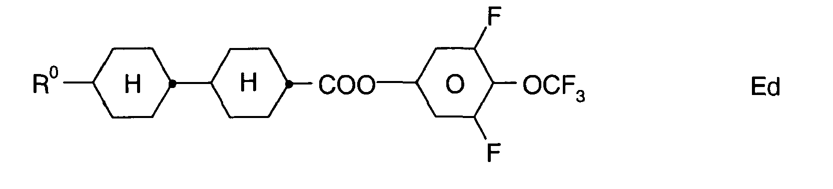 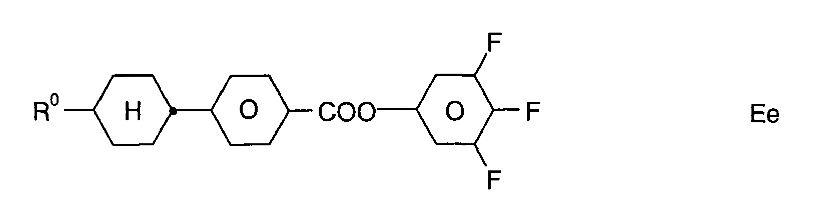 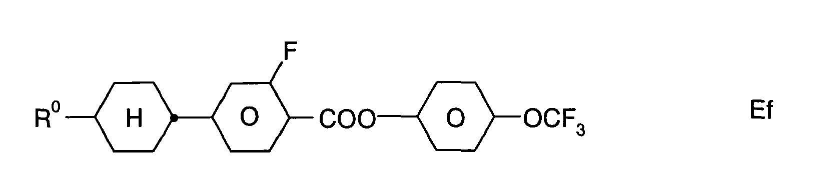 dans lesquelles R⁰ a la signification indiquée dans la revendication 1.

6. Milieu cristallin liquide selon l'une des revendications 1 à 5, **caractérisé en ce qu'**il comprend un ou plusieurs composés des formules IIa à IIg: 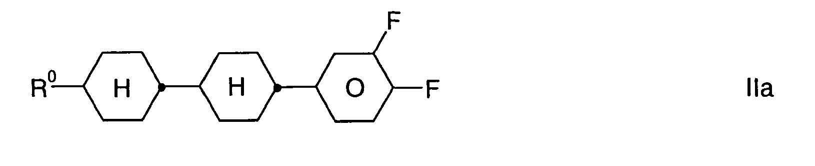 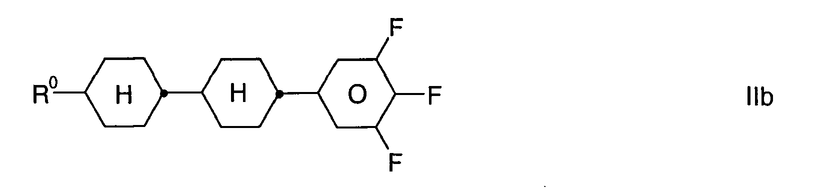 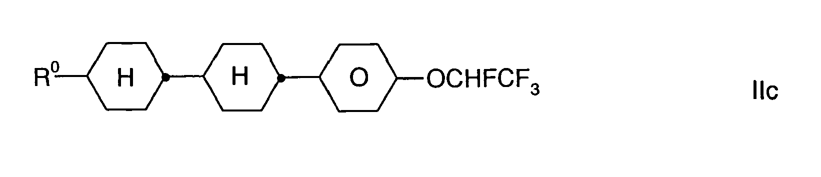 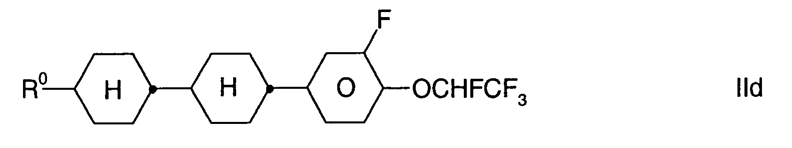 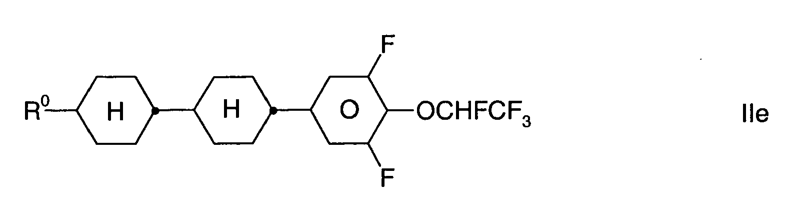 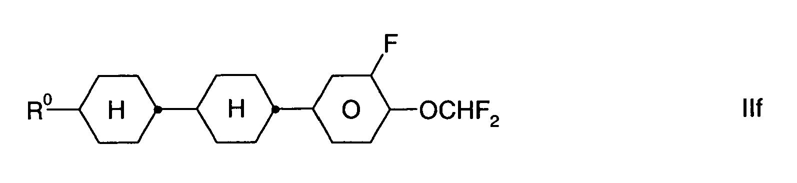 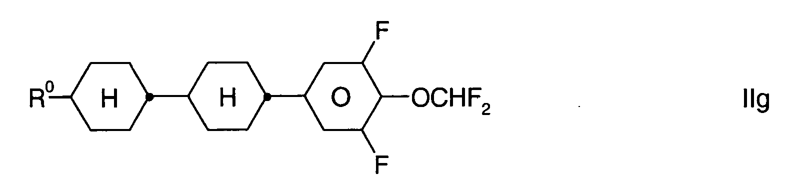 dans lesquelles R⁰ a la signification indiquée dans la revendication 1.

7. Milieu cristallin liquide selon l'une des revendications 1 à 6, **caractérisé en ce qu'**il comprend additionnellement un ou plusieurs composés des formules RI à RVII: 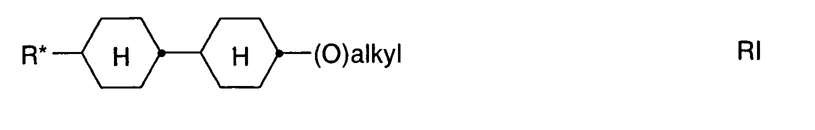 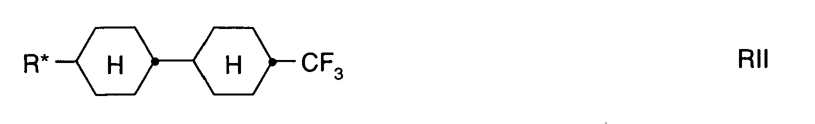 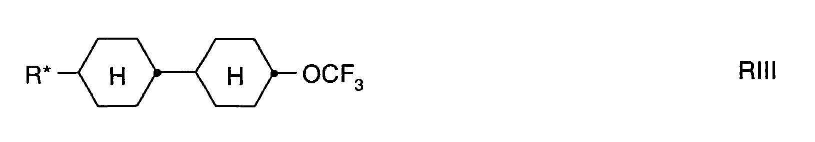 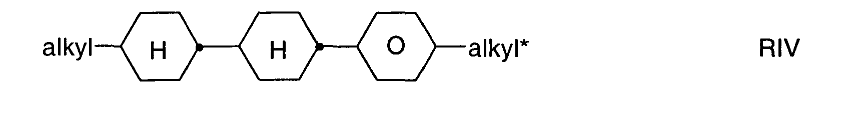 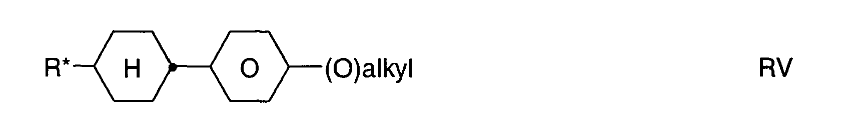 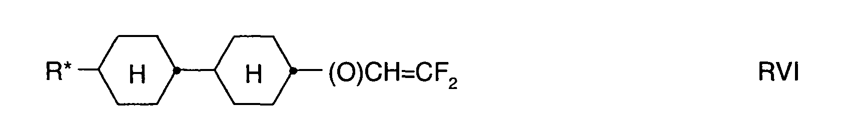 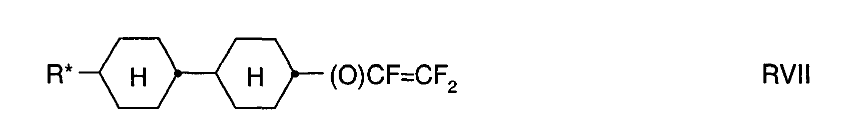 dans lesquelles
R* représente n-alkyle, alcoxy, oxaalkyle, fluoroalkyle ou alkényloxy, chacun ayant jusqu'à 9 atomes de C, et
alkyl ou alkyl* dans chaque cas, indépendamment l'un de l'autre, représente un radical alkyle en chaîne droite ou ramifié ayant 1-9 atomes de C.

8. Milieu cristallin liquide selon l'une des revendications 1 à 7, **caractérisé en ce que** la proportion de composés de la formule IA dans le mélange complet est de 5 à 40% en poids.

9. Utilisation du milieu cristallin liquide selon la revendication 1 pour des buts électro-optiques.

10. Affichage à cristaux liquides électro-optique contenant un milieu cristallin liquide selon la revendication 1.
